# EUROPEAN PATENT APPLICATION

(11) **EP 2 418 721 A1**
(43) Date of publication of application: **15.02.2012**
(21) Application number: 10761732.6
(22) Date of filing: 08.04.2010
(51) Int. Cl.: H01M 8/04, C01B 3/38, H01M 8/06, H01M 8/12

(54) **METHOD OF STOPPING INDIRECT INTERNAL REFORMING SOLID OXIDE FUEL CELL**

(30) Priority: 08.04.2009 JP 2009093781; 05.06.2009 JP 2009136290; 09.06.2009 JP 2009138191; 11.06.2009 JP 2009140144; 16.06.2009 JP 2009143402
(71) Applicant: JX Nippon Oil & Energy Corporation, Chiyoda-ku Tokyo 100-8162 (JP)
(72) Inventor: HATADA, Susumu, Yokohama-shi Kanagawa 231-0815 (JP)
(74) Representative: Hamer, Christopher K.
(86) International application number: PCT/JP2010/056360
(87) International publication number: WO 2010/117033

(57) **Abstract**

Provided is a method for shutting down an indirect internal reforming SOFC, in which reliable reforming and the prevention of the oxidative degradation of the anode are possible. A¹) A reforming catalyst layer temperature T is measured; C¹) if T ≥ TrE, and there exists, among fuel flow rates Fk(j), a flow rate Fk(j) at which Tr(j) is equal to or less than T and which is equal to or more than Fk(1) and is less than FkE, then C¹1) the flow rate of the fuel supplied to the reformer is set to Fk(J), where j that gives the minimum Fk(j) among the Fk(j) is represented as J; C¹2) T is measured and compared with TrE; C¹3) if T ≤ TrE, then the flow rate of the fuel supplied to the reformer is set to FkE and the method goes to D¹; C¹4) if T > TrE, then T is compared with Tr(J); C¹5) if T > Tr(J), then the method returns to C¹2; C¹6) if T ≤ Tr(J), then the flow rate of the fuel supplied to the reformer is increased to Fk(J+1) and J is increased by 1; C¹7) after C¹6, if J ≠ M, then the method returns to C¹2, and if J = M, then the method goes to D¹; D¹) the method waits for the anode temperature to fall below an oxidative degradation temperature. TrE and the like are defined in the specification.

## Description

### Technical Field

The present invention relates to a method for shutting down an indirect internal reforming solid oxide fuel cell having a reformer in the vicinity of the fuel cell.

### Background Art

A solid oxide fuel cell (hereinafter sometimes referred to as SOFC) system usually includes a reformer for reforming a hydrocarbon-based fuel, such as kerosene and city gas, to generate a reformed gas as a hydrogen-containing gas, and an SOFC for electrochemically reacting the reformed gas and air for electric power generation.

The SOFC is usually operated at a high temperature of 550 to 1000°C.

Various reactions, such as steam reforming (SR), partial oxidation reforming (POX), and autothermal reforming (ATR), are used for reforming, and heating to a temperature at which catalytic activity is exhibited is necessary for using a reforming catalyst.

Steam reforming is a very large endothermic reaction. Also, the reaction temperature of the steam reforming is 550 to 750°C, which is relatively high, and the steam reforming requires a high temperature heat source. Therefore, an indirect internal reforming SOFC is known in which a reformer (internal reformer) is installed near an SOFC, and the reformer is heated using radiant heat from the SOFC and the combustion heat of the anode off-gas (gas discharged from the anode) of the SOFC as heat sources (Patent Literature 1).

Also, Patent Literature 2 discloses a method for shutting down the operation of a fuel cell, in which the stack temperature is decreased, while the fuel electrode layer side is maintained in a reducing condition, by supplying water, and hydrogen or a hydrocarbon-based fuel to the fuel cell, while decreasing their flow rates, in stopping electric power generation.

### Prior art literatures

### Patent Literatures

Patent Literature 1: JP2004-319420A
Patent Literature 2: JP2006-294508A

### Summary of Invention

### Problems to be Solved by the Invention

It is considered that when the method described in Patent Literature 2 is used, the anode can be maintained in a reducing atmosphere during the shutdown of the fuel cell, and the oxidative degradation of the anode can be prevented.

But, in the method described in Patent Literature 2, reliable reforming is not ensured when the SOFC anode is maintained in a reducing condition, using a hydrogen-containing gas obtained by reforming a hydrocarbon-based fuel.
In other words, an unreformed hydrocarbon-based fuel may be discharged from the reformer and flow into the anode.

Particularly, in a case where a heavy hydrocarbon, such as kerosene, is used, when the heavy hydrocarbon leaks from the reformer and flows into the SOFC, the performance of the SOFC may be degraded due to carbon deposition.

It is an object of the present invention to provide a method for shutting down an indirect internal reforming SOFC, in which it is possible to prevent the oxidative degradation of the anode by a reformed gas, while reliably reforming a hydrocarbon-based fuel.

### Means for Solving the Problems

A first embodiment of the present invention provides
a shutdown method for shutting down an indirect internal reforming solid oxide fuel cell including
a reformer having a reforming catalyst layer, for reforming a hydrocarbon-based fuel to produce a reformed gas,
a solid oxide fuel cell for generating electric power using the reformed gas, a combustion region for combusting an anode off-gas discharged from the solid oxide fuel cell, and
an enclosure for housing the reformer, the solid oxide fuel cell, and the combustion region,
wherein
a flow rate of the hydrocarbon-based fuel supplied to the reformer in a state in which the following conditions i to iv are all satisfied is represented as FkE, and a temperature condition of the reforming catalyst layer in the state is represented as TrE,
i) an anode temperature of the solid oxide fuel cell is steady,
ii) the anode temperature is less than an oxidative degradation temperature,
iii) in the reformer, the hydrocarbon-based fuel is reformed, and a reformed gas having a composition suitable to be supplied to an anode is produced, and iv) an amount of the reformed gas produced is equal to or more than a requisite minimum flow rate FrMin for preventing oxidative degradation of the anode when the anode temperature of the solid oxide fuel cell is a temperature that is equal to or more than the oxidative degradation temperature,
stepwise flow rates Fk(j) of the hydrocarbon-based fuel are predetermined (wherein j is an integer of 1 or more and M or less, where M is an integer of 2 or more), where Fk(j) increases with an increase in j, Fk(M) which is the largest among Fk(j) is equal to FkE, and Fk(j) is equal to or more than a minimum value of hydrocarbon-based fuel flow rates at which the reformed gas at a flow rate that is equal to or more than FrMin can be obtained by a reforming method in a reaction temperature range of this reforming method, a type of this reforming method being a type of a reforming method which is performed after start of the shutdown method,
a flow rate of the hydrocarbon-based fuel supplied to the reformer at a point of time of the start of the shutdown method is represented as Fk0,
one or more temperature conditions Tr(j) of the reforming catalyst layer are found beforehand (wherein j is an integer of 1 or more and M-1 or less), in the temperature condition Tr(j) a flow rate of the reformed gas obtained when the hydrocarbon-based fuel at the flow rate Fk(j) is reformed in the reforming catalyst layer by a reforming method being FrMin, a type of this reforming method being a type of a reforming method which is performed after the start of the shutdown method,
when the anode temperature falls below the oxidative degradation temperature, supply of the hydrocarbon-based fuel to the reformer is stopped to complete the shutdown method, and
while the anode temperature does not fall below the oxidative degradation temperature, the shutdown method includes the following steps:
A¹) measuring a reforming catalyst layer temperature T and comparing this measured temperature T with TrE;
B¹) when T < TrE in step A¹, performing the following steps B¹1 to B¹4 in order:
   B¹1) increasing a temperature of the reforming catalyst layer,
   B¹2) measuring the reforming catalyst layer temperature and comparing this measured temperature T with TrE,
   B¹3) when T < TrE in step B¹2, returning to step B¹1, and
   B¹4) when T ≥ TrE in step B¹2, adjusting the flow rate of the hydrocarbon-based fuel supplied to the reformer from Fk0 to FkE and moving on to step D¹;
C¹) when T ≥ TrE in step A¹,
   if there does not exist, among the predetermined hydrocarbon-based fuel flow rates Fk(j), a flow rate Fk(j) at which a corresponding temperature condition Tr(j) is equal to or less than the reforming catalyst layer temperature T measured in step A¹ and which is equal to or more than Fk(1) and is smaller than FkE, then adjusting the flow rate of the hydrocarbon-based fuel supplied to the reformer from Fk0 to FkE and moving on to step D¹, and
   if there exists, among the predetermined hydrocarbon-based fuel flow rates Fk(j), one or more flow rates Fk(j) at which corresponding temperature conditions Tr(j) are equal to or less than the reforming catalyst layer temperature T measured in step A¹ and which are equal to or more than Fk(1) and are smaller than FkE, then performing the following steps C¹1 to C¹7 in order:
   C¹1) adjusting the flow rate of the hydrocarbon-based fuel supplied to the reformer from Fk0 to Fk(J),
      where J represents j that gives the smallest Fk(j) among one or more flow rates Fk(j) at which corresponding temperature conditions Tr(j) are equal to or less than the reforming catalyst layer temperature T measured in step A¹ and which are equal to or more than Fk(1) and are smaller than FkE,
   C¹2) measuring the reforming catalyst layer temperature and comparing this measured temperature T with TrE,
   C¹3) when T ≤ TrE in step C¹2, adjusting the flow rate of the hydrocarbon-based fuel supplied to the reformer to FkE and moving on to step D¹,
   C¹4) when T > TrE in step C¹2, comparing this T with Tr(J),
   C¹5) when T > Tr(J) in step C¹4, returning to step C¹2,
   C¹6) when T ≤ Tr(J) in step C¹4, increasing the flow rate of the hydrocarbon-based fuel supplied to the reformer from Fk(J) to Fk(J+1) and increasing J by 1, and
   C¹7) after step C¹6, comparing J with M, and if J ≠ M, then returning to step C¹2, and if J = M, then moving on to step D¹; and
D¹) waiting for the anode temperature to fall below the oxidative degradation temperature.

The hydrocarbon-based fuel may include a hydrocarbon-based fuel having a carbon number of two or more.

It is preferred that the concentration of a compound having a carbon number of two or more in the reformed gas be 50 ppb or less on a mass basis.

A second embodiment of the present invention provides
a shutdown method for shutting down an indirect internal reforming solid oxide fuel cell including
a reformer having a reforming catalyst layer, for reforming a hydrocarbon-based fuel to produce a reformed gas,
a solid oxide fuel cell for generating electric power using the reformed gas, a combustion region for combusting an anode off-gas discharged from the solid oxide fuel cell, and
an enclosure for housing the reformer, the solid oxide fuel cell, and the combustion region,
wherein
a flow rate of the hydrocarbon-based fuel supplied to the reformer in a state in which the following conditions i to iv are all satisfied is represented as FkE,
i) an anode temperature of the solid oxide fuel cell is steady,
ii) the anode temperature is less than an oxidative degradation temperature,
iii) in the reformer, the hydrocarbon-based fuel is reformed, and a reformed gas having a composition suitable to be supplied to an anode is produced, and
iv) an amount of the reformed gas produced is equal to or more than a requisite minimum flow rate FrMin for preventing oxidative degradation of the anode when the anode temperature of the solid oxide fuel cell is a temperature that is equal to or more than the oxidative degradation temperature,
a flow rate of the hydrocarbon-based fuel supplied to the reformer at a point of time of start of the shutdown method is represented as Fk0,
a calculated value of a flow rate of the hydrocarbon-based fuel capable of being reformed at a measured temperature of the reforming catalyst layer by a reforming method is represented as FkCALC, a type of this reforming method being a type of a reforming method which is performed after the start of the shutdown method,
stepwise flow rates Fk(j) of the hydrocarbon-based fuel are predetermined (wherein j is an integer of 1 or more and M or less, where M is an integer of 2 or more), where Fk(j) increases with an increase in j, Fk(M) which is the largest among Fk(j) is equal to FkE, and Fk(j) is equal to or more than a minimum value of hydrocarbon-based fuel flow rates at which the reformed gas at a flow rate that is equal to or more than FrMin can be obtained by a reforming method in a reaction temperature range of this reforming method, a type of this reforming method being a type of a reforming method which is performed after the start of the shutdown method,
one or more temperature conditions Tr(j) of the reforming catalyst layer are found beforehand (wherein j is an integer of 1 or more and M-1 or less), in the temperature condition Tr(j) a flow rate of the reformed gas obtained when the hydrocarbon-based fuel at the flow rate Fk(j) is reformed in the reforming catalyst layer by a reforming method being FrMin, a type of this reforming method being a type of a reforming method which is performed after the start of the shutdown method,
when the anode temperature falls below the oxidative degradation temperature, supply of the hydrocarbon-based fuel to the reformer is stopped to complete the shutdown method, and
while the anode temperature does not fall below the oxidative degradation temperature, the shutdown method includes the following steps: A²) measuring a reforming catalyst layer temperature T, calculating FkCALC using this measured temperature T, and comparing values of this FkCALC and FkE;
B²) when FkCALC < FkE in step A², performing the following steps B²1 to B²4 in order:
   B²1) increasing a temperature of the reforming catalyst layer,
   B²2) measuring the reforming catalyst layer temperature T, calculating FkCALC using this measured temperature T, and comparing values of this FkCALC and FkE,
   B²3) when FkCALC < FkE in step B²2, returning to step B²1, and
   B²4) when FkCALC ≥ FkE in step B²2, adjusting the flow rate of the hydrocarbon-based fuel supplied to the reformer from Fk0 to FkE and moving on to step D²;
C²) when FkCALC ≥ FkE in step A²,
   if there does not exist, among the predetermined hydrocarbon-based fuel flow rates Fk(j), a flow rate Fk(j) at which a corresponding temperature condition Tr(j) is equal to or less than the reforming catalyst layer temperature T measured in step A² and which is smaller than FkE, then adjusting the flow rate of the hydrocarbon-based fuel supplied to the reformer from Fk0 to FkE and moving on to step D², and
   if there exists, among the predetermined hydrocarbon-based fuel flow rates Fk(j), one or more flow rates Fk(j) at which corresponding temperature conditions Tr(j) are equal to or less than the reforming catalyst layer temperature T measured in step A² and which are smaller than FkE, then performing the following steps C²1 to C²7 in order:
   C²1) adjusting the flow rate of the hydrocarbon-based fuel supplied to the reformer from Fk0 to Fk(J),
      where J represents j that gives the smallest Fk(j) among one or more flow rates Fk(j) at which corresponding temperature conditions Tr(j) are equal to or less than the reforming catalyst layer temperature T measured in step A² and which are smaller than FkE,
   C²2) measuring the reforming catalyst layer temperature, calculating FkCALC using this measured temperature T, and comparing values of this FkCALC and FkE,
   C²3) when FkCALC ≤ FkE in step C²2, adjusting the flow rate of the hydrocarbon-based fuel supplied to the reformer to FkE and moving on to step D²,
   C²4) when FkCALC > FkE in step C²2, comparing the reforming catalyst layer temperature T measured in step C²2 with Tr(J),
   C²5) when T > Tr(J) in step C²4, returning to step C²2,
   C²6) when T ≤ Tr(J) in step C²4, increasing the flow rate of the hydrocarbon-based fuel supplied to the reformer from Fk(J) to Fk(J+1) and increasing J by 1, and
   C²7) after step C²6, comparing J with M, and if J ≠ M, then returning to step C²2, and if J = M, then moving on to step D²; and
D²) waiting for the anode temperature to fall below the oxidative degradation temperature.

The hydrocarbon-based fuel may include a hydrocarbon-based fuel having a carbon number of two or more.

In this case, it is preferred that the concentration of a compound having a carbon number of two or more in the reformed gas be 50 ppb or less on a mass basis.

A third embodiment of the present invention provides
a shutdown method for shutting down an indirect internal reforming solid oxide fuel cell including
a reformer having a reforming catalyst layer, for reforming a hydrocarbon-based fuel to produce a reformed gas,
a solid oxide fuel cell for generating electric power using the reformed gas,
a combustion region for combusting an anode off-gas discharged from the solid oxide fuel cell, and
an enclosure for housing the reformer, the solid oxide fuel cell, and the combustion region,
wherein
a flow rate of the hydrocarbon-based fuel supplied to the reformer in a state in which the following conditions i to iv are all satisfied is represented as FkE, and a temperature condition of the reforming catalyst layer in the state is represented as TrE,
i) an anode temperature of the solid oxide fuel cell is steady,
ii) the anode temperature is less than an oxidative degradation temperature,
iii) in the reformer, the hydrocarbon-based fuel is reformed, and a reformed gas having a composition suitable to be supplied to an anode is produced, and iv) an amount of the reformed gas produced is equal to or more than a requisite minimum flow rate FrMin for preventing oxidative degradation of the anode when the anode temperature of the solid oxide fuel cell is a temperature that is equal to or more than the oxidative degradation temperature,
a flow rate of the hydrocarbon-based fuel supplied to the reformer at a point of time of start of the shutdown method is represented as Fk0,
when the anode temperature falls below the oxidative degradation temperature, supply of the hydrocarbon-based fuel to the reformer is stopped to complete the shutdown method, and
while the anode temperature does not fall below the oxidative degradation temperature, the shutdown method includes the following steps: A³) measuring a reforming catalyst layer temperature T and comparing this measured temperature T with TrE;
B³) when T < TrE in step A³, performing the following steps B³1 to B³4 in order:
   B³1) increasing a temperature of the reforming catalyst layer,
   B³2) measuring the reforming catalyst layer temperature and comparing this measured temperature T with TrE,
   B³3) when T < TrE in step B³2, returning to step B³1, and
   B³4) when T ≥ TrE in step B³2, adjusting the flow rate of the hydrocarbon-based fuel supplied to the reformer from Fk0 to FkE and moving on to step D³;
C³) when T ≥ TrE in step A³,
   performing the following steps C³1 to C³5 in order:
   C³1) measuring the reforming catalyst layer temperature and comparing this measured temperature T with TrE,
   C³2) when T ≤ TrE in step C³1, adjusting the flow rate of the hydrocarbon-based fuel supplied to the reformer to FkE and moving on to step D³,
   C³3) when T > TrE in step C³1, calculating a flow rate FkMinCALC of the hydrocarbon-based fuel at which the reformed gas at the flow rate FrMin can be produced in the reformer at the reforming catalyst layer temperature T measured in step C³2 by a reforming method, a type of this reforming method being a type of a reforming method which is performed after the start of the shutdown method, and comparing values of this FkMinCALC and FkE,
   C³4) when FkMinCALC < FkE in step C³3, adjusting the flow rate of the hydrocarbon-based fuel supplied to the reformer to FkMinCALC and returning to step C³1, and
   C³5) when FkMinCALC ≥ FkE in step C³3, adjusting the flow rate of the hydrocarbon-based fuel supplied to the reformer to FkE and moving on to step D³; and
D³) waiting for the anode temperature to fall below the oxidative degradation temperature.

The hydrocarbon-based fuel may include a hydrocarbon-based fuel having a carbon number of two or more.

In this case, it is preferred that the concentration of a compound having a carbon number of two or more in the reformed gas be 50 ppb or less on a mass basis.

A fourth embodiment of the present invention provides
a shutdown method for shutting down an indirect internal reforming solid oxide fuel cell including
a reformer having a reforming catalyst layer, for reforming a hydrocarbon-based fuel to produce a reformed gas,
a solid oxide fuel cell for generating electric power using the reformed gas,
a combustion region for combusting an anode off-gas discharged from the solid oxide fuel cell, and
an enclosure for housing the reformer, the solid oxide fuel cell, and the combustion region,
wherein
a flow rate of the hydrocarbon-based fuel supplied to the reformer in a state in which the following conditions i to iv are all satisfied is represented as FkE,
i) an anode temperature of the solid oxide fuel cell is steady,
ii) the anode temperature is less than an oxidative degradation temperature,
iii) in the reformer, the hydrocarbon-based fuel is reformed, and a reformed gas having a composition suitable to be supplied to an anode is produced, and iv) an amount of the reformed gas produced is equal to or more than a requisite minimum flow rate FrMin for preventing oxidative degradation of the anode when the anode temperature of the solid oxide fuel cell is a temperature that is equal to or more than the oxidative degradation temperature,
a flow rate of the hydrocarbon-based fuel supplied to the reformer at a point of time of start of the shutdown method is represented as Fk0,
a calculated value of a flow rate of the hydrocarbon-based fuel capable of being reformed at a measured temperature of the reforming catalyst layer by a reforming method is represented as FkCALC, a type of this reforming method being a type of a reforming method which is performed after the start of the shutdown method,
when the anode temperature falls below the oxidative degradation temperature, supply of the hydrocarbon-based fuel to the reformer is stopped to complete the shutdown method, and
while the anode temperature does not fall below the oxidative degradation temperature, the shutdown method includes the following steps:
A⁴) measuring a reforming catalyst layer temperature T, calculating FkCALC using this measured temperature T, and comparing values of this FkCALC and FkE;
B⁴) when FkCALC < FkE in step A⁴, performing the following steps B⁴1 to B⁴4 in order:
   B⁴1) increasing a temperature of the reforming catalyst layer,
   B⁴2) measuring the reforming catalyst layer temperature T, calculating FkCALC using this measured temperature T, and comparing values of this FkCALC and FkE,
   B⁴3) when FkCALC < FkE in step B⁴2, returning to step B⁴1, and
   B⁴4) when FKCALC ≥ FkE in step B⁴2, adjusting the flow rate of the hydrocarbon-based fuel supplied to the reformer from Fk0 to FkE and moving on to step D⁴;
C⁴) when FkCALC ≥ FkE in step A⁴, adjusting the flow rate of the hydrocarbon-based fuel supplied to the reformer from Fk0 to FkE and moving on to step D⁴; and
D⁴) waiting for the anode temperature to fall below the oxidative degradation temperature.

The hydrocarbon-based fuel may include a hydrocarbon-based fuel having a carbon number of two or more.

In this case, it is preferred that the concentration of a compound having a carbon number of two or more in the reformed gas be 50 ppb or less on a mass basis.

A fifth embodiment of the present invention provides
a shutdown method for shutting down an indirect internal reforming solid oxide fuel cell including
a reformer having a reforming catalyst layer, for reforming a hydrocarbon-based fuel to produce a reformed gas,
a solid oxide fuel cell for generating electric power using the reformed gas,
a combustion region for combusting an anode off-gas discharged from the solid oxide fuel cell, and
an enclosure for housing the reformer, the solid oxide fuel cell, and the combustion region,
wherein
a flow rate of the hydrocarbon-based fuel supplied to the reformer in a state in which the following conditions i to iv are all satisfied is represented as FkE, and a temperature condition of the reforming catalyst layer in the state is represented as TrE,
i) an anode temperature of the solid oxide fuel cell is steady,
ii) the anode temperature is less than an oxidative degradation temperature,
iii) in the reformer, the hydrocarbon-based fuel is reformed, and a reformed gas having a composition suitable to be supplied to an anode is produced, and iv) an amount of the reformed gas produced is equal to or more than a requisite minimum flow rate FrMin for preventing oxidative degradation of the anode when the anode temperature of the solid oxide fuel cell is a temperature that is equal to or more than the oxidative degradation temperature,
a flow rate of the hydrocarbon-based fuel supplied to the reformer at a point of time of start of the shutdown method is represented as Fk0,
when the anode temperature falls below the oxidative degradation temperature, supply of the hydrocarbon-based fuel to the reformer is stopped to complete the shutdown method, and
while the anode temperature does not fall below the oxidative degradation temperature, the shutdown method includes the following steps:
A⁵) measuring a reforming catalyst layer temperature T and comparing this measured temperature T with TrE;
B⁵) when T < TrE in step A⁵, performing the following steps B⁵1 to B⁵4 in order:
   B⁵1) increasing a temperature of the reforming catalyst layer,
   B⁵2) measuring the reforming catalyst layer temperature T and comparing this measured temperature T with TrE,
   B⁵3) when T < TrE in step B⁵2, returning to step B⁵1, and
   B⁵4) when T ≥ TrE in step B⁵2, adjusting the flow rate of the hydrocarbon-based fuel supplied to the reformer from Fk0 to FkE and moving on to step D⁵;
C⁵) when T ≥ TrE in step A⁵, adjusting the flow rate of the hydrocarbon-based fuel supplied to the reformer from Fk0 to FkE and moving on to step D⁵; and D⁵) waiting for the anode temperature to fall below the oxidative degradation temperature.

The hydrocarbon-based fuel may include a hydrocarbon-based fuel having a carbon number of two or more.

In this case, it is preferred that the concentration of a compound having a carbon number of two or more in the reformed gas be 50 ppb or less on a mass basis.

### Advantages of the Invention

The present invention provides a method for shutting down an indirect internal reforming SOFC, in which it is possible to prevent the oxidative degradation of the anode by a reformed gas, while reliably reforming a hydrocarbon-based fuel.

### Brief Description of the Drawings

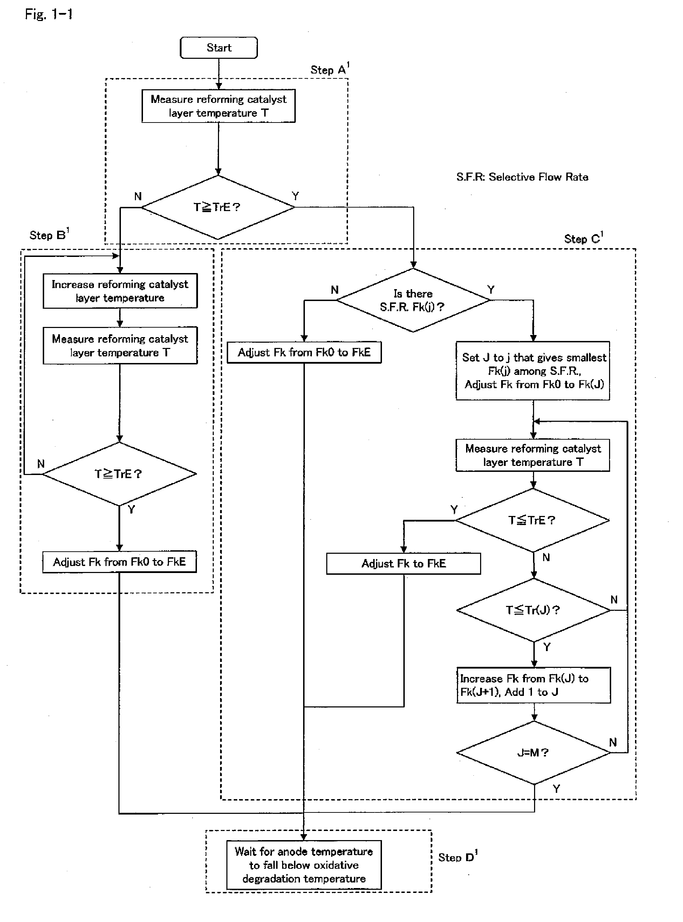

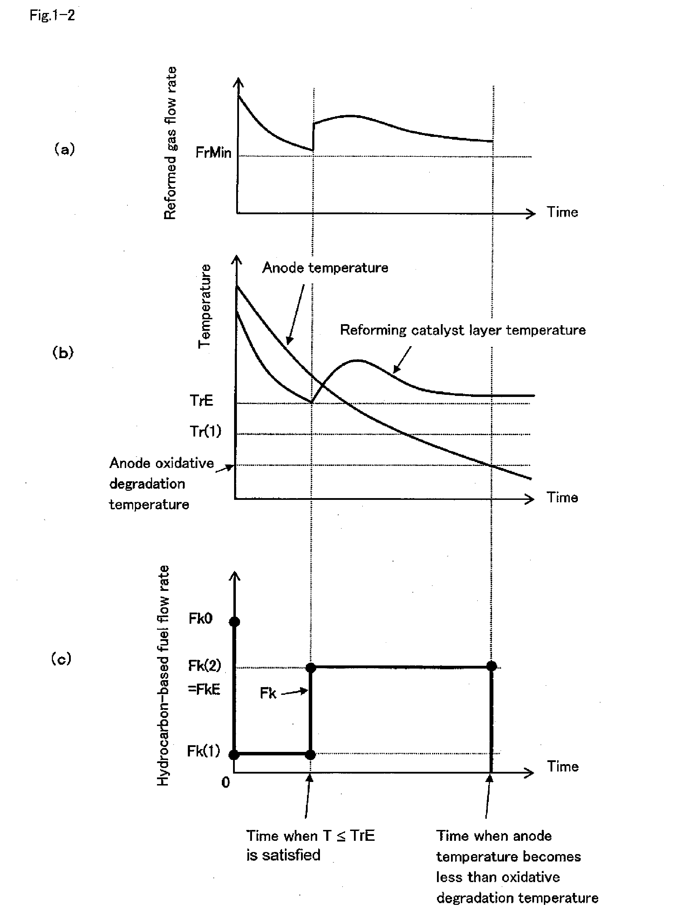

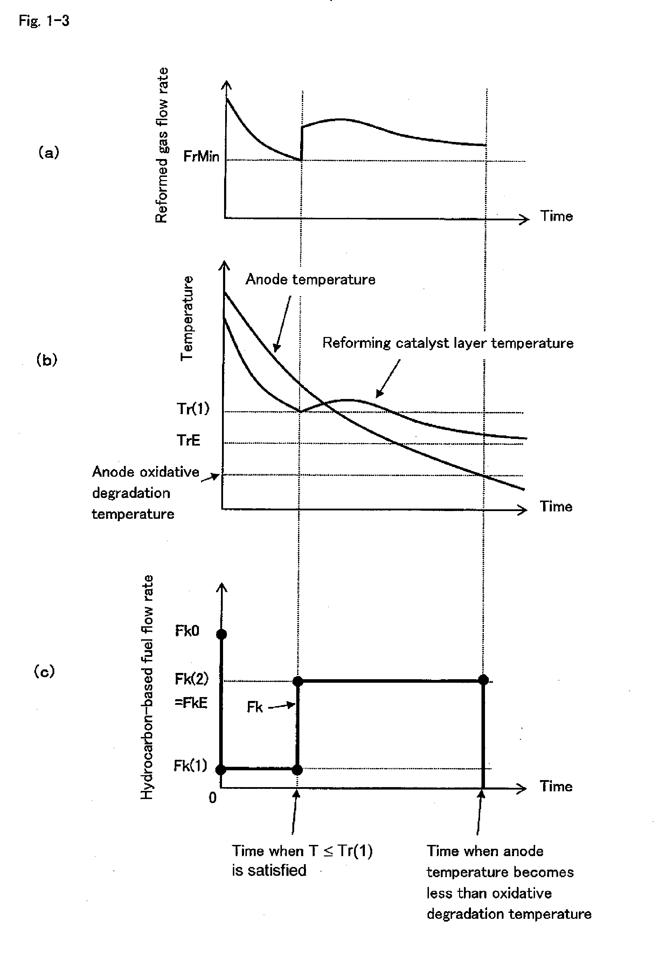

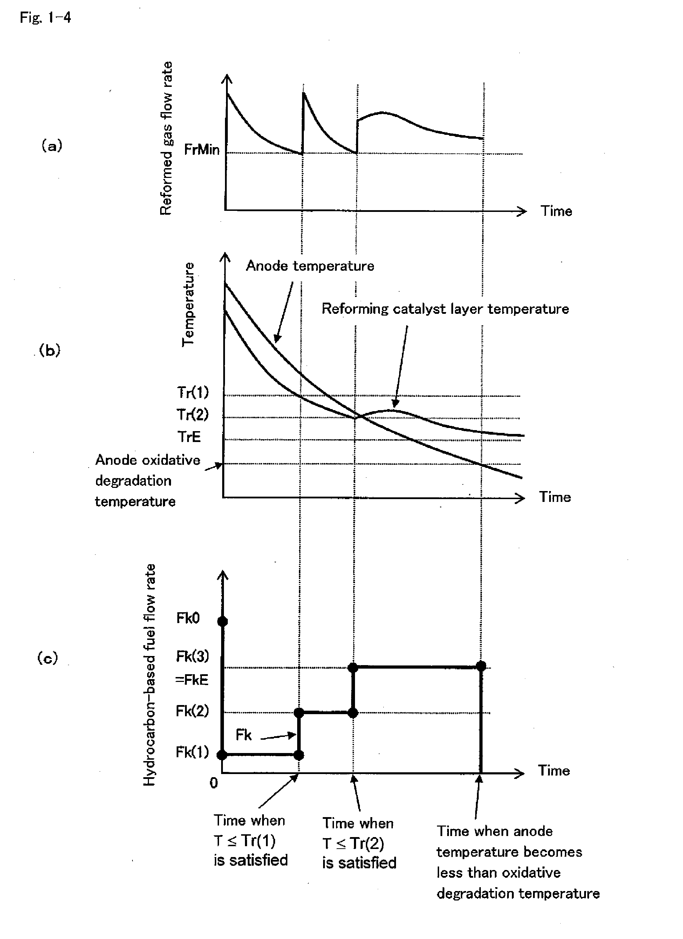

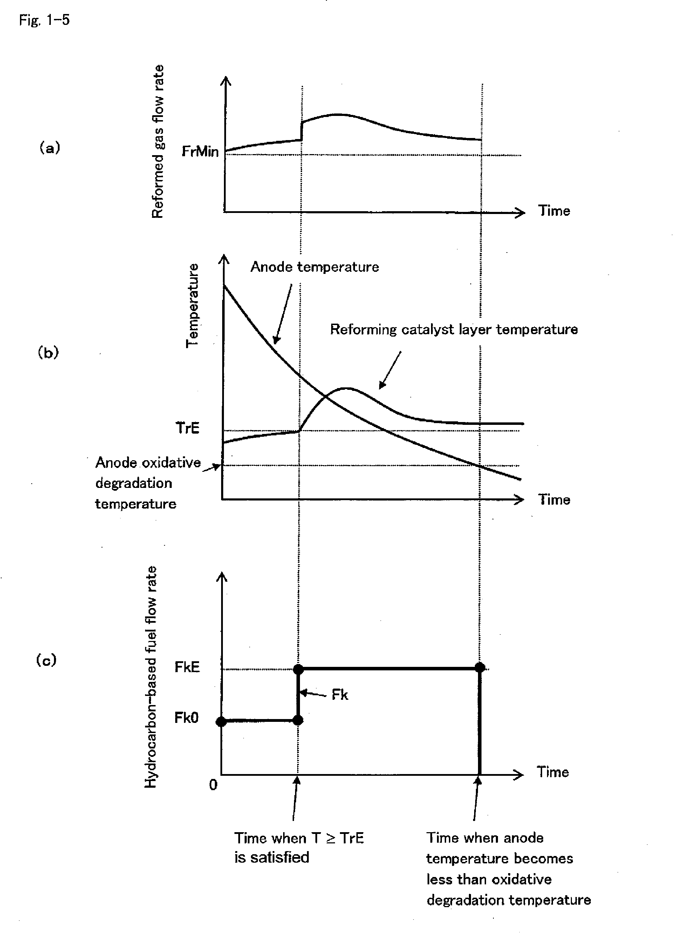

Figure 1-1 is a flow chart for illustrating a first embodiment of the method of the present invention.
Figures 1-2 are conceptual graphs for illustrating the first embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.
Figures 1-3 are conceptual graphs for illustrating the first embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.
Figures 1-4 are conceptual graphs for illustrating the first embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.
Figures 1-5 are conceptual graphs for illustrating the first embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.

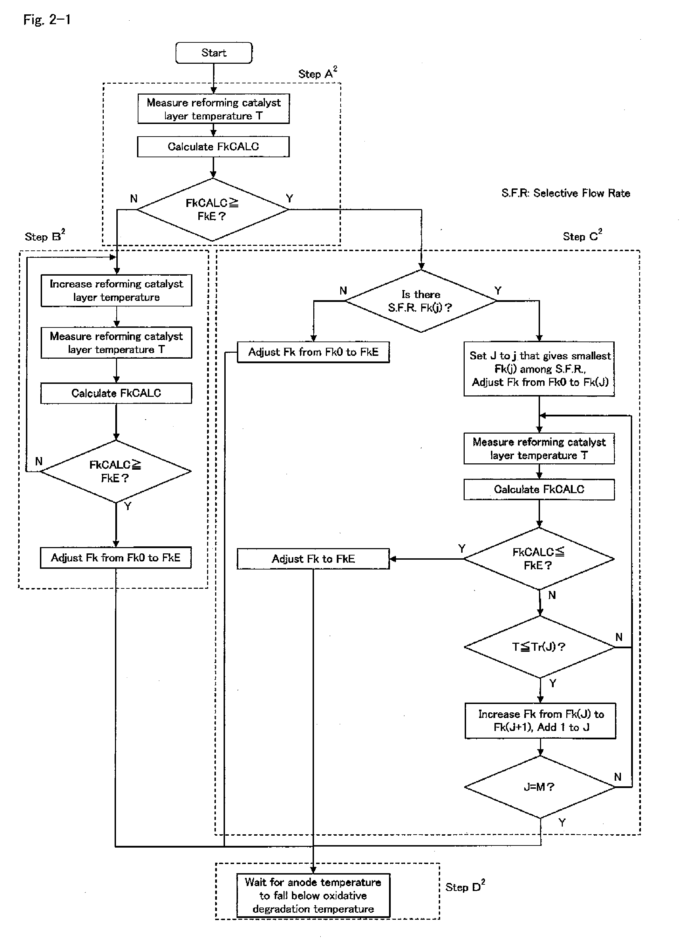

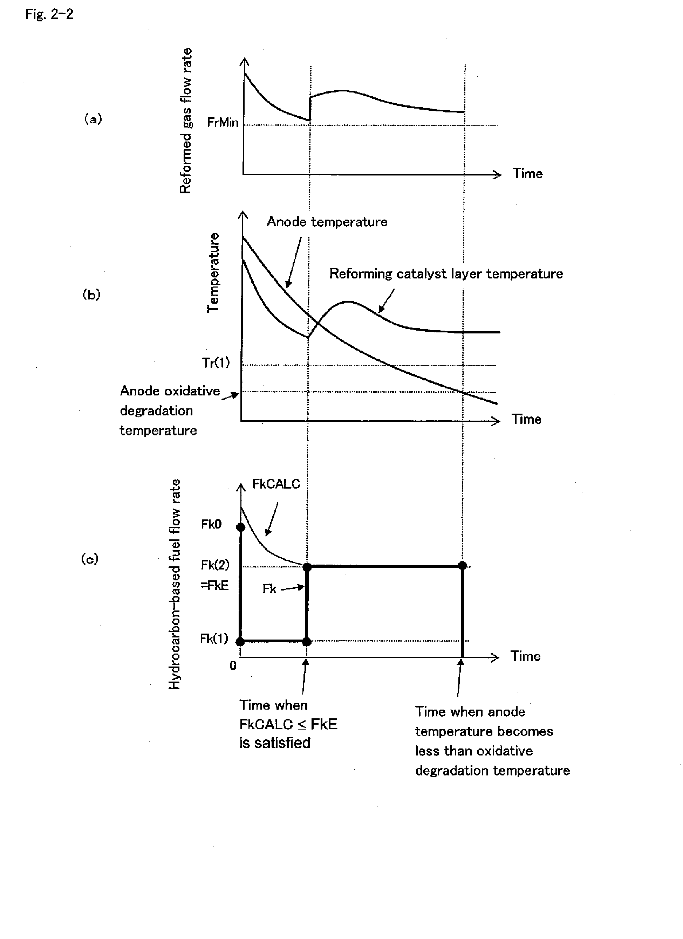

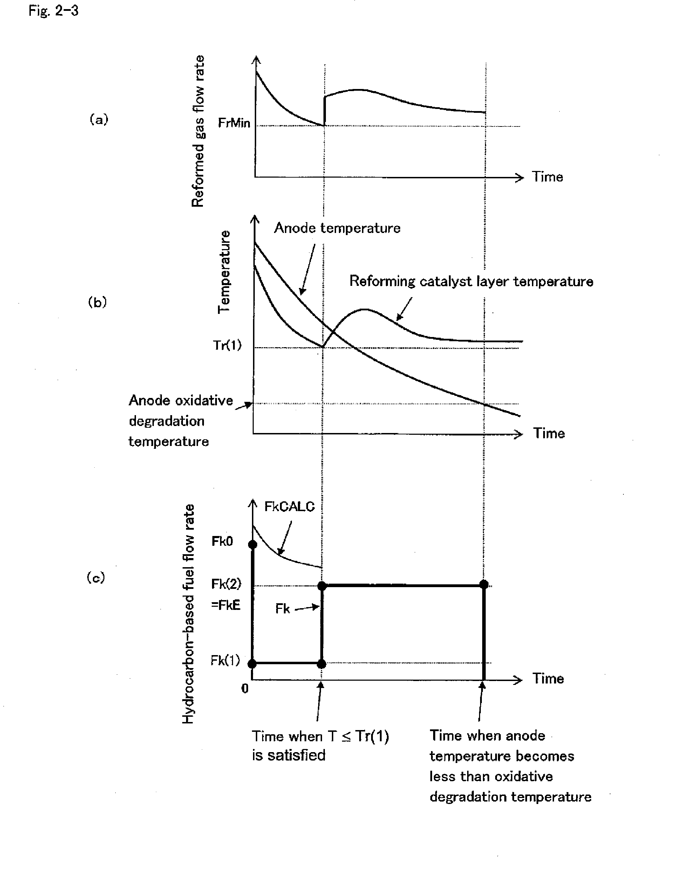

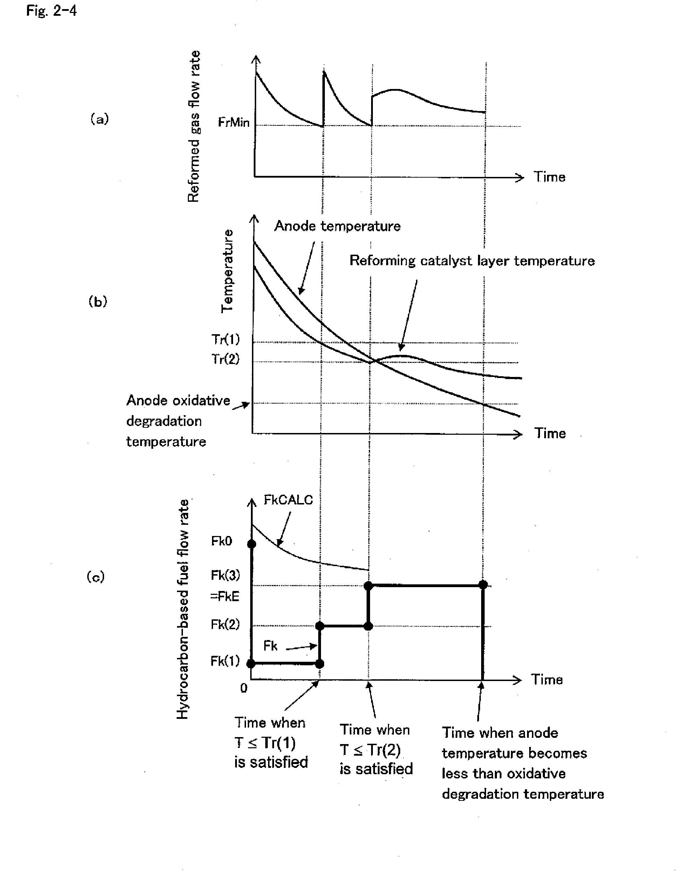

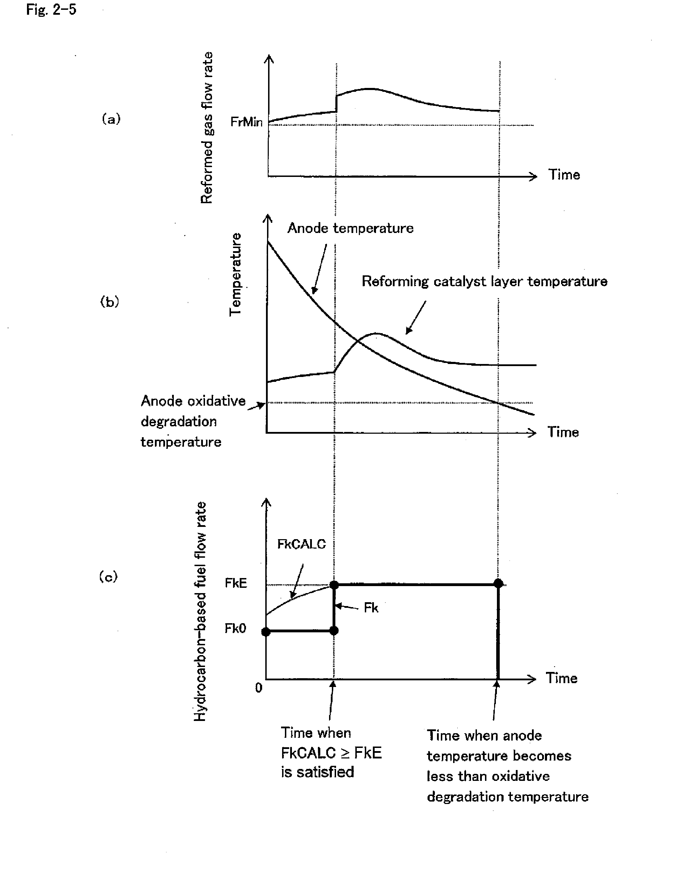

Figure 2-1 is a flow chart for illustrating a second embodiment of the method of the present invention.
Figures 2-2 are conceptual graphs for illustrating the second embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.
Figures 2-3 are conceptual graphs for illustrating the second embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.
Figures 2-4 are conceptual graphs for illustrating the second embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.
Figures 2-5 are conceptual graphs for illustrating the second embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.

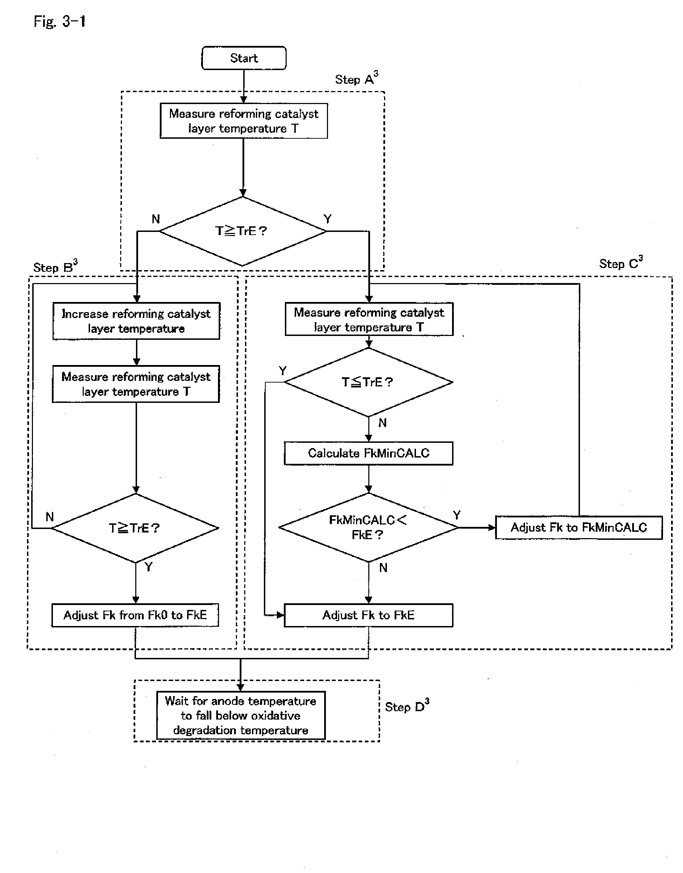

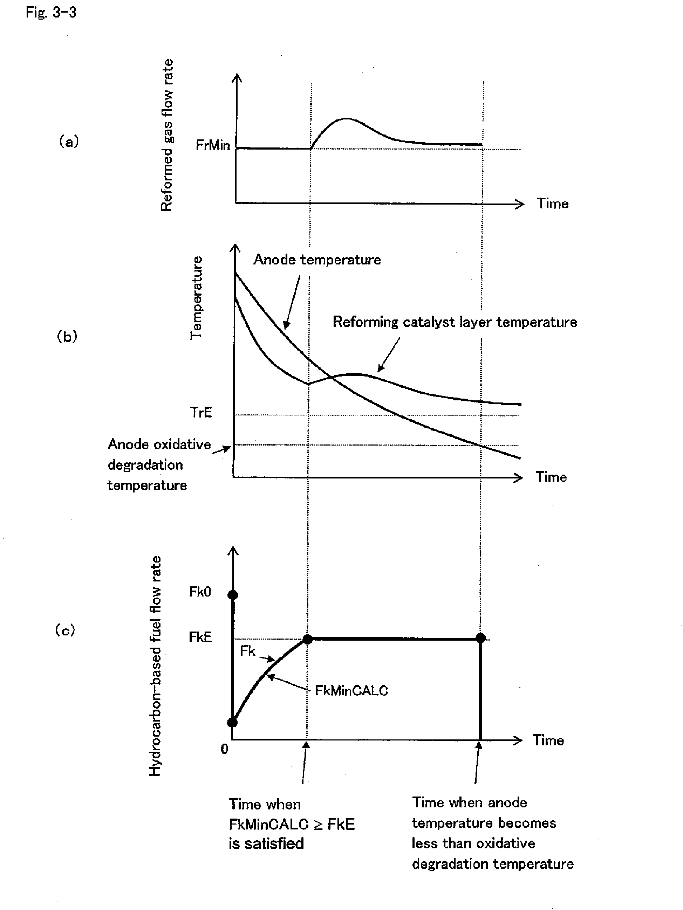

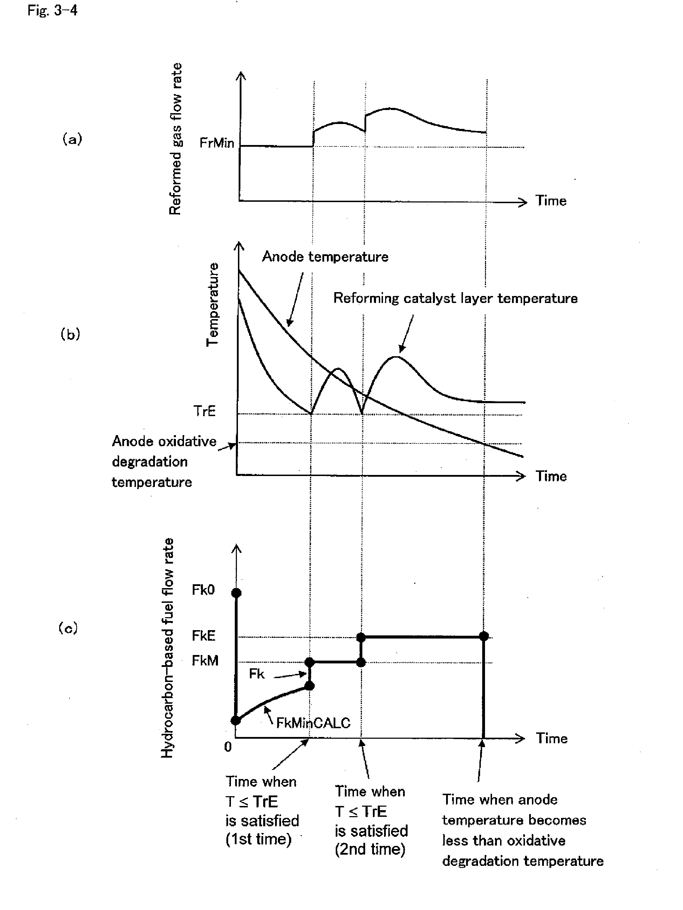

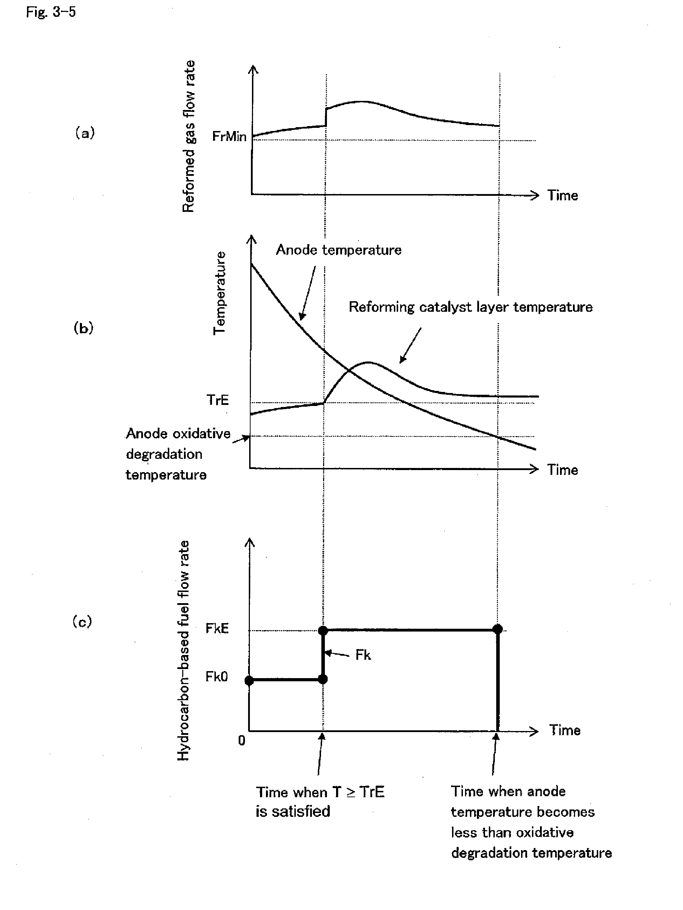

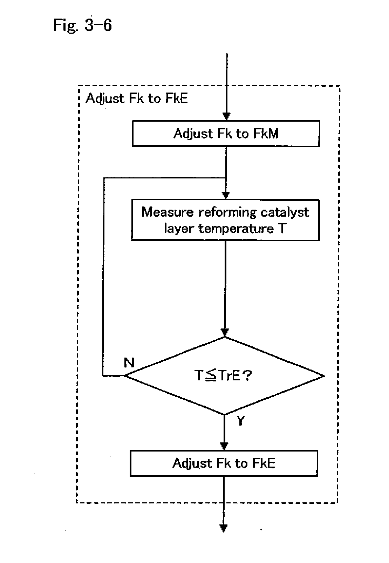

Figure 3-1 is a flow chart for illustrating a third embodiment of the method of the present invention.

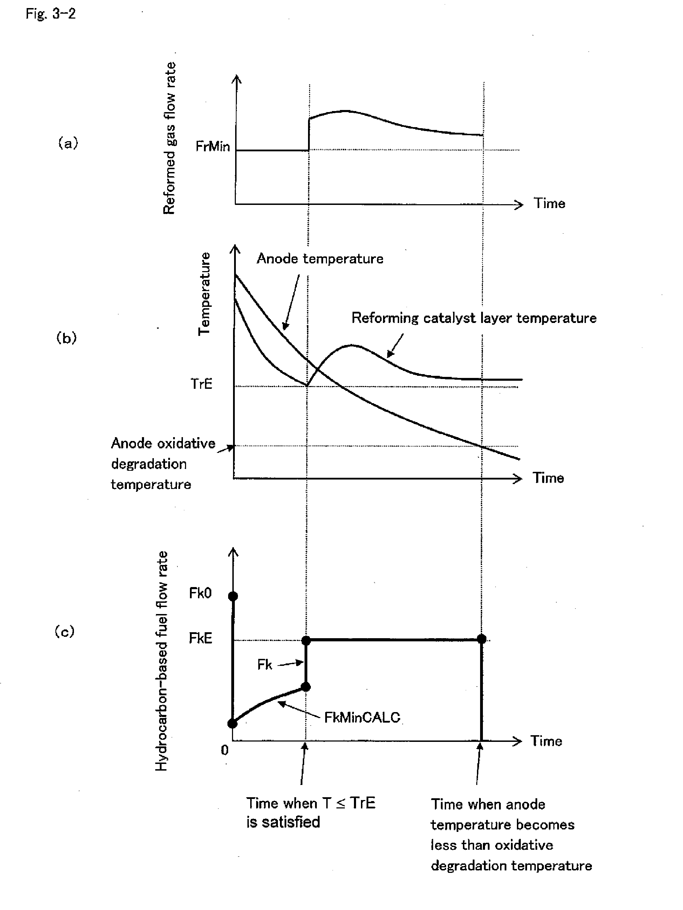

Figures 3-2 are conceptual graphs for illustrating the third embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.
Figures 3-3 are conceptual graphs for illustrating the third embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.
Figures 3-4 are conceptual graphs for illustrating the third embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.
Figures 3-5 are conceptual graphs for illustrating the third embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.
Figure 3-6 is a flow chart for illustrating the third embodiment of the method of the present invention.
Figure 4-1 is a flow chart for illustrating a fourth embodiment of the method of the present invention.
Figures 4-2 are conceptual graphs for illustrating the fourth embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.
Figures 4-3 are conceptual graphs for illustrating the fourth embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.
Figure 5-1 is a flow chart for illustrating a fifth embodiment of the method of the present invention.
Figures 5-2 are conceptual graphs for illustrating the fifth embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.
Figures 5-3 are conceptual graphs for illustrating the fifth embodiment of the method of the present invention, and (a) shows a relationship between elapsed time and a reformed gas flow rate, (b) shows a relationship between elapsed time and temperature, and (c) shows a relationship between elapsed time and a hydrocarbon-based fuel flow rate.
Figure 6 is a schematic diagram showing an outline of an indirect internal reforming SOFC to which the present invention can be applied.

### Embodiments for Carrying Out the Invention

Embodiments of the present invention will be described below, using drawings, but the present invention is not limited thereto.

In this specification, a "steam/carbon ratio" refers to a ratio of the number of moles of water molecules to the number of moles of carbon atoms in a gas supplied to a reforming catalyst layer, and an "oxygen/carbon ratio" refers to a ratio of the number of moles of oxygen molecules to the number of moles of carbon atoms in a gas supplied to the reforming catalyst layer.

### «Indirect Internal Reforming SOFC»

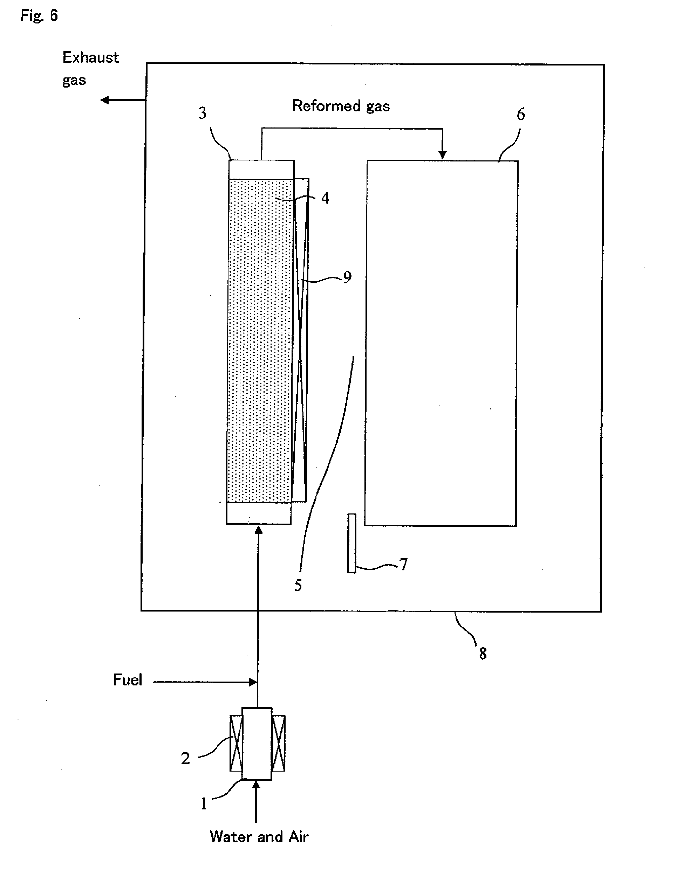

One embodiment of an indirect internal reforming SOFC in which the present invention can be carried out is schematically shown in Figure 6.

The indirect internal reforming SOFC includes a reformer 3 for reforming a hydrocarbon-based fuel to produce a reformed gas (hydrogen-containing gas). The reformer includes a reforming catalyst layer 4.

The indirect internal reforming SOFC includes an SOFC 6 for generating electric power using the above reformed gas, and also includes a combustion region 5 for combusting an anode off-gas discharged from the SOFC (particularly the anode of the SOFC).

The indirect internal reforming SOFC includes an enclosure 8 for housing the reformer, the solid oxide fuel cell, and the combustion region.

The indirect internal reforming SOFC refers to the enclosure (module container) 8 and equipment included in the interior of the enclosure.

In the indirect internal reforming SOFC in the embodiment shown in Figure 6, an igniter 7 that is an ignition means for igniting the anode off-gas is provided, and also, the reformer is equipped with an electrical heater 9.

Each supply gas is supplied to the reformer or the SOFC, after being appropriately preheated as required.

A water vaporizer 1 equipped with an electrical heater 2 is connected to the indirect internal reforming SOFC, and piping for supplying the hydrocarbon-based fuel to the reformer is connected to the midstream of connection piping for the water vaporizer 1. The water vaporizer 1 generates steam by heating with the electrical heater 2. The steam may be supplied to the reforming catalyst layer after being appropriately superheated in the water vaporizer or downstream thereof.

Also, air is supplied to the reforming catalyst layer, and here, air can be supplied to the reforming catalyst layer after being preheated in the water vaporizer. Steam or a mixed gas of air and steam can be obtained from the water vaporizer.

The steam or the mixed gas of air and steam is mixed with the hydrocarbon-based fuel and supplied to the reformer 3, particularly to the reforming catalyst layer 4 of the reformer 3. When a liquid fuel, such as kerosene, is used as the hydrocarbon-based fuel, the hydrocarbon-based fuel may be supplied to the reforming catalyst layer after being appropriately vaporized.

The reformed gas obtained from the reformer is supplied to the SOFC 6, particularly to the anode of the SOFC 6. Although not shown, air is appropriately preheated and supplied to the cathode of the SOFC.

Combustible components in the anode off-gas (gas discharged from the anode) are combusted by oxygen contained in a cathode off-gas (gas discharged from the cathode) at the SOFC outlet. In order to do this, ignition using the igniter 7 is possible. The outlets of both the anode and the cathode are open in the module container 8. The combustion gas is appropriately discharged from the module container.

The reformer and the SOFC are housed in one module container and modularized. The reformer is disposed at a position where it can receive heat from the SOFC. For example, when the reformer is located at a position where it receives thermal radiation from the SOFC, the reformer is heated by thermal radiation from the SOFC during electric power generation.

In the indirect internal reforming SOFC, the reformer is preferably disposed at a position where radiation heat can be directly transferred from the SOFC to the outer surface of the reformer. Therefore, it is preferred that there be substantially no obstacle between the reformer and the SOFC, that is, it is preferred to make the region between the reformer and the SOFC be an empty space. Also, the distance between the reformer and the SOFC is preferably as short as possible.

The reformer 3 is heated by the combustion heat of the anode off-gas generated in the combustion region 5. Also, when the temperature of the SOFC is higher than that of the reformer, the reformer is also heated by radiation heat from the SOFC.

Further, the reformer may be heated by heat generation by reforming. When the reforming is partial oxidation reforming, or when the reforming is autothermal reforming and heat generation by a partial oxidation reforming reaction is larger than endotherm ic heat by a steam reforming reaction, heat is generated with the reforming.

### <<Reforming-stoppable State>>

In this specification, a state in which all of the following conditions i to iv are satisfied is referred to as a reforming-stoppable state.
i) The anode temperature of the SOFC is steady.
ii) The above-described anode temperature is less than an oxidative degradation temperature.
iii) In the reformer, the hydrocarbon-based fuel is reformed, and a reformed gas having a composition suitable to be supplied to the anode is produced.
iv) The amount of this reformed gas produced is equal to or more than the requisite minimum flow rate FrMin for preventing the oxidative degradation of the anode when the anode temperature of the SOFC is a temperature that is equal to or more than the oxidative degradation temperature.

### <Conditions i and ii>

The anode temperature means the temperature of the anode electrode, but may be the temperature of a stack-constituting member, such as a separator, near the anode when it is difficult to physically directly measure the temperature of the anode electrode. With respect to the location for the measurement of the anode temperature, it is preferred to use a position where the temperature becomes relatively high, more preferably a position where the temperature becomes the highest, in terms of safe control. A location where the temperature becomes high may be found by preliminary experiment or simulation.

The oxidative degradation temperature is a temperature at which the anode is oxidatively degraded. For example, the electrical conductivity of the anode material is measured by a DC four-terminal method, with the temperature varied, in a reducing or oxidizing gas atmosphere, and the oxidative degradation temperature may be determined as the lowest temperature at which the electrical conductivity in the oxidizing gas atmosphere becomes lower than that in the reducing gas atmosphere.

### <Condition iii>

The condition iii means a state in which in the reformer, the hydrocarbon-based fuel is reformed, and a reformed gas having a composition suitable to be supplied to the anode is obtained. For example, when the hydrocarbon-based fuel includes a hydrocarbon-based fuel(s) having a carbon number of two or more, the condition iii means a state in which the reformed gas is reducing, and a concentration of a C2+ component(s) (one or more compounds having a carbon number of two or more) in the reformed gas is not more than a concentration which does not cause any problem in view of anode degradation and flow blockage due to carbon deposition. The concentration of the C2+ component(s) in this case is preferably 50 ppb or less as a mass fraction in the reformed gas.

### <Condition iv>

The requisite minimum reformed gas flow rate FrMin for preventing the oxidative degradation of the anode is the smallest flow rate among the flow rates at which the anode electrode is not oxidatively degraded by the diffusion of the cathode off-gas into the interior of the anode from the anode outlet. This reformed gas flow rate may be found beforehand by performing an experiment or a simulation, while varying a reformed gas flow rate, in a state in which the anode temperature is maintained at the oxidative degradation temperature or higher.

The oxidative degradation of the anode may be judged, for example, by measuring the electrical conductivity of the anode electrode by experiment and comparing it with that of an anode electrode not oxidatively degraded. Alternatively, the oxidative degradation of the anode may be judged by calculating the compositional partial pressure of the anode gas by simulation using an equation including an advection-diffusion term and comparing it with equilibrium partial pressure in the oxidation reaction of the anode electrode. For example, when the anode electrode material is Ni, the equilibrium partial pressure of oxygen in an anode electrode oxidation reaction represented by the following formula is 1.2 × 10⁻¹⁴ atm (1.2 × 10⁻⁹ Pa) at 800°C, and if the calculated value of the oxygen partial pressure of the anode is smaller than this value, then it can be judged that the anode electrode is not oxidatively degraded. Also when the anode temperature is a temperature other than 800°C, the maximum value of oxygen partial pressures at which the anode electrode is not oxidatively degraded may be found by equilibrium calculation, and if a calculated value of the oxygen partial pressure of the anode is smaller than this value, then it can be judged that the anode electrode is not oxidatively degraded.

Ni + 0.5 O₂⇔NiO

The flow rate of the reformed gas supplied to the SOFC (the amount of the reformed gas produced in the reformer) in order to prevent the oxidative degradation of the anode is preferably a flow rate such that the reformed gas is combustible at the stage of being discharged from the anode after passing through the SOFC. When the smallest flow rate among the flow rates of thus combustible reformed gas is larger than the above-described requisite minimum reformed gas flow rate, the smallest flow rate among the flow rates of the combustible reformed gas may be considered to be a reformed gas flow rate "equal to or more than the requisite minimum flow rate" referred to in the condition iv. It is possible to judge whether a gas is combustible or not, for example, by sampling a gas in the combustion gas discharge line and performing composition analysis in experiment, or by calculating in simulation.

### «First Embodiment»

The first embodiment of the shutdown method of the present invention will be described.

### [FkE]

The flow rate of the hydrocarbon-based fuel supplied to the reformer (particularly, the reforming catalyst layer) in the reforming-stoppable state is represented as FkE.

FkE may be obtained beforehand by experiment or simulation. FkE may be found by performing an experiment or a simulation, while varying flow rates of fluids supplied to the indirect internal reforming SOFC, such as the flow rate of water (including steam) for steam reforming or autothermal reforming and the flow rate of air for autothermal reforming or partial oxidation reforming, which are supplied to the reformer, a cathode air flow rate, the flow rates of a fuel and air supplied to a burner, and flow rates of fluids, such as water and air, supplied to a heat exchanger; and electrical input and output to and from the indirect internal reforming SOFC, such as electrical heater output for heating the reformer, water and liquid fuel evaporators, the SOFC, fluid supply piping, and the like, and electrical input taken out from a thermoelectric conversion module and the like, that is, varying the operation conditions of the indirect internal reforming SOFC, and searching for FkE that steadily satisfies the conditions i to iv. FkE may be any value as long as the conditions i to iv are satisfied, but in terms of thermal efficiency, the smallest FkE is preferably used. The operation conditions of the indirect internal reforming SOFC, including the FkE, are determined beforehand as operation conditions in the reforming-stoppable state.

### [TrE]

The temperature condition of the reforming catalyst layer in the reforming-stoppable state is represented as TrE. TrE may be found together with FkE in the process of search for FkE, and TrE is a temperature condition of the reforming catalyst layer that corresponds to the single FkE used.

### [Plurality of Different Hydrocarbon-Based Fuel Flow Rates Fk(j)]

M different stepwise hydrocarbon-based fuel flow rates Fk(j) are determined beforehand. Here, j is an integer of 1 or more and M or less, where M is an integer of 2 or more.

Here, Fk(j) increases with the increase in j. In other words, Fk(j) < Fk(j+1). Also, Fk(M) which is the largest among Fk(j) has a value that is equal to FkE.

In this case, a steam/carbon ratio and/or an oxygen/carbon ratio that correspond to each Fk(j) may be set for each Fk(j). Also, when a gas not contributing to a reaction is supplied to the reforming catalyst layer, its flow rate may be set for each Fk(j). The steam/carbon ratios, the oxygen/carbon ratios, or the flow rates of the gas not contributing to a reaction, which are set correspondingly to Fk(j), may have the same value for all Fk(j) or may differ from one Fk(j) to another.

Further, Fk(j) is equal to or more than the minimum value (Fk^{min}(j)) of hydrocarbon-based fuel flow rates at which the reformed gas at a flow rate that is equal to or more than FrMin can be obtained by a reforming method. A type of this reforming method is that of a reforming method which is performed after the start of the shutdown method.

This minimum value Fk^{min}(j) may be obtained by preliminary experiment or simulation. For example, a Fk^{min}(j) may be found by measuring or calculating reformed gas flow rates by using the reforming method of the type performed after the start of the shutdown method as a reforming method, varying the flow rate of the hydrocarbon-based fuel and the temperature of the reforming catalyst layer, setting the flow rates of steam and/or oxygen to flow rates obtained from a steam/carbon ratio and/or an oxygen carbon ratio that correspond to the flow rate of the hydrocarbon-based fuel and Fk(j), and setting, when supplying a gas not contributing to a reaction to the reforming catalyst layer, a flow rate of this gas to the flow rate that corresponds to the Fk(j); and obtaining the minimum value of flow rates of the hydrocarbon-based fuel at which the reformed gas flow rate is FrMin. The reforming method is, for example, steam reforming, autothermal reforming, or partial oxidation reforming. Alternatively, for example, when a rate of a reaction other than a reaction accompanied by the decrease of the hydrocarbon-based fuel (raw fuel) supplied to the reforming catalyst layer is much faster than that of the reaction accompanied by the decrease of the raw fuel, and it can be considered that components other than the raw fuel instantaneously reach an equilibrium composition, a Fk^{min}(j) may be obtained by equilibrium calculation using a Gibbs energy minimization method or the like. For example, using a Fk(j), a steam/carbon ratio and/or an oxygen carbon ratio that correspond to the Fk(j), and, when supplying a gas not contributing to a reaction, a gas flow rate of this gas, a composition of a gas supplied to the reforming catalyst layer is obtained, and a gas composition excluding the maximum value of the raw fuel composition suitable to be supplied to the anode (an allowable raw fuel composition) is obtained. By using the obtained composition, and total pressure or the partial pressure of each component, and varying the flow rate of the raw fuel and temperature, equilibrium calculation is performed to calculate gas flow rates for an equilibrium composition. By adding the gas flow rate of the allowable raw fuel composition to the calculated gas flow rates for the equilibrium composition, the flow rates of a reformed gas having a composition in which the raw fuel flow rate is the largest, among reformed gas compositions suitable to be supplied to the anode, are calculated, and the minimum value of the raw fuel flow rates at which the reformed gas flow rate is equal to or more than FrMin may be set as the Fk^{min}(j).

It is assumed that there exist one or more Fk(j) that are smaller than FkE and are equal to or more than Fk^{min}(j). When there do not exist one or more such Fk(j), it is possible to perform step A¹, and when T < TrE in step A¹, perform step B¹, and when T ≥ TrE in step A¹, adjust the flow rate of the hydrocarbon-based fuel supplied to the reformer from Fk0 to FkE and move on to step D¹.

Also, it is assumed that when the reforming catalyst layer temperature is TrE, Fk(j) that is smaller than FkE is reformable. When there do not exist one or more such Fk(j), it is possible to perform step A¹, and when T < TrE in step A¹, perform step B¹, and when T ≥ TrE in step A¹, adjust the flow rate of the hydrocarbon-based fuel supplied to the reformer from Fk0 to FkE and move on to step D¹. Whether Fk(j) that is smaller than FkE is reformable when the reforming catalyst layer temperature is TrE may be found, for example, by finding beforehand temperature conditions T_{R}(j) in which reforming is possible when the hydrocarbon-based fuel at the flow rates Fk(j) is reformed in the reforming catalyst layer, and comparing T_{R}(j) with TrE. In this case, if TrE ≥ T_{R}(j), then it may be considered that when the reforming catalyst layer temperature is TrE, Fk(j) that is smaller than FkE is reformable. The T_{R}(j) may be obtained by preliminary experiment or simulation. For example, a T_{R}(j) may be found by analyzing or calculating the concentrations of the reformed gas components by using the reforming method of the type performed after the start of the shutdown method as a reforming method, setting the flow rate of the hydrocarbon-based fuel to a Fk(j), setting steam and/or oxygen flow rates to flow rates obtained from steam/carbon ratios and/or oxygen carbon ratios that correspond to the flow rate of the hydrocarbon-based fuel and Fk(j), supplying, when supplying a gas not contributing to a reaction to the reforming catalyst layer, this gas at a flow rate that corresponds to the Fk(j), and varying the temperature of the reforming catalyst layer; and obtaining the minimum temperature of the reforming catalyst layer at which a reformed gas with a composition suitable to be supplied to the anode is obtained.

Fk(j) may be set, for example, at equal intervals.

It is preferred to make M as large as possible and make the interval between Fk(j) small, in terms of thermal efficiency. For example, it is possible to make M as large as possible and make the interval between Fk(j) small, within the allowable range of the memory consumption of a flow rate controlling means, and within a range in which the interval exceeds the precision of a pressure increasing means and flow rate controlling and measuring means.

### [Fk0]

The flow rate of the hydrocarbon-based fuel supplied to the reformer at the point of time of the start of the shutdown method is represented as Fk0.

### [Tr(j) That Corresponds to Fk(j)]

The temperature conditions Tr(j) of the reforming catalyst layer are found beforehand (wherein j is an integer of 1 or more and M-1 or less). In a temperature condition Tr(j), the flow rate of the reformed gas obtained when the hydrocarbon-based fuel at a flow rate Fk(j) is reformed in the reforming catalyst layer is FrMin. The temperature conditions Tr(j) may be obtained by preliminary experiment or simulation. For example, a temperature condition Tr(j) may be found by measuring or calculating reformed gas flow rates by using the reforming method of the type performed after the start of the shutdown method as a reforming method, setting the flow rate of the hydrocarbon-based fuel to a Fk(j), setting the steam and/or oxygen flow rates to flow rates obtained from a steam/carbon ratio and/or an oxygen carbon ratio that correspond to the flow rate of the hydrocarbon-based fuel and Fk(j), setting, when supplying a gas not contributing to a reaction to the reforming catalyst layer, a flow rate of this gas to a flow rate that correspond to the Fk(j), and varying the temperature of the reforming catalyst layer; and obtaining a temperature of the reforming catalyst layer at which the reformed gas flow rate is FrMin. Alternatively, for example, when a rate of a reaction other than a reaction accompanied by the decrease of the hydrocarbon-based fuel (raw fuel) supplied to the reforming catalyst layer is much faster than that of the reaction accompanied by the decrease of the raw fuel, and it can be considered that components other than the raw fuel instantaneously reach an equilibrium composition, a Tr(j) may be obtained by equilibrium calculation using a Gibbs energy minimization method or the like. For example, using a Fk(j), a steam/carbon ratio and/or an oxygen carbon ratio that correspond to the Fk(j), and, when supplying a gas not contributing to a reaction, a gas flow rate of this gas, a composition of a gas supplied to the reforming catalyst layer is obtained, and a gas composition excluding the maximum value of the raw fuel composition suitable to be supplied to the anode (an allowable raw fuel composition) is obtained. By using the obtained composition, and total pressure or the partial pressure of each component, and the Fk(j), and varying the temperature, equilibrium calculation is performed to calculate gas flow rates for an equilibrium composition. By adding the gas flow rate of the allowable raw fuel composition to the calculated gas flow rates for the equilibrium composition, the flow rates of a reformed gas having a composition in which the raw fuel flow rate is the largest, among reformed gas compositions suitable to be supplied to the anode, are calculated, and a temperature at which the reformed gas flow rate is FrMin is obtained, and this temperature may be set as the Tr(j).

Specifically, when a certain type of reforming is performed before the start of the shutdown method, the same type of reforming as this (for example, steam reforming) may be performed after the start of the shutdown method. In this case, the temperature conditions of the reforming catalyst layer in which the flow rate of the reformed gas obtained by reforming the hydrocarbon-based fuel at the flow rates Fk(j) in the reforming catalyst layer is FrMin, when this type of reforming is performed in the reformer, are Tr(j). For example, when steam reforming is performed before the start of the shutdown method, steam reforming may also be continuously performed after the start of the shutdown method, and the temperature conditions of the reforming catalyst layer in which the reformed gas at the flow rate FrMin is obtained from the hydrocarbon-based fuel at the flow rates Fk(j) when steam reforming is performed in the reformer are Tr(j).

Alternatively, when a certain type of reforming (a first type of reforming) is performed before the start of the shutdown method, a different type of reforming from this (a second type of reforming) may be performed after the start of the shutdown method. In this case, the temperature conditions of the reforming catalyst layer in which the flow rate of the reformed gas obtained by reforming the hydrocarbon-based fuel at the flow rates Fk(j) is FrMin, when the second type of reforming is performed in the reformer, are Tr(j). For example, when autothermal reforming is performed before the start of the shutdown method, the reforming may be switched to steam reforming after the start of the shutdown method. In this case, the temperature conditions of the reforming catalyst layer in which the reformed gas at the flow rate FrMin is obtained from the hydrocarbon-based fuel at the flow rates Fk(j) when steam reforming is performed are Tr(j).

### [Measurement of Reforming Catalyst Layer Temperature]

In order to determine a flow rate of the hydrocarbon-based fuel supplied to the reforming catalyst layer, the measured value of the reforming catalyst layer temperature is compared with the above TrE or the above temperature conditions Tr(j). In order to do this, the reforming catalyst layer temperature is measured. For example, the reforming catalyst layer temperature may be monitored (continuously measured).

When the monitoring of the temperature of the reforming catalyst layer has been performed since before the start of the shutdown method, the temperature monitoring may be continuously performed as it has been.

When the anode temperature falls below the oxidative degradation temperature, the reducing gas becomes unnecessary, and therefore, the supply of the hydrocarbon-based fuel to the reformer can be stopped to complete the shutdown method. Therefore, the monitoring of the temperature of the reforming catalyst layer may be continuously performed until the anode temperature falls below the oxidative degradation temperature.

An appropriate temperature sensor, such as a thermocouple, may be used for the measurement of the reforming catalyst layer temperature.

### [Case Where Reforming Method Is Changed before and after Start of Shutdown Method]

When the reforming method is changed before and after the start of the shutdown method, the above-described FkE and TrE are determined for a stoppable state when reforming after the change of the reforming method is performed. Also, the above-described FrMin is determined for the stoppable state when reforming after the change of the reforming method is performed.

### [Steps Included in Shutdown Method]

While the anode temperature does not fall below the oxidative degradation temperature, the following steps A¹ to D¹ are performed. When the anode temperature falls below the oxidative degradation temperature, the supply of the hydrocarbon-based fuel to the reformer can be stopped, regardless of the status of the implementation of steps A¹ to D¹, to complete the shutdown method. It is possible to stop the supply of fluids supplied to the indirect internal reforming SOFC, such as water (including steam) for steam reforming or autothermal reforming and air for autothermal reforming or partial oxidation reforming, which are supplied to the reformer, cathode air, the fuel and air supplied to the burner, and fluids, such as water and air, supplied to the heat exchanger; and the input and output of electricity to and from the indirect internal reforming SOFC, such as electrical heater output for heating the reformer, the water and liquid fuel evaporators, the cell stack, the fluid supply piping, and the like, and electrical input taken out from the thermoelectric conversion module and the like, according to the stop of the supply of the hydrocarbon-based fuel to the reformer.

Figure 1-1 is a flow chart showing steps A¹ to D¹ in the first embodiment of the shutdown method. Apart from the procedure shown in this flow chart, the anode temperature is monitored, and when the anode temperature falls below the oxidative degradation temperature of the anode, the supply of the hydrocarbon-based fuel to the reformer is stopped, regardless of steps A¹ to D¹.

The shutdown method includes steps A¹ to D¹, but it is not necessary to actually perform all of steps A¹ to D¹, and only part of steps A¹ to D¹ may be performed according to the circumstances.

### [Step A¹]

First, a reforming catalyst layer temperature T is measured. Then, the magnitude relationship between this temperature T and the above-described TrE is checked.

### [Step B¹]

When T < TrE in step A¹, the following steps B¹1 to B¹4 are performed in order. "T < TrE" means that the hydrocarbon-based fuel at the flow rate FkE cannot be reformed.

### · Step B¹1

First, step B¹1 is performed. In other words, the step of increasing the temperature of the reforming catalyst layer is performed.

For example, the temperature of the reforming catalyst layer is increased using an appropriate heat source, such as a heater or a burner annexed to the reformer.

### · step B¹2

Then, step B¹2 is performed. In other words, the step of measuring a reforming catalyst layer temperature T and comparing the values of this T and TrE is performed.

### · step B¹3

When T < TrE in step B¹2, the method returns to step B¹1. In other words, while T < TrE, steps B¹1 to B¹3 are repeatedly performed. During this time, the temperature of the reforming catalyst layer increases.

In performing steps B¹2 and B¹3, the temperature increase in step B¹1 may be stopped once, but while steps B¹2 and B¹3 are performed, step B¹1 may be continued.

### · step B¹4

When T ≥ TrE in step B¹2, the step of adjusting the flow rate of the hydrocarbon-based fuel supplied to the reformer (represented as Fk) from Fk0 to FkE and going to step D¹ is performed. "T ≥ TrE" means that the hydrocarbon-based fuel at a flow rate that is equal to or less than FkE can be reformed.

At this time, in a case where the reforming method should be changed before and after the start of the shutdown method, the fuel flow rate is adjusted from Fk0 to FkE, and the reforming method is changed. By this method, it is possible to prevent the oxidative degradation of the anode with the reformed gas, while reliably reforming the hydrocarbon-based fuel.

### [Step C¹]

When T ≥ TrE in step A¹, step C¹ is performed. "T ≥ TrE" means that the hydrocarbon-based fuel at a flow rate that is equal to or less than FkE can be reformed. In this case, if there does not exist, among the hydrocarbon-based fuel flow rates Fk(j) determined beforehand, a flow rate Fk(j) at which the corresponding temperature condition Tr(j) is equal to or less than the reforming catalyst layer temperature T measured in step A¹ and which is equal to or more than Fk(1) and is smaller than FkE (this flow rate Fk(j) is hereinafter referred to as a "selective flow rate"), then the flow rate of the hydrocarbon-based fuel supplied to the reformer is adjusted from Fk0 to FkE, and the method goes to step D¹. At this time, in a case where the reforming method should be changed before and after the start of the shutdown method, it is possible to adjust the fuel flow rate from Fk0 to FkE and change the reforming method.

For example, if j = 2 is considered, and if Tr(2) is equal to or less than the reforming catalyst layer temperature T measured in step A¹, and Fk(1) ≤ k(2) < FkE, then there exists a selective flow rate Fk(2). If there does not exist any such a selective flow rate, then the above-described operation is performed.

On the other hand, when T ≥ TrE in step A¹, and if there exists, among the predetermined hydrocarbon-based fuel flow rates Fk(j), the above-described selective flow rate Fk(j), then the following steps C¹1 to C¹7 are performed in order.

### · Step C¹1

j that gives the smallest Fk(j) among the selective flow rates is represented as J, and the flow rate of the hydrocarbon-based fuel supplied to the reformer is adjusted from Fk0 to Fk(J). At this time, in a case where the reforming method should be changed before and after the start of the shutdown method, the flow rate Fk of the hydrocarbon-based fuel is adjusted from Fk0 to Fk(J), and the reforming method is changed.

### · step C¹2

The reforming catalyst layer temperature is measured, and this measured temperature T is compared with TrE.

### · step C¹3

When T ≤ TrE in step C¹2, the flow rate of the hydrocarbon-based fuel supplied to the reformer is set to FkE, and the method goes to step D¹.

### · step C¹4

When T > TrE in step C¹2, this T is compared with Tr(J).

### · step C¹5

When T > Tr(J) in step C¹4, the method returns to step C¹2. In other words, when T > TrE in step C¹2 and T > Tr(J) in step C¹4, steps C¹2, C¹3, and C¹5 are repeatedly performed. During this time, the reforming catalyst layer temperature decreases. Therefore, eventually, T ≤ Tr(J) is satisfied.

### · step C¹6

When T ≤ Tr(J) in step C¹4, the flow rate of the hydrocarbon-based fuel supplied to the reformer is increased from Fk(J) to Fk(J+1), and J is increased by 1.

### · step C¹7

After step C¹6, J is compared with M, and if J ≠ M, then the method returns to step C¹2, and if J = M, then the method goes to step D¹.

In step C¹ and the subsequent steps, from a state in which T ≥ TrE, it is possible to set operation conditions to the operation conditions in the reforming-stoppable state, and bring the internal reforming solid oxide fuel cell to the reform ing-stoppable state without allowing the unreformed hydrocarbon-based fuel to flow into the anode. But, generally, within a temperature range preferred for reforming, as the reforming catalyst layer temperature T becomes higher, the reformed gas flow rate becomes larger. Therefore, while T ≥ TrE, the reformed gas flow rate is equal to or more than FrMin, and this means that an excessive hydrocarbon-based fuel is supplied.

On the other hand, in step C¹ and the subsequent steps, by supplying the hydrocarbon-based fuel at a flow rate as small as possible, among the flow rates of the hydrocarbon-based fuel at which the reformed gas at a flow rate that is equal to or more than FrMin can be produced and which are smaller than FkE, to the reformer, it is possible to make the hydrocarbon-based fuel supplied to the reformer as small as possible, while producing a reformed gas at a flow rate that is equal to or more than FrMin in the reformer. But, if the supply of the hydrocarbon-based fuel at a flow rate as small as possible, among the flow rates of the hydrocarbon-based fuel at which the reformed gas at a flow rate that is equal to or more than FrMin can be produced, is continued, then T < TrE may be satisfied due to the decrease of the reforming catalyst layer temperature, and there may be a case where the hydrocarbon-based fuel at the flow rate as small as possible, among the flow rates of the hydrocarbon-based fuel at which the reformed gas at a flow rate that is equal to or more than FrMin can be produced, cannot be reformed. Further, there may be a case where it is impossible to set operation conditions to the operation conditions in the reforming-stoppable state and bring the internal reforming solid oxide fuel cell to the reforming-stoppable state without allowing the unreformed hydrocarbon-based fuel to flow into the anode.

Therefore, when T ≤ TrE is satisfied, by setting operation conditions to the operation conditions in the reforming-stoppable state, it is possible to bring the internal reforming solid oxide fuel cell to the reforming-stoppable state without allowing the unreformed hydrocarbon-based fuel to flow into the anode.

Also, when T > TrE, by supplying the hydrocarbon-based fuel at a flow rate as small as possible, among the flow rates of the hydrocarbon-based fuel at which the reformed gas at FrMin or more can be produced, to the reformer, it is possible to make the hydrocarbon-based fuel supplied to the reformer as small as possible, while producing a reformed gas at a flow rate that is equal to or more than FrMin in the reformer.

### [Step D¹]

In step D¹, the method waits for the anode temperature to fall below the oxidative degradation temperature. During this time, the flow rate of the hydrocarbon-based fuel is maintained at FkE, and the flow rates of fluids supplied to the indirect internal reforming SOFC, such as the flow rate of water (including steam) for steam reforming or autothermal reforming and the flow rate of air for autothermal reforming or partial oxidation reforming, which are supplied to the reformer, the cathode air flow rate, the flow rates of the fuel and air supplied to the burner, and the flow rates of fluids, such as water and air, supplied to the heat exchanger; and the input and output of electricity to and from the indirect internal reforming SOFC, such as electrical heater output for heating the reformer, the water and liquid fuel evaporators, the cell stack, the fluid supply piping, and the like, and electrical input taken out from the thermoelectric conversion module and the like, are maintained in the operation conditions in the reforming-stoppable state determined beforehand. In other words, the operation conditions of the indirect internal reforming SOFC are maintained in the operation conditions of the indirect internal reforming SOFC in the reforming-stoppable state determined beforehand. The anode temperature decreases with time, and therefore, eventually, the anode temperature falls below the oxidative degradation temperature. The anode temperature may be appropriately monitored (continuously measured) using a temperature sensor, such as a thermocouple.

The monitoring of the anode temperature is preferably started immediately after the shutdown method is started. If the temperature monitoring has been performed since before the start of the shutdown method, then the temperature monitoring may be continued as it has been, also when the shutdown method is performed.

When the anode temperature falls below the oxidative degradation temperature, the supply of the hydrocarbon-based fuel to the reformer can be stopped to complete the shutdown method.

### [Case 1-1]

One example of the first embodiment will be described using Figures 1-2. In Figures 1-2(a) to (c), the horizontal axis is elapsed time from a point of time when the shutdown method of the present invention is started. In (a) in this figure, the vertical axis is the flow rate of the reformed gas obtained from the reformer, in (b), the vertical axis is temperature, and in (c), the vertical axis is the flow rate of the hydrocarbon fuel (the same applies to the subsequent figures relating to this embodiment).

Stepwise flow rates Fk(1) and Fk(2) = FkE are determined beforehand. In this case, M = 2.

The monitoring of the reforming catalyst layer temperature and the monitoring of the anode temperature have been continuously performed since before the point of time of the start of the shutdown method (the same applies to the subsequent cases).

Immediately after the shutdown method is started, step A¹ is performed. In other words, the reforming catalyst layer temperature T is measured, and this T is compared with TrE.

In this case, T ≥ TrE (Figure 1-2(b)), and therefore, step C¹ is performed.

Tr(1) that corresponds to Fk(1) is equal to or less than the reforming catalyst layer temperature T measured in step A¹ (Figure 1-2(b)). And Fk(1) is equal to or more than Fk(1) and is less than FkE (Figure 1-2(c)). For Fk(2), the corresponding Tr(j) is not defined. Therefore, Fk(1) is the only selective flow rate. There exists the selective flow rate Fk(1), and therefore, steps C¹1 to C¹7 are performed in order.

In step C¹1, the smallest Fk(j) among the selective flow rates is Fk(1), and j that gives Fk(1) is 1, and therefore, J = 1. And the flow rate of the hydrocarbon fuel is adjusted from Fk0 to Fk(1). When the reforming method should be changed before and after the start of the shutdown method, the flow rate of the hydrocarbon-based fuel is adjusted from Fk0 to Fk(1), and the reforming method is changed, in step C¹1.

In step C¹2, the reforming catalyst layer temperature T is measured, and this T is compared with TrE.

In this case, T > TrE (Figure 1-2(b)), and therefore, in step C¹4, T is compared with Tr(1). In this case, T > Tr(1) (Figure 1-2(b)), and therefore, the method returns to step C¹2.

For a while, steps C¹2, C¹4, and C¹5 are repeated, and during this time, the reforming catalyst layer temperature decreases with time. While T ≥ TrE, the hydrocarbon-based fuel at the flow rate Fk(1) that is a flow rate that is equal to or less than FkE can be reformed. Also, while T ≥ Tr(1), by supplying the hydrocarbon-based fuel at the flow rate Fk(1) to the reformer, the reformed gas at a flow rate that is equal to or more than FrMin continues to be supplied to the anode.

In the case shown in Figures 1-2, at a point of time when the reforming catalyst layer temperature becomes equal to or less than TrE, immediately, Fk is set to FkE, and the method goes to step D¹ (step C¹3).

In step D¹, the method waits for the anode temperature to fall below the oxidative degradation temperature.

If the anode temperature becomes less than the oxidative degradation temperature, then the supply of the hydrocarbon-based fuel to the reformer can be stopped to complete the shutdown method.

If the anode temperature falls below the oxidative degradation temperature before T becomes equal to or less than TrE in step C¹2, then step C¹3 need not be performed.

By operating in this manner, it is possible to supply the reformed gas at the requisite minimum flow rate or more to the anode, while reliably performing reforming.

### [Case 1-2]

In the above case, TrE > Tr(1), and therefore, in step C¹3, at a point of time when T becomes equal to or less than TrE, Fk is set to FkE. In this case, Tr(1) > TrE, and at a point of time when T becomes equal to or less than Tr(1) in step C¹4, Fk is set to Fk(2) = FkE (step C¹6). This case will be described using Figures 1-3.

Until a point of time when T ≤ Tr(1) is satisfied after the shutdown method is started, the operation is similar to that of case 1-1. In other words, after the method goes from step A¹ to step C¹, and step C¹1 is performed, steps C¹2, C¹4, and C¹5 are repeated until a point of time when T ≤ Tr(1) is satisfied. While T ≤ TrE, the hydrocarbon-based fuel at the flow rate Fk(1) that is a flow rate equal to or less than FkE can be reformed. Also, while T ≥ Tr(1), by supplying the hydrocarbon-based fuel at the flow rate Fk(1) to the reformer, the reformed gas at a flow rate that is equal to or more than FrMin continues to be supplied to the anode.

At a point of time when T becomes equal to or less than Tr(1) in step C¹4, immediately, Fk is increased from Fk(1) to Fk(2) = FkE and J is increased by 1 to become 2 (step C¹6). In step C¹7, J is compared with M, and J = M = 2, and therefore, the method goes to step D¹.

Step D¹ and the subsequent steps are similar to those of case 1-1.

If the anode temperature falls below the oxidative degradation temperature before T becomes equal to or less than Tr(1), then step C¹6 need not be performed.

By operating in this manner, it is possible to supply the reformed gas at the requisite minimum flow rate or more to the anode, while reliably performing reforming.

### [Case 1-3]

The case of M = 3 will be described using Figures 1-4. Here, Tr(1) > Tr(2) > TrE. Also, Tr(1) and Tr(2) are both equal to or less than the temperature T measured in step A¹, and Fk(1) and Fk(2) are both equal to or more than Fk(1) and are less than FkE, and therefore, there exist two Fk(j), that is, Fk(1) and Fk(2), as selective flow rates.

Until a point of time when T ≤ Tr(1) is satisfied after the shutdown method is started, the operation is similar to that of case 1-1. In other words, after the method goes from step A¹ to step C¹, and step C¹1 is performed, steps C¹2, C¹4, and C¹5 are repeated until a point of time when T ≤ Tr(1) is satisfied. While T ≥ TrE, the hydrocarbon-based fuel at the flow rates Fk(1) and Fk(2) that are flow rates equal to or less than FkE can be reformed. Also, while T ≥ Tr(1), by supplying the hydrocarbon-based fuel at the flow rate Fk(1) to the reformer, the reformed gas at a flow rate that is equal to or more than FrMin continues to be supplied to the anode.

At a point of time when T becomes equal to or less than Tr(1) in step C¹4, immediately, Fk is increased from Fk(1) to Fk(2) and J is increased by 1 to become 2 (step C¹6). In step C¹7, J is compared with M, and J ≠ M = 3, and therefore, the method returns to step C¹2, and for a while, steps C¹2, C¹4, and C¹5 are repeated. While T ≥ Tr(2), by supplying the hydrocarbon-based fuel at the flow rate Fk(2) to the reformer, the reformed gas at a flow rate that is equal to or more than FrMin continues to be supplied to the anode.

At a point of time when the reforming catalyst layer temperature decreases and T becomes equal to or less than Tr(2) in step C¹4, immediately, Fk is increased from Fk(2) to Fk(3) = FkE and J is increased by 1 to become 3 (step C¹6). In step C¹7, J is compared with M, and J = M = 3, and therefore, the method goes to step D¹.

Step D¹ and the subsequent steps are similar to those of case 1-1.

Of course, also in this case, if the anode temperature falls below the oxidative degradation temperature, then the supply of the hydrocarbon-based fuel to the reformer may be stopped at this point of time to complete the shutdown method.

In case 1-3, it is possible to reduce the amount of the hydrocarbon-based fuel supplied until the stop of reforming and shorten shutdown time (time from the start of the shutdown method until the anode temperature falls below the oxidative degradation temperature) compared with case 1-2.

### [Case 1-4]

A case where T < TrE in step A¹, that is, a case where step B¹ is performed, will be described using Figures 1-5.

After the start of the shutdown method, step A¹ is immediately performed, and the measurement of the reforming catalyst layer temperature T, and the comparison of this T with TrE are performed. T < TrE (Figure 1-5(b)), and therefore, step C¹ is not performed, and step B¹ is performed.

In this case, the temperature of the reforming catalyst layer is increased by an appropriate heat source, such as a burner or a heater annexed to the reformer, until the reforming catalyst layer temperature becomes equal to or more than TrE, so that the hydrocarbon-based fuel at the flow rate FkE can be reformed, as shown in Figures 1-5. In other words, while T (the reforming catalyst layer temperature measured in step B¹2) < TrE, steps B¹1 to B¹3 are repeated.

When T ≥ TrE is satisfied in step B¹2, the flow rate Fk of the hydrocarbon-based fuel supplied to the reformer is adjusted from Fk0 to FkE (step B¹4). When the reforming method should be changed before and after the start of the shutdown method, the fuel flow rate is adjusted from Fk0 to FkE, and the reforming method is changed. Then, the method goes to step D¹ (step B¹4).

Step D¹ and the subsequent steps are similar to those of case 1-1.

### [Regarding "Can Be Reformed"]

"The hydrocarbon-based fuel at a certain flow rate can be reformed (or is capable of being reformed) in the reforming catalyst layer" refers to that when the hydrocarbon-based fuel at this flow rate is supplied to the reforming catalyst layer, the composition of the gas discharged from the reforming catalyst layer becomes a composition suitable to be supplied to the anode of the SOFC.

For example, "can be reformed in the reforming catalyst layer" may be that the supplied hydrocarbon-based fuel can be decomposed to a C1 compound(s) (a compound(s) having a carbon number of 1). In other words, "can be reformed in the reforming catalyst layer" means a case where reforming can proceed in the reforming catalyst layer until a composition is obtained in which a C2+ component(s) (a component(s) having a carbon number of 2 or more) in the gas at the outlet of the reforming catalyst layer has a concentration, which does not cause the problems of anode degradation and flow blockage due to carbon deposition, or less. The concentration of the C2+ component(s) in this case is preferably 50 ppb or less as a mass fraction in the reformed gas. And in this case, it is enough that the gas at the outlet of the reforming catalyst layer is reducing gas. Methane is permitted to be contained in the gas at the outlet of the reforming catalyst layer. In the reforming of the hydrocarbon-based fuel, usually, methane remains in the equilibrium theory. Even if carbon is contained in the gas at the outlet of the reforming catalyst layer in the form of methane, CO, or CO₂, carbon deposition can be prevented by adding steam as required. When methane is used as the hydrocarbon-based fuel, it is enough that reforming proceeds so that the gas at the outlet of the reforming catalyst layer becomes reducing.

With respect to the reducing property of the gas at the outlet of the reforming catalyst layer, it is enough that the property is to the extent that if this gas is supplied to the anode, the oxidative degradation of the anode is suppressed. In order to do this, for example, the partial pressures of oxidizing O₂, H₂O, CO₂, and the like contained in the gas at the outlet of the reforming catalyst layer may be lower than their equilibrium partial pressures of oxidation reactions of the anode electrode. For example, when the anode electrode material is Ni, and the anode temperature is 800°C, the partial pressure of O₂ contained in the gas at the outlet of the reforming catalyst layer may be less than 1.2 × 10⁻¹⁴ atm (1.2 × 10⁻⁹ Pa), the partial pressure ratio of H₂O to H₂ may be less than 1.7 × 10², and the partial pressure ratio of CO₂ to CO may be less than 1.8 × 10².

### [Position for Measurement of Reforming Catalyst Layer Temperature]

A position for the measurement of the reforming catalyst layer temperature will be described in detail below. This measurement position may be used when TrE, Tr(j), and T_{R}(j) are found beforehand, and when the temperature of the reforming catalyst layer is measured in steps A¹ to C¹.

### <Case Where There Is One Temperature Measurement Point>

### · Temperature Measurement Position

When there is a single temperature measurement point in the reforming catalyst layer, it is preferred to use preferably a position where the temperature becomes relatively low in the reforming catalyst layer, more preferably a position where the temperature becomes the lowest in the reforming catalyst layer, as the position for the measurement of temperature, in terms of safe side control. When the reaction heat in the reforming catalyst layer is endothermic, the vicinity of the center of the catalyst layer may be selected as the temperature measurement position. When the reaction heat in the reforming catalyst layer is exothermic, and the temperatures of the end positions are lower than that of the center portion due to heat release, an end of the catalyst layer may be selected as the temperature measurement position. A location where the temperature becomes low may be found by preliminary experiment or simulation.

### <Case Where There Are Plurality of Temperature Measurement Points>

The point for the measurement of temperature need not be one. Two or more temperature measurement points are preferred in terms of more accurate control. For example, it is possible to measure the inlet temperature and outlet temperature of the reforming catalyst layer and use their average temperature as the above-described reforming catalyst layer temperature T. However, in a case where the rate of a reaction other than a reaction accompanied by the decrease of the hydrocarbon-based fuel (raw fuel) supplied to the reforming catalyst layer is much faster than that of the reaction accompanied by the decrease of the raw fuel, and it can be considered that components other than the raw fuel instantaneously reach an equilibrium composition, even if there are a plurality of temperature measurement points in the reforming catalyst layer, it is preferred to use the temperature of a point nearest to the outlet of the reforming catalyst layer, among the temperatures measured at the plurality of points, as the temperature to be compared with Tr(j) in step C¹. When there are a plurality of temperatures of points nearest to the outlet of the reforming catalyst layer, a calculated value, such as the lowest value of them or their average value, may be appropriately used as a representative value.

Alternatively, for example, it is possible to consider regions Zᵢ obtained by dividing the reforming catalyst layer into N (N is an integer of 2 or more, and i is an integer of 1 or more and N or less), find the temperature Tᵢ of each divided region Zᵢ, and find TrE(j) (= {TrE₁, TrE₂, ..., TrE_{N}}) and Tr(j) (= {Tr(j)₁, Tr(j)₂, ..., Tr(j)_{N}}) for each divided region beforehand. In this case, when any of Tᵢ becomes equal to or less than TrEᵢ, the flow rate of the hydrocarbon-based fuel may be set to FkE. Also, in this case, when any of Tᵢ becomes equal to or less than Tr(j)ᵢ, Fk(j) may be increased to Fk(j+1). Alternatively, in a case where the rate of a reaction other than a reaction accompanied by the decrease of the hydrocarbon-based fuel (raw fuel) supplied to the reforming catalyst layer is much faster than that of the reaction accompanied by the decrease of the raw fuel, and it can be considered that components other than the raw fuel instantaneously reach an equilibrium composition, when the temperature of a point nearest to the outlet of the reforming catalyst layer, among Tᵢ, becomes equal to or less than Tr(j), Fk(j) may be increased to Fk(j+1).

When N divided regions Zᵢ are considered, temperatures of all divided regions may be set as the temperature condition, or temperature(s) of one or some (not all) regions among the N divided regions may be set as the temperature condition. The catalyst layer regions for the temperature condition may be appropriately changed according to the feed rate of the hydrocarbon-based fuel.

As the temperature of the divided region Zᵢ, actually measured temperature may be used as it is, but a calculated value, such as the average value of the inlet temperature and outlet temperature of the divided region, may be appropriately used as a representative value.

Also, it is not necessary to measure temperatures for all divided regions Zᵢ. Also, the number of divisions of the catalyst layer, N, and the number of temperature measurement point(s) may be independently set.

It is also possible to measure temperature(s) of one or some (not all) of the N divided regions and find temperature(s) of the remaining divided region(s) by appropriate interpolation from the measured temperature(s).

For example, as a temperature of a divided region where no temperature sensor is installed, a temperature of a divided region nearest to this divided region may be used. When there are two nearest divided regions, a temperature of either of the two divided regions may be used, or the average value of temperatures of the two divided regions may be used.

It is also possible to measure temperatures at a plurality of points in the reforming catalyst layer (at different positions along the gas flow direction), independently of the divided regions, and find a temperature of each divided region from the measured temperatures at the plurality of points. For example, it is possible to measure temperatures of the inlet and outlet of the reforming catalyst layer (a temperature of any position in the middle portion may be further measured), interpolate the temperature of the reforming catalyst layer from these measured temperatures by an approximation method, such as a least squares method, and find temperatures of the divided regions from the interpolation curve.

### (Examples of Positions for Measurement of Temperature)

In order to find temperatures of all divided regions, temperatures of the following positions may be measured.
· The inlet and outlet of each divided region.
· The interior (one point or a plurality of points) of each divided region (inner side of the inlet and the outlet).
· The inlet, outlet, and interior (one point or a plurality of points for one divided region) of each divided region.

In order to find a temperature of one or some (not all) of the divided regions, temperatures of the following positions may be measured.
· The inlet and outlet of one or some (not all) of the divided regions.
· The interior (one point or a plurality of points) of one or some (not all) of the divided regions (inner side of the inlet and the outlet).
· The inlet, outlet, and interior (one point or a plurality of points for one divided region) of one or some (not all) of the divided regions.

### [Others]

When the flow rate Fk of the hydrocarbon-based fuel is set to FkE, the flow rates of fluids supplied to the indirect internal reforming SOFC, such as the flow rate of water (including steam) for steam reforming or autothermal reforming and the flow rate of air for autothermal reforming or partial oxidation reforming, which are supplied to the reformer, the cathode air flow rate, the flow rates of the fuel and air supplied to the burner, and the flow rates of fluids, such as water and air, supplied to the heat exchanger; and the input and output of electricity to and from the indirect internal reforming SOFC, such as electrical heater output for heating the reformer, the water and liquid fuel evaporators, the cell stack, the fluid supply piping, and the like, and electrical input taken out from the thermoelectric conversion module and the like, are accordingly set, as required, to the operation conditions in the reforming-stoppable state determined beforehand. In other words, the operation conditions of the indirect internal reforming SOFC are set to the operation conditions of the indirect internal reforming SOFC in the reforming-stoppable state determined beforehand.

When the flow rate of the hydrocarbon-based fuel supplied to the reformer is changed in step C¹1 and step C¹6, the flow rates of fluids supplied to the indirect internal reforming SOFC, and the input and output of electricity to and from the indirect internal reforming SOFC may be accordingly set to operation conditions determined beforehand, as required, as in the above.
For example, with respect to the flow rate of water supplied to the reformer, in order to suppress carbon deposition, the water flow rate may be decreased with the decrease of the fuel flow rate, so that a predetermined value of the steam/carbon ratio is maintained. With respect to the flow rate of air supplied to the reformer, the air flow rate may be decreased with the decrease of the fuel flow rate, so that a predetermined value of the oxygen/carbon ratio is maintained. The flow rates of fluids supplied to the indirect internal reforming SOFC, other than the water and air supplied to the reformer, and the input and output of electricity to and from the indirect internal reforming SOFC may be set to the operation conditions in the reforming-stoppable state determined beforehand, or may be set to operation conditions determined beforehand as functions of the fuel flow rate.

When the reforming method is changed, the flow rates of fluids supplied to the indirect internal reforming SOFC, and the input and output of electricity to and from the indirect internal reforming SOFC may be accordingly set to operation conditions determined beforehand, as required, as in the above.
For example, in order to suppress carbon deposition, the flow rate of water supplied to the reformer may be changed to a flow rate at which a steam/carbon ratio determined beforehand is obtained. The flow rate of air supplied to the reformer may be changed to a flow rate at which an oxygen/carbon ratio determined beforehand is obtained. The flow rates of fluids supplied to the indirect internal reforming SOFC, other than the water and air supplied to the reformer, and the input and output of electricity to and from the indirect internal reforming SOFC may be set to the operation conditions in the reforming-stoppable state determined beforehand, or may be set to operation conditions determined beforehand as functions of the fuel flow rate.

When a steam reforming reaction is performed, that is, steam reforming or autothermal reforming is performed, steam is supplied to the reforming catalyst layer. When a partial oxidation reforming reaction is performed, that is, partial oxidation reforming or autothermal reforming is performed, an oxygen-containing gas is supplied to the reforming catalyst layer. As the oxygen-containing gas, a gas containing oxygen may be appropriately used, but in terms of the ease of availability, air is preferred.

The present invention is particularly effective when the hydrocarbon-based fuel has a carbon number of 2 or more, because in the case of such a fuel, particularly, reliable reforming is required.

In order to perform the method of the present invention, appropriate instrumentation and controlling equipment, including a computing means, such as a computer, may be used.

### «Second Embodiment»

Next, the second embodiment of the shutdown method of the present invention will be described.

### [FkE]

The flow rate of the hydrocarbon-based fuel supplied to the reformer (particularly, the reforming catalyst layer) in the reforming-stoppable state is represented as FkE.

FkE may be obtained beforehand by experiment or simulation. FkE may be found by performing an experiment or a simulation, while varying flow rates of fluids supplied to the indirect internal reforming SOFC, such as the flow rate of water (including steam) for steam reforming or autothermal reforming and the flow rate of air for autothermal reforming or partial oxidation reforming, which are supplied to the reformer, a cathode air flow rate, the flow rates of a fuel and air supplied to a burner, and flow rates of fluids, such as water and air, supplied to a heat exchanger; and electrical input and output to and from the indirect internal reforming SOFC, such as electrical heater output for heating the reformer, water and liquid fuel evaporators, the SOFC, fluid supply piping, and the like, and electrical input taken out from a thermoelectric conversion module and the like, that is, varying the operation conditions of the indirect internal reforming SOFC, and searching for FkE that steadily satisfies the conditions i to iv. FkE may be any value as long as the conditions i to iv are satisfied, but in terms of thermal efficiency, the smallest FkE is preferably used. The operation conditions of the indirect internal reforming SOFC, including the FkE, are determined beforehand as operation conditions in the reforming-stoppable state.

### [TrE]

The temperature of the reforming catalyst layer included in the above operation conditions in the reforming-stoppable state determined beforehand, is represented as TrE. TrE may be found together with FkE in the process of search for FkE, and TrE is a temperature condition of the reforming catalyst layer that corresponds to the single FkE used.

### [Fk0]

The flow rate of the hydrocarbon-based fuel supplied to the reformer at the point of time of the start of the shutdown method is represented as Fk0.

### [FkCALC]

The calculated value of the flow rate of the hydrocarbon-based fuel capable of being reformed at a measured reforming catalyst layer temperature by a reforming method of a type performed after the start of the shutdown method (this flow rate is hereinafter sometimes referred to as a "reformable flow rate") is represented as FkCALC. In other words, FkCALC may be obtained by measuring the temperature of the reforming catalyst layer, and calculating the flow rate of the hydrocarbon-based fuel capable of being reformed in the reforming catalyst layer when the reforming catalyst layer has this temperature. At this time, it is assumed that the reforming method of the type performed after the start of the shutdown method is performed in the reforming catalyst layer (the type of the reforming method is hereinafter sometimes referred to as a reforming type). The reforming type is, for example, steam reforming, autothermal reforming, or partial oxidation reforming.

Specifically, when a certain type of reforming is performed before the start of the shutdown method, the same type of reforming as this may be performed after the start of the shutdown method. In this case, the flow rate (calculated value) of the hydrocarbon-based fuel capable of being reformed, when this type of reforming is performed in the reformer, is FkCALC. For example, when steam reforming is performed before the start of the shutdown method, steam reforming may also be continuously performed after the start of the shutdown method, and the flow rate of the hydrocarbon-based fuel capable of being reformed at the measured temperature of the reforming catalyst layer when steam reforming is performed in the reformer is FkCALC.

Alternatively, when a certain type of reforming (a first type of reforming) is performed before the start of the shutdown method, a different type of reforming from this (a second type of reforming) may be performed after the start of the shutdown method. In this case, the flow rate of the hydrocarbon-based fuel capable of being reformed, when the second type of reforming is performed in the reformer, is FkCALC. For example, when autothermal reforming is performed before the start of the shutdown method, the reforming may be switched to steam reforming after the start of the shutdown method. In this case, the flow rate (calculated value) of the hydrocarbon-based fuel capable of being reformed at the measured temperature of the reforming catalyst layer when steam reforming is performed is FkCALC.

### [Plurality of Different Hydrocarbon-Based Fuel Flow Rates Fk(j)]

M different stepwise hydrocarbon-based fuel flow rates Fk(j) are determined beforehand. Here, j is an integer of 1 or more and M or less, where M is an integer of 2 or more.

Here, Fk(j) increases with the increase in j. In other words, Fk(j) < Fk(j+1). Also, Fk(M) which is the largest among Fk(j) has a value that is equal to FkE.

In this case, a steam/carbon ratio and/or an oxygen/carbon ratio that correspond to each Fk(j) may be set for each Fk(j). Also, when a gas not contributing to a reaction is supplied to the reforming catalyst layer, its flow rate may be set for each Fk(j). The steam/carbon ratios, the oxygen/carbon ratios, or the flow rates of the gas not contributing to a reaction, which are set correspondingly to Fk(j), may have the same value for all Fk(j) or may differ from one Fk(j) to another.

Further, Fk(j) is equal to or more than the minimum value (Fk^{min}(j)) of hydrocarbon-based fuel flow rates at which the reformed gas at a flow rate that is equal to or more than FrMin can be obtained by the reforming method. A type of this reforming method is that of a reforming method which is performed after the start of the shutdown method.

This minimum value Fk^{min}(j) may be obtained by preliminary experiment or simulation. For example, a Fk^{min}(j) may be found by measuring or calculating reformed gas flow rates by using the reforming method of the type performed after the start of the shutdown method as a reforming method, using the flow rate of the hydrocarbon-based fuel as a variable, using the temperature of the reforming catalyst layer as a variable within a range considered, setting the flow rates of steam and/or oxygen to flow rates obtained from a steam/carbon ratio and/or an oxygen carbon ratio that correspond to the flow rate of the hydrocarbon-based fuel and Fk(j), and setting, when supplying a gas not contributing to a reaction to the reforming catalyst layer, a flow rate of this gas to flow rate that corresponds to the Fk(j); and obtaining the minimum value of flow rates of the hydrocarbon-based fuel at which the reformed gas flow rate is FrMin. The reforming method is, for example, steam reforming, autothermal reforming, or partial oxidation reforming. Alternatively, for example, when a rate of a reaction other than a reaction accompanied by the decrease of the hydrocarbon-based fuel (raw fuel) supplied to the reforming catalyst layer is much faster than that of the reaction accompanied by the decrease of the raw fuel, and it can be considered that components other than the raw fuel instantaneously reach an equilibrium composition, a Fk^{min}(j) may be obtained by equilibrium calculation using a Gibbs energy minimization method or the like. For example, using a Fk(j), a steam/carbon ratio and/or an oxygen carbon ratio that correspond to the Fk(j), and, when supplying a gas not contributing to a reaction, a gas flow rate of this gas, a composition of a gas supplied to the reforming catalyst layer is obtained, and a gas compositions excluding the maximum value of the raw fuel composition suitable to be supplied to the anode (an allowable raw fuel composition) are obtained. By using the obtained composition, and total pressure or the partial pressure of each component, using the flow rate of the raw fuel as a variable, and using the temperature of the reforming catalyst layer as a variable within a range considered, equilibrium calculation is performed to calculate gas flow rates for an equilibrium composition. By adding a gas flow rate of the allowable raw fuel composition to the calculated gas flow rates for the equilibrium composition, the flow rates of a reformed gas having a composition in which the raw fuel flow rate is the largest, among reformed gas compositions suitable to be supplied to the anode, are calculated, and the minimum value of the raw fuel flow rates at which the reformed gas flow rate is equal to or more than FrMin may be set as the Fk^{min}(j).

It is assumed that there exist one or more Fk(j) that are smaller than FkE and are equal to or more than Fk^{min}(j). When there do not exist one or more such Fk(j), it is possible to perform step A², and when FkCALC < FkE in step A², perform step B², and when FKCALC ≥ FkE in step A², adjust the flow rate of the hydrocarbon-based fuel supplied to the reformer from Fk0 to FkE and move on to step D².

Also, when the values of at least one or more of the steam/carbon ratio, the oxygen/carbon ratio, and the flow rate of the gas not contributing to a reaction, which are set correspondingly to each Fk(j), are different from values in the operation conditions in the reforming-stoppable state determined beforehand, it is assumed that when the reforming catalyst layer temperature is the temperature in the operation conditions in the reforming-stoppable state determined beforehand, TrE, Fk(j) that is smaller than FkE is reformable. When there do not exist one or more such Fk(j), it is possible to perform step A², and when FkCALC < FkE in step A², perform step B², and when FkCALC ≥ FkE in step A², adjust the flow rate of the hydrocarbon-based fuel supplied to the reformer from Fk0 to FkE and go to step D². Whether Fk(j) that is smaller than FkE is reformable when the reforming catalyst layer temperature is TrE may be found, for example, by finding beforehand temperature conditions T_{R}(j) in which the hydrocarbon-based fuel at the flow rates Fk(j) can be reformed in the reforming catalyst layer, and comparing T_{R}(j) with TrE. In this case, if TrE ≥ T_{R}(j), then it may be considered that when the reforming catalyst layer temperature is TrE, Fk(j) that is smaller than FkE is reformable. The T_{R}(j) may be obtained by preliminary experiment or simulation. For example, a T_{R}(j) may be found by analyzing or calculating the concentrations of the reformed gas components by using the reforming method of the type performed after the start of the shutdown method as a reforming method, setting the flow rate of the hydrocarbon-based fuel to a Fk(j), setting steam and/or oxygen flow rates to flow rates obtained from a steam/carbon ratio and/or an oxygen/carbon ratio that correspond to the flow rate of the hydrocarbon-based fuel and Fk(j), supplying, when supplying a gas not contributing to a reaction to the reforming catalyst layer, this gas at a flow rate that corresponds to the Fk(j), and using the temperature of the reforming catalyst layer as a variable within a range considered; and obtaining the minimum temperature of the reforming catalyst layer at which a reformed gas with a composition suitable to be supplied to the anode is obtained.

Fk(j) may be set, for example, at equal intervals.

It is preferred to make M as large as possible and make the interval between Fk(j) small, in terms of thermal efficiency. For example, it is possible to make M as large as possible and make the interval between Fk(j) small, within the allowable range of the memory consumption of a flow rate controlling means, and within a range in which the interval exceeds the precision of a pressure increasing means and flow rate controlling and measuring means.

### [Tr(j) That Corresponds to Fk(j)]

The temperature conditions Tr(j) of the reforming catalyst layer are found beforehand (wherein j is an integer of 1 or more and M-1 or less). In a temperature condition Tr(j), the flow rate of the reformed gas obtained when the hydrocarbon-based fuel at a flow rate Fk(j) is reformed in the reforming catalyst layer is FrMin. The temperature conditions Tr(j) may be obtained by preliminary experiment or simulation. For example, a temperature condition Tr(j) may be found by measuring or calculating reformed gas flow rates by using the reforming method of the type performed after the start of the shutdown method as a reforming method, setting the flow rate of the hydrocarbon-based fuel to a Fk(j), setting the steam and/or oxygen flow rates to flow rates obtained from a steam/carbon ratio and/or an oxygen carbon ratio that correspond to the flow rate of the hydrocarbon-based fuel and Fk(j), setting, when supplying a gas not contributing to a reaction to the reforming catalyst layer, a flow rate of this gas to a flow rate that correspond to the Fk(j), and using the temperature of the reforming catalyst layer as a variable within a range considered; and obtaining a temperature of the reforming catalyst layer at which the reformed gas flow rate is FrMin. Alternatively, for example, when a rate of a reaction other than a reaction accompanied by the decrease of the hydrocarbon-based fuel (raw fuel) supplied to the reforming catalyst layer is much faster than that of the reaction accompanied by the decrease of the raw fuel, and it can be considered that components other than the raw fuel instantaneously reach an equilibrium composition, a Tr(j) may be obtained by equilibrium calculation using a Gibbs energy minimization method or the like. For example, using a Fk(j), a steam/carbon ratio and/or an oxygen/carbon ratio that correspond to the Fk(j), and, when supplying a gas not contributing to a reaction, a gas flow rate of this gas, a composition of a gas supplied to the reforming catalyst layer is obtained, and a gas composition excluding the maximum value of the raw fuel composition suitable to be supplied to the anode (an allowable raw fuel composition) is obtained. By using the obtained composition, and total pressure or the partial pressure of each component, and the Fk(j), and using the temperature as a variable within a range considered, equilibrium calculation is performed to calculate gas flow rates for an equilibrium composition. By adding the gas flow rate of the allowable raw fuel composition to the calculated gas flow rates for the equilibrium composition, the flow rates of a reformed gas having a composition in which the raw fuel flow rate is the largest, among reformed gas compositions suitable to be supplied to the anode, are calculated, and a temperatures at which the reformed gas flow rate is FrMin is obtained, and this temperature may be set as the Tr(j).

Specifically, when a certain type of reforming is performed before the start of the shutdown method, the same type of reforming as this (for example, steam reforming) may be performed after the start of the shutdown method. In this case, the temperature conditions of the reforming catalyst layer in which the flow rate of the reformed gas obtained by reforming the hydrocarbon-based fuel at the flow rates Fk(j) in the reforming catalyst layer is FrMin, when this type of reforming is performed in the reformer, are Tr(j). For example, when steam reforming is performed before the start of the shutdown method, steam reforming may also be continuously performed after the start of the shutdown method, and the temperature conditions of the reforming catalyst layer in which the reformed gas at the flow rate FrMin is obtained from the hydrocarbon-based fuel at the flow rates Fk(j) when steam reforming is performed in the reformer are Tr(j).

Alternatively, when a certain type of reforming (a first type of reforming) is performed before the start of the shutdown method, a different type of reforming from this (a second type of reforming) may be performed after the start of the shutdown method. In this case, the temperature conditions of the reforming catalyst layer in which the flow rate of the reformed gas obtained by reforming the hydrocarbon-based fuel at the flow rates Fk(j) is FrMin, when the second type of reforming is performed in the reformer, are Tr(j). For example, when autothermal reforming is performed before the start of the shutdown method, the reforming may be switched to steam reforming after the start of the shutdown method. In this case, the temperature conditions of the reforming catalyst layer in which the reformed gas at the flow rate FrMin is obtained from the hydrocarbon-based fuel at the flow rates Fk(j) when steam reforming is performed are Tr(j).

### [Measurement of Reforming Catalyst Layer Temperature]

In order to determine a flow rate of the hydrocarbon-based fuel supplied to the reforming catalyst layer, the measured value of the reforming catalyst layer temperature is compared with the above temperature conditions Tr(j). Also, the measured value of the reforming catalyst layer temperature is used for the calculation of FkCALC. In order to do this, the reforming catalyst layer temperature is measured. For example, the reforming catalyst layer temperature may be monitored (continuously measured).

When the monitoring of the temperature of the reforming catalyst layer has been performed since before the start of the shutdown method, the temperature monitoring may be continuously performed as it has been.

If the anode temperature falls below the oxidative degradation temperature, then the reducing gas becomes unnecessary, and therefore, the supply of the hydrocarbon-based fuel to the reformer can be stopped to complete the shutdown method. Therefore, the monitoring of the temperature of the reforming catalyst layer may be continuously performed until the anode temperature falls below the oxidative degradation temperature.

An appropriate temperature sensor, such as a thermocouple, may be used for the measurement of the reforming catalyst layer temperature.

### [Case Where Reforming Method Is Changed before and after Start of Shutdown Method]

When the reforming method is changed before and after the start of the shutdown method, the above-described FkE, FrMin, and TrE used when the values of at least one or more of the steam/carbon ratio, the oxygen/carbon ratio, and the flow rate of the gas not contributing to a reaction, which are set correspondingly to each Fk(j), are different from values in the operation conditions in the reforming-stoppable state determined beforehand, are determined for a reforming-stoppable state when reforming after the change of the reforming method is performed. Also, the above-described T_{R}(j) used when the values of at least one or more of the steam/carbon ratio, the oxygen/carbon ratio, and the flow rate of the gas not contributing to a reaction, which are set correspondingly to each Fk(j), are different from values in the operation conditions in the reforming-stoppable state determined beforehand, is determined for a case where reforming after the change of the reforming method is performed.

### [Steps Included in Shutdown Method]

While the anode temperature does not fall below the oxidative degradation temperature, the following steps A² to D² are performed. When the anode temperature falls below the oxidative degradation temperature, the supply of the hydrocarbon-based fuel to the reformer can be stopped, regardless of the status of the implementation of steps A² to D², to complete the shutdown method. It is possible to stop the supply of fluids supplied to the indirect internal reforming SOFC, such as water (including steam) for steam reforming or autothermal reforming and air for autothermal reforming or partial oxidation reforming, which are supplied to the reformer, cathode air, the fuel and air supplied to the burner, and fluids, such as water and air, supplied to the heat exchanger; and the input and output of electricity to and from the indirect internal reforming SOFC, such as electrical heater output for heating the reformer, the water and liquid fuel evaporators, the cell stack, the fluid supply piping, and the like, and electrical input taken out from the thermoelectric conversion module and the like, according to the stop of the supply of the hydrocarbon-based fuel to the reformer.

Figure 2-1 is a flow chart showing steps A² to D² in the second embodiment of the shutdown method. Apart from the procedure shown in this flow chart, the anode temperature is monitored, and when the anode temperature falls below the oxidative degradation temperature of the anode, the supply of the hydrocarbon-based fuel to the reformer is stopped, regardless of steps A² to D².

The shutdown method includes steps A² to D², but it is not necessary to actually perform all of steps A² to D², and only part of steps A² to D² may be performed according to the circumstances.

### [Step A²]

First, a reforming catalyst layer temperature T is measured. Then, a reformable flow rate FkCALC is calculated based on this temperature T. Further, the magnitude relationship between the flow rate FkE of the hydrocarbon-based fuel supplied to the reformer in the above-described reforming-stoppable state and this FkCALC is checked.

### [Step B²]

When FkCALC < FkE in step A², the following steps B²1 to B²4 are performed in order. "FkCALC < FkE" is considered to mean that the hydrocarbon-based fuel at the flow rate FkE cannot be reformed in the reformer (by a reforming type after change, if the reforming type is changed).

### · step B²1

First, step B²1 is performed. In other words, the step of increasing the temperature of the reforming catalyst layer is performed.

For example, the temperature of the reforming catalyst layer is increased using an appropriate heat source, such as a heater or a burner annexed to the reformer.

### · Step B²2

Then, step B²2 is performed. In other words, the step of measuring the reforming catalyst layer temperature T, calculating FkCALC using this T, and comparing the values of this FkCALC and FkE is performed.

### · Step B²3

When FkCALC < FkE in step B²2, the step of returning to step B²1 is performed. In other words, while FkCALC < FkE, steps B²1 to B²3 are repeatedly performed. During this time, the temperature of the reforming catalyst layer increases.

In performing steps B²2 and B²3, the temperature increase in step B²1 may be stopped once, but while steps B²2 and B²3 are performed, step B²1 may be continued.

### · Step B²4

When FkCALC ≥ FkE in step B²2, the step of adjusting the flow rate of the hydrocarbon-based fuel supplied to the reformer (represented as Fk) from Fk0 to FkE and going to step D² is performed. "FkCALC ≥ FkE" is considered to mean that the hydrocarbon-based fuel at the flow rate FkE can be reformed in the reforming catalyst layer (by a reforming type after change, if the reforming type is changed).

At this time, in a case where the reforming type should be changed before and after the start of the shutdown method, the fuel flow rate is adjusted from Fk0 to FkE, and the reforming type is changed. By this method, it is possible to prevent the oxidative degradation of the anode with the reformed gas, while reliably reforming the hydrocarbon-based fuel.

### [Step C²]

When FkCALC ≥ FkE in step A², step C² is performed. "FkCALC ≥ FkE" is considered to mean that the hydrocarbon-based fuel at the flow rate FkE can be reformed in the reformer (by a reforming type after change, if the reforming type is changed before and after the start of the shutdown method).

In this case, if there does not exist, among the hydrocarbon-based fuel flow rates Fk(j) determined beforehand, a flow rate Fk(j) at which the corresponding temperature condition Tr(j) is equal to or less than the reforming catalyst layer temperature T measured in step A² and which is smaller than FkE (this flow rate Fk(j) is hereinafter referred to as a "selective flow rate"), then the flow rate of the hydrocarbon-based fuel supplied to the reformer is adjusted from Fk0 to FkE, and the method goes to step D². At this time, in a case where the reforming method is changed before and after the start of the shutdown method, it is possible to adjust the fuel flow rate from Fk0 to FkE and change the reforming method.

For example, if j = 2 is considered, and if Tr(2) is equal to or less than the reforming catalyst layer temperature T measured in step A², and Fk(2) < FkE, then there exists a selective flow rate Fk(2). If there does not exist any such a selective flow rate, then the above-described operation is performed.

On the other hand, when FkCALC ≥ FkE in step A², and if there exists, among the hydrocarbon-based fuel flow rates Fk(j) determined beforehand, the above-described selective flow rate Fk(j), then the following steps C²1 to C²7 are performed in order.

### · Step C²1

j that gives the smallest Fk(j) among the selective flow rates is represented as J, and the flow rate of the hydrocarbon-based fuel supplied to the reformer (represented as Fk) is adjusted from Fk0 to Fk(J). At this time, in a case where the reforming method should be changed before and after the start of the shutdown method, the flow rate Fk of the hydrocarbon-based fuel is adjusted from Fk0 to Fk(J), and the reforming method is changed.

### · Step C²2

The reforming catalyst layer temperature is measured, FkCALC is calculated based on this T, and the values of FkCALC and FkE are compared.

### · Step C²3

When FkCALC ≤ FkE in step C²2, the flow rate of the hydrocarbon-based fuel supplied to the reformer is set to FkE, and the method goes to step D².

### · Step C²4

When FkCALC > FkE in step C²2, the reforming catalyst layer temperature T measured in step C²2 is compared with Tr(J).

### · Step C²5

When T > Tr(J) in step C²4, the method returns to step C²2. In other words, when FkCALC > FkE in step C²2 and T > Tr(J) in step C²4, steps C²2, C²4 and C²5 are repeatedly performed. During this time, the reforming catalyst layer temperature decreases. Therefore, eventually, T ≤ Tr(J) is satisfied.

### · Step C²6

When T ≤ Tr(J) in step C²4, the flow rate Fk of the hydrocarbon-based fuel supplied to the reformer is increased from Fk(J) to Fk(J+1), and J is increased by 1.

### · Step C²7

After step C²6, J is compared with M, and if J ≠ M, then the method returns to step C²2, and if J = M, then the method goes to step D².

In step C² and the subsequent steps, from a state in which FkCALC ≥ FkE, it is possible to set operation conditions to the operation conditions in the reforming-stoppable state, and bring the internal reforming solid oxide fuel cell to the reforming-stoppable state, without allowing the unreformed hydrocarbon-based fuel to flow into the anode. But, generally, within a temperature range preferred for reforming, as the reforming catalyst layer temperature T becomes higher, the reformed gas flow rate becomes larger. Therefore, while FkCALC ≥ FkE, the reformed gas flow rate is equal to or more than FrMin, and this means that an excessive hydrocarbon-based fuel is supplied.

On the other hand, in step C² and the subsequent steps, by supplying the hydrocarbon-based fuel at a flow rate as small as possible, among the flow rates of the hydrocarbon-based fuel at which the reformed gas at a flow rate that is equal to or more than FrMin can be produced and which are smaller than FkE, to the reformer, it is possible to make the hydrocarbon-based fuel supplied to the reformer as small as possible, while producing a reformed gas at a flow rate that is equal to or more than FrMin in the reformer. But, if the supply of the hydrocarbon-based fuel at a flow rate as small as possible, among the flow rates of the hydrocarbon-based fuel at which the reformed gas at a flow rate that is equal to or more than FrMin can be produced, is continued, then FkCALC < FkE may be satisfied due to the decrease of the reforming catalyst layer temperature, and there may be a case where the hydrocarbon-based fuel at the flow rate as small as possible, among the flow rates of the hydrocarbon-based fuel at which the reformed gas at a flow rate that is equal to or more than FrMin can be produced, cannot be reformed. Further, there may be a case where it is impossible to set operation conditions to the operation conditions in the reforming-stoppable state, and bring the internal reforming solid oxide fuel cell to the reforming-stoppable state, without allowing the unreformed hydrocarbon-based fuel to flow into the anode.

Therefore, when FkCALC ≤ FkE is satisfied, by setting operation conditions to the operation conditions in the reforming-stoppable state, it is possible to bring the internal reforming solid oxide fuel cell to the reforming-stoppable state, without allowing the unreformed hydrocarbon-based fuel to flow into the anode.

Also, when FkCALC > FkE, by supplying the hydrocarbon-based fuel at a flow rate as small as possible, among the flow rates of the hydrocarbon-based fuel at which the reformed gas at FrMin or more can be produced, to the reformer, it is possible to make the hydrocarbon-based fuel supplied to the reformer as small as possible, while producing a reformed gas at a flow rate that is equal to or more than FrMin in the reformer.

### [Step D²]

In step D², the method waits for the anode temperature to fall below the oxidative degradation temperature. During this time, the flow rate of the hydrocarbon-based fuel is maintained at FkE, and the flow rates of fluids supplied to the indirect internal reforming SOFC, such as the flow rate of water (including steam) for steam reforming or autothermal reforming and the flow rate of air for autothermal reforming or partial oxidation reforming, which are supplied to the reformer, the cathode air flow rate, the flow rates of the fuel and air supplied to the burner, and the flow rates of fluids, such as water and air, supplied to the heat exchanger; and the input and output of electricity to and from the indirect internal reforming SOFC, such as electrical heater output for heating the reformer, the water and liquid fuel evaporators, the cell stack, the fluid supply piping, and the like, and electrical input taken out from the thermoelectric conversion module and the like, are maintained in the operation conditions in the reforming-stoppable state determined beforehand. In other words, the operation conditions of the indirect internal reforming SOFC are maintained in the operation conditions of the indirect internal reforming SOFC in the reforming-stoppable state determined beforehand. The anode temperature decreases with time, and therefore, eventually, the anode temperature falls below the oxidative degradation temperature. The anode temperature may be appropriately monitored (continuously measured) using a temperature sensor, such as a thermocouple.

The monitoring of the anode temperature is preferably started immediately after the shutdown method is started. If the temperature monitoring has been performed since before the start of the shutdown method, then the temperature monitoring may be continued as it has been, also when the shutdown method is performed.

When the anode temperature falls below the oxidative degradation temperature, the supply of the hydrocarbon-based fuel to the reformer can be stopped to complete the shutdown method.

### [Case 2-1]

One example of the second embodiment will be described using Figures 2-2. In Figures 2-2(a) to (c), the horizontal axis is elapsed time from a point of time when the shutdown method of the present invention is started. In (a) in this figure, the vertical axis is the flow rate of the reformed gas obtained from the reformer, in (b), the vertical axis is temperature, and in (c), the vertical axis is the flow rate of the hydrocarbon fuel (the same applies to the subsequent figures relating to this embodiment).

Stepwise flow rates Fk(1) and Fk(2) = FkE are determined beforehand. In this case, M = 2.

The monitoring of the reforming catalyst layer temperature and the monitoring of the anode temperature have been continuously performed since before the point of time of the start of the shutdown method (the same applies to the subsequent cases).

Immediately after the shutdown method is started, step A² is performed. In other words, the reforming catalyst layer temperature T is measured, the reformable flow rate FkCALC is calculated using this T, and the values of this FkCALC and FkE are compared.

In this case, FkCALC ≥ FkE, and therefore, step C² is performed.

Tr(1) that corresponds to Fk(1) is equal to or less than the reforming catalyst layer temperature T measured in step A² (Figure 2-2(b)). And Fk(1) is less than FkE (Figure 2-2(c)). For Fk(2), the corresponding Tr(j) is not defined. Therefore, Fk(1) is the only selective flow rate. There exists the selective flow rate Fk(1), and therefore, steps C²1 to C²7 are performed in order.

In step C²1, the smallest Fk(j) among the selective flow rates is Fk(1), and j that gives Fk(1) is 1, and therefore, J = 1. And the flow rate of the hydrocarbon fuel is adjusted from Fk0 to Fk(1). When the reforming method should be changed before and after the start of the shutdown method, the flow rate of the hydrocarbon-based fuel is adjusted from Fk0 to Fk(1), and the reforming method is changed, in step C²1.

In step C²2, the reforming catalyst layer temperature T is measured, FkCALC is calculated based on this T, and the values of this FkCALC and FkE are compared.

In this case, FkCALC > FkE (Figure 2-2 (c)), and therefore, in step C²4, T is compared with Tr(1). In this case, T > Tr(1) (Figure 2-2(b)), and therefore, the method returns to step C²2 (step C²5).

For a while, steps C²2, C²4, and C²5 are repeated, and during this time, the reforming catalyst layer temperature decreases with time. Also, during this time, FkCALC decreases with time.

While FkCALC ≥ FkE, the hydrocarbon-based fuel at the flow rate Fk(1) that is a flow rate that is equal to or less than FkE can be reformed. Also, while T ≥ Tr(1), by supplying the hydrocarbon-based fuel at the flow rate Fk(1) to the reformer, the reformed gas at a flow rate that is equal to or more than FrMin continues to be supplied to the anode.

In the case shown in Figures 2-2, at a point of time when FkCALC becomes equal to or less than FkE, immediately, Fk is set to FkE, and the method goes to step D² (step C²3).

In step D², the method waits for the anode temperature to fall below the oxidative degradation temperature.

If the anode temperature becomes less than the oxidative degradation temperature, then the supply of the hydrocarbon-based fuel to the reformer can be stopped to complete the shutdown method.

If the anode temperature falls below the oxidative degradation temperature before FkCALC becomes equal to or less than FkE in step C²2, then step C²3 need not be performed.

By operating in this manner, it is possible to supply the reformed gas at the requisite minimum flow rate or more to the anode, while reliably performing reforming.

### [Case 2-2]

In the above case, FkCALC becomes equal to or less than FkE before the reforming catalyst layer temperature T becomes equal to or less than Tr(1), and therefore, in step C²3, at a point of time when FkCALC becomes equal to or less than FkE, Fk is set to FkE. In this case, T becomes equal to or less than Tr(1) before FkCALC becomes equal to or less than FkE. Therefore, at a point of time when T becomes equal to or less than Tr(1) in step C²4, Fk is set to Fk(2) = FkE (step C²6). This case will be described using Figures 2-3.

Until steps C²2, C²4, and C²5 are repeatedly performed after the shutdown method is started, the operation is similar to that of case 2-1. In other words, after the method goes from step A² to step C², and step C²1 is performed, steps C²2, C²4, and C²5 are repeated. While FkCALC ≥ FkE, the hydrocarbon-based fuel at the flow rate Fk(1) that is a flow rate equal to or less than FkE can be reformed. Also, while T ≥ Tr(1), by supplying the hydrocarbon-based fuel at the flow rate Fk(1) to the reformer, the reformed gas at a flow rate that is equal to or more than FrMin continues to be supplied to the anode.

At a point of time when T becomes equal to or less than Tr(1) in step C²4, immediately, Fk is increased from Fk(1) to Fk(2) = FkE and J is increased by 1 to become 2 (step C²6). In step C²7, J is compared with M, and J = M = 2, and therefore, the method goes to step D².

Step D² and the subsequent steps are similar to those of case 2-1.

If the anode temperature falls below the oxidative degradation temperature before T becomes equal to or less than Tr(1), then step C²6 need not be performed.

By operating in this manner, it is possible to supply the reformed gas at the requisite minimum flow rate or more to the anode, while reliably performing reforming.

### [Case 2-3]

The case of M = 3 will be described using Figures 2-4. Here, Tr(1) > Tr(2). Also, Tr(1) and Tr(2) are both equal to or less than the temperature T measured in step A², and Fk(1) and Fk(2) are both less than FkE, and therefore, there exist two Fk(j), that is, Fk(1) and Fk(2), as selective flow rates.

Until a point of time when the first-time step C²6 is performed after the shutdown method is started, the operation is similar to that of case 2-2. In other words, after the method goes from step A² to step C², and step C²1 is performed, steps C²2, C²4, and C²5 are repeated until a point of time when T ≤ Tr(1) is satisfied. While FkCALC ≥ FkE, the hydrocarbon-based fuel at the flow rates Fk(1) and Fk(2) that are flow rates equal to or less than FkE can be reformed. Also, while T ≥ Tr(1), by supplying the hydrocarbon-based fuel at the flow rate Fk(1) to the reformer, the reformed gas at a flow rate that is equal to or more than FrMin continues to be supplied to the anode. At a point of time when T becomes equal to or less than Tr(1) in step C²4, immediately, Fk is increased from Fk(1) to Fk(2) and J is increased by 1 to become 2 (step C²6).

In step C²7, J is compared with M, and J ≠ M = 3, and therefore, the method returns to step C²2, and for a while, steps C²2, C²4, and C²5 are repeated. While T ≥ Tr(2), by supplying the hydrocarbon-based fuel at the flow rate Fk(2) to the reformer, the reformed gas at a flow rate that is equal to or more than FrMin continues to be supplied to the anode.

At a point of time when the reforming catalyst layer temperature decreases and T becomes equal to or less than Tr(2) in step C²4, immediately, Fk is increased from Fk(2) to Fk(3) = FkE and J is increased by 1 to become 3 (step C²6). In step C²7, J is compared with M, and J = M = 3, and therefore, the method goes to step D².

Step D² and the subsequent steps are similar to those of case 2-1.

Of course, also in this case, if the anode temperature falls below the oxidative degradation temperature, then the supply of the hydrocarbon-based fuel to the reformer can be stopped at this point of time to complete the shutdown method.

In case 2-3, it is possible to reduce the amount of the hydrocarbon-based fuel supplied until the stop of reforming and shorten shutdown time (time from the start of the shutdown method until the anode temperature falls below the oxidative degradation temperature) compared with in case 2-2.

### [Case 2-4]

A case where FkCALC calculated in step A² is smaller than FkE (the flow rate of the hydrocarbon-based fuel supplied to the reformer in the reforming-stoppable state), that is, a case where step B² is performed, will be described using Figures 2-5.

After the start of the shutdown method, step A² is immediately performed, and the measurement of the reforming catalyst layer temperature T, the calculation of FkCALC based on this T, and the comparison of this FkCALC with FkE are performed. FkCALC < FkE (Figure 2-5(c)), and therefore, step C² is not performed, and step B² is performed.

In this case, the temperature of the reforming catalyst layer is increased by an appropriate heat source, such as a burner and a heater annexed to the reformer, until FkCALC ≥ FkE is satisfied, so that the hydrocarbon-based fuel at the flow rate FkE can be reformed, as shown in Figures 2-5. In other words, while FkCALC calculated using T (the reforming catalyst layer temperature measured in step B²2) is smaller than FkE, steps B²1 to B²3 are repeated.

When FkCALC ≥ FkE is satisfied in step B²2, the flow rate Fk of the hydrocarbon-based fuel supplied to the reformer is adjusted from Fk0 to FkE (step B²4). When the reforming method should be changed before and after the start of the shutdown method, the fuel flow rate is adjusted from Fk0 to FkE, and the reforming method is changed. Then, the method goes to step D² (step B²4)_{.}

Step D² and the subsequent steps are similar to those of case 2-1.

### [Regarding "Can Be Reformed"]

"The hydrocarbon-based fuel at a certain flow rate can be reformed (or is capable of being reformed) in the reforming catalyst layer" refers to that when the hydrocarbon-based fuel at this flow rate is supplied to the reforming catalyst layer, the composition of the gas discharged from the reforming catalyst layer becomes a composition suitable to be supplied to the anode of the SOFC.

For example, "can be reformed in the reforming catalyst layer" may be that the supplied hydrocarbon-based fuel can be decomposed to a C1 compound(s) (a compound(s) having a carbon number of 1). In other words, "can be reformed in the reforming catalyst layer" means a case where reforming can proceed in the reforming catalyst layer until a composition is obtained in which a C2+ component(s) (a component(s) having a carbon number of 2 or more) in the gas at the outlet of the reforming catalyst layer has a concentration, which does not cause the problems of anode degradation and flow blockage due to carbon deposition, or less. The concentration of the C2+ component(s) in this case is preferably 50 ppb or less as a mass fraction in the reformed gas. And in this case, it is enough that the gas at the outlet of the reforming catalyst layer is reducing gas. Methane is permitted to be contained in the gas at the outlet of the reforming catalyst layer. In the reforming of the hydrocarbon-based fuel, usually, methane remains in the equilibrium theory. Even if carbon is contained in the gas at the outlet of the reforming catalyst layer in the form of methane, CO, or CO₂, carbon deposition can be prevented by adding steam as required. When methane is used as the hydrocarbon-based fuel, it is enough that reforming proceeds so that the gas at the outlet of the reforming catalyst layer becomes reducing.

With respect to the reducing property of the gas at the outlet of the reforming catalyst layer, it is enough that the property is to the extent that if this gas is supplied to the anode, the oxidative degradation of the anode is suppressed. In order to do this, for example, the partial pressures of oxidizing O₂, H₂O, CO₂, and the like contained in the gas at the outlet of the reforming catalyst layer may be lower than their equilibrium partial pressures of oxidation reactions of the anode electrode. For example, when the anode electrode material is Ni, and the anode temperature is 800°C, the partial pressure of O₂ contained in the gas at the outlet of the reforming catalyst layer may be less than 1.2 × 10⁻¹⁴ atm (1.2 × 10⁻⁹ Pa), the partial pressure ratio of H₂O to H₂ may be less than 1.7 × 10², and the partial pressure ratio of CO₂ to CO may be less than 1.8 × 10².

### [Calculation of FkCALC]

The method for calculating the flow rate of the hydrocarbon-based fuel capable of being reformed in the reforming catalyst layer, based on the measured temperature of the reforming catalyst layer, will be described below.

The meaning of "capable of being reformed (can be reformed)" is as described above, and the flow rate of the hydrocarbon-based fuel capable of being reformed in the reforming catalyst layer (reformable flow rate) refers to a flow rate such that when the hydrocarbon-based fuel at this flow rate is supplied to the reforming catalyst layer, the composition of the gas discharged from the reforming catalyst layer becomes a composition suitable to be supplied to the anode of the SOFC.

For example, the reformable flow rate in the reforming catalyst layer may be any flow rate that is equal to or less than the maximum value of flow rates at which the supplied hydrocarbon-based fuel can be decomposed to a C1 compound(s) (a compound(s) having a carbon number of 1). The reformable flow rate may be this maximum value, or may be a value obtained by dividing this maximum value by a safety factor (a value that exceeds 1, for example 1.4).

The reformable flow rate depends on the temperature of the reforming catalyst layer. Therefore, the calculation of the reformable flow rate in the reforming catalyst layer is performed based on the measured temperature of the reforming catalyst layer.

The reformable flow rate FkCALC in the reforming catalyst layer may be obtained beforehand as a function of the temperature T of the reforming catalyst layer by experiment (FkCALC is represented also as FkCALC(T) to explicitly show that it is a function of temperature). Also, it is possible to determine the reformable flow rate by dividing the function obtained by experiment by a safety factor, or offsetting the temperature to the safe side. The unit of FkCALC(T) is, for example, mol/s.

The reformable flow rate FkCALC(T) may be a function of only the temperature T. But, this is not limiting, and the reformable flow rate FkCALC may be a function having, in addition to the temperature T, a variable other than T, such as the volume of the catalyst layer, the concentration of the gas component, or time. In this case, when the reformable flow rate FkCALC(T) is calculated, it is possible to appropriately obtain a variable other than T, and calculate the reformable flow rate FkCALC(T) from the variable other than T and the measured T.

### [Position for Measurement of Reforming Catalyst Layer Temperature]

A position for the measurement of the reforming catalyst layer temperature will be described in detail below. It is possible to use this measurement position when finding beforehand Tr(j), and TrE and T_{R}(j) used when the values of at least one or more of the steam/carbon ratio, the oxygen/carbon ratio, and the flow rate of the gas not contributing to a reaction, which are set correspondingly to each Fk(j), are different from the values in the reforming-stoppable state, and when measuring the temperature of the reforming catalyst layer in steps A² to C².

### <Case Where There Is One Temperature Measurement Point>

### · Temperature Measurement Position

When there is a single temperature measurement point in the reforming catalyst layer, it is preferred to use preferably a position where the temperature becomes relatively low in the reforming catalyst layer, more preferably a position where the temperature becomes the lowest in the reforming catalyst layer, as the position for the measurement of temperature, in terms of safe side control. When the reaction heat in the reforming catalyst layer is endothermic, the vicinity of the center of the catalyst layer may be selected as the temperature measurement position. When the reaction heat in the reforming catalyst layer is exothermic, and the temperatures of the end positions are lower than that of the center portion due to heat release, an end of the catalyst layer may be selected as the temperature measurement position. A location where the temperature becomes low may be found by preliminary experiment or simulation.

### <Case Where There Are Plurality of Temperature Measurement Points>

The point for the measurement of temperature need not be one. Two or more temperature measurement points are preferred in terms of more accurate control. For example, it is possible to measure the inlet temperature and outlet temperature of the reforming catalyst layer and use their average temperature as the above-described reforming catalyst layer temperature T. However, in a case where the rate of a reaction other than a reaction accompanied by the decrease of the hydrocarbon-based fuel (raw fuel) supplied to the reforming catalyst layer is much faster than that of the reaction accompanied by the decrease of the raw fuel, and it can be considered that components other than the raw fuel instantaneously reach an equilibrium composition, even if there are a plurality of temperature measurement points in the reforming catalyst layer, it is preferred to use the temperature of a point nearest to the outlet of the reforming catalyst layer, among the temperatures measured at the plurality of points, as the temperature to be compared with Tr(j) in step C². When there are a plurality of temperatures of points nearest to the outlet of the reforming catalyst layer, a calculated value, such as the lowest value of them or their average value, may be appropriately used as a representative value.

Alternatively, for example, it is possible to consider regions Zᵢ obtained by dividing the reforming catalyst layer into N (N is an integer of 2 or more, and i is an integer of 1 or more and N or less), find the temperature Tᵢ of each divided region Zᵢ, calculate a reformable flow rate FkCALCi(Ti) in each divided region from each temperature Tᵢ, and calculate a value obtained by summing the reformable flow rates FkCALCᵢ(Tᵢ), as the reformable flow rate FkCALC in the reforming catalyst layer. Also, it is possible to find Tr(j) (= {Tr(j)₁, Tr(j)₂, ..., Tr(j)_{N}}) for each divided region beforehand. In this case, when any of Tᵢ becomes equal to or less than Tr(j)ᵢ, Fk(j) may be increased to Fk(j+1). Alternatively, in a case where the rate of a reaction other than a reaction accompanied by the decrease of the hydrocarbon-based fuel (raw fuel) supplied to the reforming catalyst layer is much faster than that of the reaction accompanied by the decrease of the raw fuel, and it can be considered that components other than the raw fuel instantaneously reach an equilibrium composition, when the temperature of a point nearest to the outlet of the reforming catalyst layer, among Tᵢ, becomes equal to or less than Tr(j), Fk(j) may be increased to Fk(j+1). Also, when the values of at least one or more of the steam/carbon ratio, the oxygen/carbon ratio, and the flow rate of the gas not contributing to a reaction, which are set correspondingly to each Fk(j), are different from values in the operation conditions in the reforming-stoppable state determined beforehand, it is possible to find TrE(j) (= {TrE₁, TrE₂, ..., TrE_{N}}) and T_{R}(j) (= {T_{R1}, T_{R2}, ..., T_{RN}}) for each divided region beforehand.

When N divided regions Zᵢ are considered, reformable flow rates of all divided regions may be summed, or a total of reformable flow rates of only one or some (not all) regions among the N divided regions may be used as the reformable flow rate FkCALC in the reforming catalyst layer. The catalyst layer regions for summation may be appropriately changed according to the feed rate of the hydrocarbon-based fuel. Also, temperatures of all divided regions may be set as the temperature condition, or temperature(s) of one or some (not all) regions among the N divided regions may be set as the temperature condition. The catalyst layer regions for the temperature condition may be appropriately changed according to the feed rate of the hydrocarbon-based fuel.

As the temperature of the divided region Zᵢ, actually measured temperature may be used as it is, but a calculated value, such as the average value of the inlet temperature and outlet temperature of the divided region, may be appropriately used as a representative value.

Also, it is not necessary to measure temperatures for all divided regions Zᵢ. Also, the number of divisions of the catalyst layer, N, and the number of temperature measurement point(s) may be independently set.

It is also possible to measure temperature(s) of one or some (not all) of the N divided regions and find temperature(s) of the remaining divided region(s) by appropriate interpolation from the measured temperature(s).

For example, as a temperature of a divided region where no temperature sensor is installed, a temperature of a divided region nearest to this divided region may be used. When there are two nearest divided regions, a temperature of either of the two divided regions may be used, or the average value of temperatures of the two divided regions may be used.

It is also possible to measure temperatures at a plurality of points in the reforming catalyst layer (at different positions along the gas flow direction), independently of the divided regions, and find a temperature of each divided region from the measured temperatures at the plurality of points. For example, it is possible to measure temperatures of the inlet and outlet of the reforming catalyst layer (a temperature of any position in the middle portion may be further measured), interpolate the temperature of the reforming catalyst layer from these measured temperatures by an approximation method, such as a least squares method, and find temperatures of the divided regions from the interpolation curve.

When reforming catalyst layer temperatures at a plurality of positions are measured in step C²2, the calculation of FkCALC (step C²2), and comparison with Tr(J) may be performed using a temperature at the same position. Alternatively, the calculation of FkCALC, and comparison with Tr(J) may be performed using temperatures at different positions.

### (Examples of Positions for Measurement of Temperature)

In order to find temperatures of all divided regions, temperatures of the following positions may be measured.
· The inlet and outlet of each divided region.
· The interior (one point or a plurality of points) of each divided region (inner side of the inlet and the outlet).
· The inlet, outlet, and interior (one point or a plurality of points for one divided region) of each divided region.

In order to find a temperature of one or some (not all) of the divided regions, temperatures of the following positions may be measured.
· The inlet and outlet of one or some (not all) of the divided regions.
· The interior (one point or a plurality of points) of one or some (not all) of the divided regions (inner side of the inlet and the outlet).
· The inlet, outlet, and interior (one point or a plurality of points for one divided region) of one or some (not all) of the divided regions.

### [Others]

When the flow rate Fk of the hydrocarbon-based fuel is set to FkE, the flow rates of fluids supplied to the indirect internal reforming SOFC, such as the flow rate of water (including steam) for steam reforming or autothermal reforming and the flow rate of air for autothermal reforming or partial oxidation reforming, which are supplied to the reformer, the cathode air flow rate, the flow rates of the fuel and air supplied to the burner, and the flow rates of fluids, such as water and air, supplied to the heat exchanger; and the input and output of electricity to and from the indirect internal reforming SOFC, such as electrical heater output for heating the reformer, the water and liquid fuel evaporators, the cell stack, the fluid supply piping, and the like, and electrical input taken out from the thermoelectric conversion module and the like, are accordingly set, as required, to the operation conditions in the reforming-stoppable state determined beforehand. In other words, the operation conditions of the indirect internal reforming SOFC are set to the operation conditions of the indirect internal reforming SOFC in the reforming-stoppable state determined beforehand.

When Fk is set to a value other than FkE, that is, when the flow rate of the hydrocarbon-based fuel supplied to the reformer is changed in step C²1 and step C²6, the flow rates of fluids supplied to the indirect internal reforming SOFC, and the input and output of electricity to and from the indirect internal reforming SOFC may be accordingly set to operation conditions determined beforehand, as required, as in the above. For example, with respect to the flow rate of water supplied to the reformer, in order to suppress carbon deposition, the water flow rate may be changed with the change of the fuel flow rate, so that a predetermined value of the steam/carbon ratio is maintained. With respect to the flow rate of air supplied to the reformer, the air flow rate may be changed with the change of the fuel flow rate, so that a predetermined value of the oxygen/carbon ratio is maintained. The flow rates of fluids supplied to the indirect internal reforming SOFC, other than the water and air supplied to the reformer, and the input and output of electricity to and from the indirect internal reforming SOFC may be set to the operation conditions in the reforming-stoppable state determined beforehand, or may be set to operation conditions determined beforehand as functions of the fuel flow rate.

When the reforming method is changed, the flow rates of fluids supplied to the indirect internal reforming SOFC, and the input and output of electricity to and from the indirect internal reforming SOFC may be accordingly set to operation conditions determined beforehand, as required, as in the above.
For example, in order to suppress carbon deposition, the flow rate of water supplied to the reformer may be changed to a flow rate at which a steam/carbon ratio determined beforehand is obtained. The flow rate of air supplied to the reformer may be changed to a flow rate at which an oxygen/carbon ratio determined beforehand is obtained. The flow rates of fluids supplied to the indirect internal reforming SOFC, other than the water and air supplied to the reformer, and the input and output of electricity to and from the indirect internal reforming SOFC may be set to the operation conditions in the reforming-stoppable state determined beforehand, or may be set to operation conditions determined beforehand as functions of the fuel flow rate.

When a steam reforming reaction is performed, that is, steam reforming or autothermal reforming is performed, steam is supplied to the reforming catalyst layer. When a partial oxidation reforming reaction is performed, that is, partial oxidation reforming or autothermal reforming is performed, an oxygen-containing gas is supplied to the reforming catalyst layer. As the oxygen-containing gas, a gas containing oxygen may be appropriately used, but in terms of the ease of availability, air is preferred.

The present invention is particularly effective when the hydrocarbon-based fuel has a carbon number of 2 or more, because in the case of such a fuel, particularly, reliable reforming is required.

In order to perform the method of the present invention, appropriate instrumentation and controlling equipment, including a computing means, such as a computer, may be used.

### «Third Embodiment»

Next, the third embodiment of the shutdown method of the present invention will be described.

### [FkE]

The flow rate of the hydrocarbon-based fuel supplied to the reformer (particularly, the reforming catalyst layer) in the reforming-stoppable state is represented as FkE.

FkE may be obtained beforehand by experiment or simulation. FkE may be found by performing an experiment or a simulation, while varying flow rates of fluids supplied to the indirect internal reforming SOFC, such as the flow rate of water (including steam) for steam reforming or autothermal reforming and the flow rate of air for autothermal reforming or partial oxidation reforming, which are supplied to the reformer, a cathode air flow rate, the flow rates of a fuel and air supplied to a burner, and flow rates of fluids, such as water and air, supplied to a heat exchanger; and electrical input and output to and from the indirect internal reforming SOFC, such as electrical heater output for heating the reformer, water and liquid fuel evaporators, the SOFC, fluid supply piping, and the like, and electrical input taken out from a thermoelectric conversion module and the like, that is, varying the operation conditions of the indirect internal reforming SOFC, and searching for FkE that steadily satisfies the conditions i to iv. FkE may be any value as long as the conditions i to iv are satisfied, but in terms of thermal efficiency, the smallest FkE is preferably used. The operation conditions of the indirect internal reforming SOFC, including the FkE, are determined beforehand as operation conditions in the reforming-stoppable state.

### [TrE]

The temperature condition of the reforming catalyst layer included in the above operation conditions in the reforming-stoppable state determined beforehand, is represented as TrE. TrE may be found together with FkE in the process of search for FkE, and TrE is a temperature condition of the reforming catalyst layer that corresponds to the single FkE used.

### [Fk0]

The flow rate of the hydrocarbon-based fuel supplied to the reformer at the point of time of the start of the shutdown method is represented as Fk0.

### [Measurement of Reforming Catalyst Layer Temperature]

In order to determine a flow rate of the hydrocarbon-based fuel supplied to the reforming catalyst layer, the measured value of the reforming catalyst layer temperature is compared with the above TrE. Also, the measured value of the reforming catalyst layer temperature is used for the calculation of FkMinCALC described later. In order to do this, the reforming catalyst layer temperature is measured. For example, the reforming catalyst layer temperature may be monitored (continuously measured).

When the monitoring of the temperature of the reforming catalyst layer has been performed since before the start of the shutdown method, the temperature monitoring may be continuously performed as it has been.

If the anode temperature falls below the oxidative degradation temperature, then the reducing gas becomes unnecessary, and therefore, the supply of the hydrocarbon-based fuel to the reformer can be stopped to complete the shutdown method. Therefore, the monitoring of the temperature of the reforming catalyst layer may be continuously performed until the anode temperature falls below the oxidative degradation temperature.

An appropriate temperature sensor, such as a thermocouple, may be used for the measurement of the reforming catalyst layer temperature.

### [Case Where Reforming Method Is Changed before and after Start of Shutdown Method]

When the reforming method is changed before and after the start of the shutdown method, the above-described FkE, TrE, and FrMin are determined for a reforming-stoppable state, when reforming after the change of the reforming method is performed. Also, FkMinCALC described later is calculated for a case where reforming after the change of the reforming method is performed.

### [Steps Included in Shutdown Method]

While the anode temperature does not fall below the oxidative degradation temperature, the following steps A³ to D³ are performed. When the anode temperature falls below the oxidative degradation temperature, the supply of the hydrocarbon-based fuel to the reformer can be stopped, regardless of the status of the implementation of steps A³ to D³, to complete the shutdown method. It is possible to stop the supply of fluids supplied to the indirect internal reforming SOFC, such as water (including steam) for steam reforming or autothermal reforming and air for autothermal reforming or partial oxidation reforming, which are supplied to the reformer, cathode air, the fuel and air supplied to the burner, and fluids, such as water and air, supplied to the heat exchanger; and the input and output of electricity to and from the indirect internal reforming SOFC, such as electrical heater output for heating the reformer, the water and liquid fuel evaporators, the cell stack, the fluid supply piping, and the like, and electrical input taken out from the thermoelectric conversion module and the like, according to the stop of the supply of the hydrocarbon-based fuel to the reformer.

Figure 3-1 is a flow chart showing steps A³ to D³ in the third embodiment of the shutdown method. Apart from the procedure shown in this flow chart, the anode temperature is monitored, and when the anode temperature falls below the oxidative degradation temperature of the anode, the supply of the hydrocarbon-based fuel to the reformer is stopped, regardless of steps A³ to D³.

The shutdown method includes steps A³ to D³, but it is not necessary to actually perform all of steps A³ to D³, and only part of steps A³ to D³ may be performed according to the circumstances.

### [Step A³]

First, a reforming catalyst layer temperature T is measured. Then, the magnitude relationship between this temperature T and the above-described TrE is checked.

### [Step B³]

When T < TrE in step A³, the following steps B³1 to B³4 are performed in order. "T < TrE" is considered to mean that the hydrocarbon-based fuel at the flow rate FkE cannot be reformed.

### · Step B³1

First, step B³1 is performed. In other words, the step of increasing the temperature of the reforming catalyst layer is performed.

For example, the temperature of the reforming catalyst layer is increased using an appropriate heat source, such as a heater or a burner annexed to the reformer.

### · Step B³2

Then, step B³2 is performed. In other words, the step of measuring the reforming catalyst layer temperature T and comparing the values of this T and TrE is performed.

### · Step B³3

When T < TrE in step B³2, the method returns to step B³1. In other words, while T < TrE, steps B³1 to B³3 are repeatedly performed. During this time, the temperature of the reforming catalyst layer increases.

In performing steps B³2 and B³3, the temperature increase in step B³1 may be stopped once, but while steps B³2 and B³3 are performed, step B³1 may be continued.

### · Step B³4

When T ≥ TrE in step B³2, the step of adjusting the flow rate of the hydrocarbon-based fuel supplied to the reformer (represented as Fk) from Fk0 to FkE and going to step D³ is performed. "T ≥ TrE" is considered to mean that the hydrocarbon-based fuel at a flow rate that is equal to or less than FkE can be reformed.

At this time, in a case where the reforming method should be changed before and after the start of the shutdown method, the fuel flow rate is adjusted from Fk0 to FkE, and the reforming method is changed. By this method, it is possible to prevent the oxidative degradation of the anode with the reformed gas, while reliably reforming the hydrocarbon-based fuel.

### [Step C³]

When T ≥ TrE in step A³, step C³ is performed. "T ≥ TrE" is considered to mean that the hydrocarbon-based fuel at a flow rate that is equal to or less than FkE can be reformed.

### · Step C³1

The reforming catalyst layer temperature is measured, and this measured temperature T is compared with TrE.

### · Step C³2

When T ≤ TrE in step C³1, the flow rate of the hydrocarbon-based fuel supplied to the reformer is set to FkE, and the method goes to step D³.

In a case where the reforming method is changed before and after the start of the shutdown method, and where step C³2 is performed without performing step C³3 even once, that is, when T ≤ TrE in the first-time step C³1, the fuel flow rate is adjusted from Fk0 to FkE, and the reforming method is changed.

### · Step C³3

When T > TrE in step C³1, FkMinCALC is calculated based on this T, and the values of this FkMinCALC and FkE are compared.

Here, the calculated value of the flow rate of the hydrocarbon-based fuel at which the reformed gas at the flow rate FrMin can be produced in the reformer at a measured reforming catalyst layer temperature by a reforming method of a type performed after the start of the shutdown method is represented as FkMinCALC. In other words, FkMinCALC may be obtained by measuring the temperature of the reforming catalyst layer, and calculating the flow rate of the hydrocarbon-based fuel at which the reformed gas at the flow rate FrMin can be produced in the reformer when the reforming catalyst layer has this temperature. At this time, it is assumed that the reforming method of the type performed after the start of the shutdown method is performed in the reforming catalyst layer. The reforming type is, for example, steam reforming, autothermal reforming, or partial oxidation reforming.

Specifically, when a certain type of reforming is performed before the start of the shutdown method, the same type of reforming as this may be performed after the start of the shutdown method. In this case, the flow rate (calculated value) of the hydrocarbon-based fuel at which the reformed gas at the flow rate FrMin can be produced in the reformer, when this type of reforming is performed in the reformer, is FkMinCALC. For example, when steam reforming is performed before the start of the shutdown method, steam reforming may also be continuously performed after the start of the shutdown method, and the flow rate (calculated value) of the hydrocarbon-based fuel at which the reformed gas at the flow rate FrMin can be produced in the reformer at the measured temperature of the reforming catalyst layer when steam reforming is performed in the reformer is FkMinCALC.

Alternatively, when a certain type of reforming (a first type of reforming) is performed before the start of the shutdown method, a different type of reforming from this (a second type of reforming) may be performed after the start of the shutdown method. In this case, the flow rate (calculated value) of the hydrocarbon-based fuel at which the reformed gas at the flow rate FrMin can be produced in the reformer, when the second type of reforming is performed in the reformer, is FkMinCALC. For example, when autothermal reforming is performed before the start of the shutdown method, the reforming may be switched to steam reforming after the start of the shutdown method.
In this case, the flow rate (calculated value) of the hydrocarbon-based fuel at which the reformed gas at the flow rate FrMin can be produced in the reformer at the measured temperature of the reforming catalyst layer when steam reforming is performed is FkMinCALC.

### · Step C³4

When FkMinCALC < FkE in step C³3, the step of setting the flow rate of the hydrocarbon-based fuel supplied to the reformer to FkMinCALC and returning to step C³1 is performed. In other words, when T > TrE in step 12 and FkMinCALC < FkE in step C³3, steps C³1, C³3, and C³4 are repeatedly performed. During this time, the reforming catalyst layer temperature decreases. Therefore, eventually, T ≤ TrE is satisfied.

When the reforming method is changed before and after the start of the shutdown method, the fuel flow rate is adjusted from Fk0 to FkMinCALC, and the reforming method is changed, in the first-time step C³4.

### ·C³5

When FkMinCALC ≥ FkE in step C³3, the step of setting the flow rate of the hydrocarbon-based fuel supplied to the reformer (represented as Fk) to FkE and going to step D³ is performed.

In step C³5, Fk may be immediately set to FkE, or Fk may be gradually set to FkE (see case 3-3 described later).

In a case where the reforming method is changed before and after the start of the shutdown method, and where step C³5 is performed without performing step C³4 even once, that is, when FkMinCALC ≥ FkE in the first-time step C³3, the fuel flow rate is changed from Fk0 to FkE, and the reforming method is changed. When the fuel flow rate is gradually adjusted from Fk0 to FkE via an intermediate flow rate FkM, as in case 3-3 described later, the fuel flow rate is changed from Fk0 to FkM, and the reforming method is changed.

In step C³ and the subsequent steps, from a state in which T ≥ TrE, it is possible to set operation conditions to the operation conditions in the reforming-stoppable state, and bring the internal reforming solid oxide fuel cell to the reform ing-stoppable state, without allowing the unreformed hydrocarbon-based fuel to flow into the anode. But, generally, within a temperature range preferred for reforming, as the reforming catalyst layer temperature T becomes higher, the reformed gas flow rate becomes larger. Therefore, while T ≥ TrE, the reformed gas flow rate is equal to or more than FrMin, and this means that an excessive hydrocarbon-based fuel is supplied.

On the other hand, in step C³ and the subsequent steps, by supplying the hydrocarbon-based fuel at a flow rate as small as possible, among the flow rates of the hydrocarbon-based fuel at which the reformed gas at a flow rate that is equal to or more than FrMin can be produced and which are smaller than FkE, to the reformer, it is possible to make the hydrocarbon-based fuel supplied to the reformer as small as possible, while producing a reformed gas at a flow rate that is equal to or more than FrMin in the reformer. But, if the supply of the hydrocarbon-based fuel at a flow rate as small as possible, among the flow rates of the hydrocarbon-based fuel at which the reformed gas at a flow rate that is equal to or more than FrMin can be produced, is continued, then T < TrE may be satisfied due to the decrease of the reforming catalyst layer temperature, and there may be a case where the hydrocarbon-based fuel at the flow rate as small as possible, among the flow rates of the hydrocarbon-based fuel at which the reformed gas at a flow rate that is equal to or more than FrMin can be produced, cannot be reformed. Further, there may be a case where it is impossible to set operation conditions to the operation conditions in the reforming-stoppable state, and bring the internal reforming solid oxide fuel cell to the reforming-stoppable state, without allowing the unreformed hydrocarbon-based fuel to flow into the anode.

Therefore, when T ≤ TrE is satisfied, by setting operation conditions to the operation conditions in the reforming-stoppable state, it is possible to bring the internal reforming solid oxide fuel cell to the reforming-stoppable state, without allowing the unreformed hydrocarbon-based fuel to flow into the anode.

Also, when T > TrE, by supplying the hydrocarbon-based fuel at a flow rate as small as possible, among the flow rates of the hydrocarbon-based fuel at which the reformed gas at FrMin or more can be produced, to the reformer, it is possible to make the hydrocarbon-based fuel supplied to the reformer as small as possible, while producing a reformed gas at a flow rate that is equal to or more than FrMin in the reformer.

### [Step D³]

In step D³, the method waits for the anode temperature to fall below the oxidative degradation temperature. During this time, the flow rate of the hydrocarbon-based fuel is maintained at FkE, and the flow rates of fluids supplied to the indirect internal reforming SOFC, such as the flow rate of water (including steam) for steam reforming or autothermal reforming and the flow rate of air for autothermal reforming or partial oxidation reforming, which are supplied to the reformer, the cathode air flow rate, the flow rates of the fuel and air supplied to the burner, and the flow rates of fluids, such as water and air, supplied to the heat exchanger; and the input and output of electricity to and from the indirect internal reforming SOFC, such as electrical heater output for heating the reformer, the water and liquid fuel evaporators, the cell stack, the fluid supply piping, and the like, and electrical input taken out from the thermoelectric conversion module and the like, are maintained in the operation conditions in the reforming-stoppable state determined beforehand. In other words, the operation conditions of the indirect internal reforming SOFC are maintained in the operation conditions of the indirect internal reforming SOFC in the reforming-stoppable state determined beforehand. The anode temperature decreases with time, and therefore, eventually, the anode temperature falls below the oxidative degradation temperature. The anode temperature may be appropriately monitored (continuously measured) using a temperature sensor, such as a thermocouple.

The monitoring of the anode temperature is preferably started immediately after the shutdown method is started. If the temperature monitoring has been performed since before the start of the shutdown method, then the temperature monitoring may be continued as it has been, also when the shutdown method is performed.

When the anode temperature falls below the oxidative degradation temperature, the supply of the hydrocarbon-based fuel to the reformer can be stopped to complete the shutdown method.

### [Case 3-1]

One example of the third embodiment will be described using Figures 3-2. In Figures 3-2(a) to (c), the horizontal axis is elapsed time from a point of time when the shutdown method of the present invention is started. In (a) in this figure, the vertical axis is the flow rate of the reformed gas obtained from the reformer, in (b), the vertical axis is temperature, and in (c), the vertical axis is the flow rate of the hydrocarbon fuel (the flow rate Fk of the hydrocarbon-based fuel supplied to the reformer and calculated FkMinCALC) (the same applies to the subsequent figures relating to this embodiment).

The monitoring of the reforming catalyst layer temperature and the monitoring of the anode temperature have been continuously performed since before the point of time of the start of the shutdown method (the same applies to the subsequent cases).

As shown in Figures 3-2, immediately after the shutdown method is started, step A³ is performed. In other words, the reforming catalyst layer temperature T is measured, and this T is compared with TrE.

In this case, T ≥ TrE (Figure 3-2(b)), and therefore, step C³ is performed.

In step C³1, the reforming catalyst layer temperature T is measured, and the values of this T and TrE are compared.

In this case, T > TrE (Figure 3-2 (b)), and therefore, in step C³3, FkMinCALC is calculated based on T measured in step C³1, and the values of FkMinCALC and FkE are compared.

In this case, FkMinCALC < FkE, and therefore, the step of setting the flow rate of the hydrocarbon-based fuel supplied to the reformer to FkMinCALC and returning to step C³1 is performed (step C³4). When the reforming method should be changed before and after the start of the shutdown method, the flow rate of the hydrocarbon-based fuel is adjusted from Fk0 to FkMinCALC, and the reforming method is changed, in the first-time step C³4.

While T > TrE, steps C³1, C³3, and C³4 are repeatedly performed. For a while, steps C³1, C³3, and C³4 are repeated, and during this time, the reforming catalyst layer temperature T decreases with time.

For a period from the point of time of the start of the shutdown method until T ≤ TrE is satisfied, the flow rate of the hydrocarbon-based fuel supplied to the reformer is set to FkMinCALC (Fk = FkMinCALC). Therefore, in Figure 3-2 (c), during this time, a line representing FkMinCALC and a line representing Fk overlap each other.

While T ≥ TrE, the hydrocarbon-based fuel at the flow rate FrMinCALC that is a flow rate equal to or less than FkE can be reformed. Also, by supplying the hydrocarbon-based fuel at FrMinCALC to the reformer, the reformed gas at a flow rate that is equal to or more than FrMin continues to be supplied to the anode.

In the case of Figures 3-2, T becomes equal to or less than TrE before FkMinCALC becomes equal to or more than FkE, and therefore, at a point of time when T becomes equal to or less than TrE, immediately, Fk is set to FkE, and the method goes to step D³ (step C³2).

In step D³, the method waits for the anode temperature to fall below the oxidative degradation temperature.

If the anode temperature becomes less than the oxidative degradation temperature, then the supply of the hydrocarbon-based fuel to the reformer can be stopped to complete the shutdown method.

If the anode temperature falls below the oxidative degradation temperature before T becomes equal to or less than TrE in step C³1, then step C³2 need not be performed.

By operating in this manner, it is possible to supply the reformed gas at the requisite minimum flow rate or more to the anode, while reliably performing reforming.

### [Case 3-2]

In the above case, T becomes equal to or less than TrE before FkMinCALC becomes equal to or more than FkE, and therefore, in step C³2, at a point of time when T becomes equal to or less than TrE, Fk is set to FkE. In this case, FkMinCALC becomes equal to or more than FkE before T becomes equal to or less than TrE, and therefore, in step C³5, at a point of time when FkMinCALC becomes equal to or more than FkE, Fk is set to FkE. This case will be described using Figures 3-3.

Until steps C³1, C³3, and C³4 are repeatedly performed after the shutdown method is started, the operation is similar to that of case 3-1. In other words, after the method goes from step A³ to step C³, and step C³1 is performed, steps C³1, C³3, and C³4 are repeated until a point of time when FkMinCALC ≥ FkE is satisfied. During this time, the reforming catalyst layer temperature decreases with time.

As in Figures 3-2, also in Figures 3-3, until FkMinCALC ≥ FkE is satisfied, a line representing FkMinCALC and a line representing Fk overlap each other. While T ≥ TrE, the hydrocarbon-based fuel at the flow rate FrMinCALC that is a flow rate equal to or less than FkE can be reformed. Also, by supplying the hydrocarbon-based fuel at the flow rate FrMinCALC to the reformer, the reformed gas at a flow rate that is equal to or more than FrMin continues to be supplied to the anode.

At a point of time when FkMinCALC becomes equal to or more than FkE, immediately, Fk is set to FkE, and the method goes to step D³ (step C³5).

Step D³ and the subsequent steps are similar to those of case 3-1.

If the anode temperature falls below the oxidative degradation temperature before FkMinCALC becomes equal to or more than FkE, then step C³5 need not be performed.

By operating in this manner, it is possible to supply the reformed gas at the requisite minimum flow rate or more to the anode, while reliably performing reforming.

### [Case 3-3]

In case 3-1, in step C³2, at a point of time when the reforming catalyst layer temperature T becomes equal to or less than TrE, Fk is immediately set to FkE. In this case, when Fk is smaller than FkE at a point of time when T becomes equal to or less than TrE, the increase in the flow rate from Fk to FkE is performed gradually, particularly, stepwise. This case will be described using Figures 3-4. A procedure for gradually setting Fk to FkE is shown in Figure 3-6 in the form of a flow chart.

Until T ≤ TrE is satisfied, case 3-3 is similar to case 3-1. As in Figures 3-2, also in Figures 3-4, until T ≤ TrE is satisfied, a line representing FkMinCALC and a line representing Fk overlap each other.

As in the case of Figures 3-2, also in the case of Figures 3-4, T becomes equal to or less than TrE before FkMinCALC becomes equal to or more than FkE, and therefore, at a point of time when T ≤ TrE is satisfied, Fk is increased to FkM. Here, FkM is an intermediate flow rate that is larger than FkMinCALC finally calculated in step C³3 and is smaller than FkE.

After Fk is increased to FkM, the measurement of the reforming catalyst layer temperature T, and the comparison of this T with TrE are continued until T ≤ TrE is satisfied again. Immediately after Fk is increased to FkM, the reforming catalyst layer temperature T increases (due to the increase in heat input to the reformer), and T becomes a value that exceeds TrE, again. But, the heat input to the reformer is smaller than in the reforming-stoppable state, and therefore, the reforming catalyst layer temperature subsequently decreases. When T ≤ TrE is satisfied again, Fk is immediately increased to FkE. Then, the method waits until the anode temperature becomes less than the oxidative degradation temperature, and the supply of the hydrocarbon-based fuel to the reformer may be stopped. The comparison of T with TrE may be completed at a point of time when T ≤ TrE is satisfied for the second time.

In the above description, only a single intermediate flow rate is used, but this is not limiting, and a plurality of intermediate flow rates may be used.

In other words, it is possible to use one or a plurality (this number is represented as J^{M}, J^{M} is an integer of 2 or more) of intermediate flow rates FkM(j) (wherein, j is an integer that satisfies 1 ≤ j ≤ J^{M}), where FkM(j) < FkM(j+1), increase Fk to FkM(j) at a point of time when T ≤ TrE is satisfied for the j-th time, while increasing j by 1 at a time, such as increasing Fk to FkM(1) when T ≤ TrE is satisfied for the first time, and increasing Fk to FkM(2) when T ≤ TrE is satisfied for the second time, and set Fk to FkE when T ≤ TrE is satisfied for the last time (J^{M} + 1-th time). Then, the method waits until the anode temperature becomes less than the oxidative degradation temperature, and the supply of the hydrocarbon-based fuel to the reformer may be stopped. The comparison of T with TrE may be completed at a point of time when T ≤ TrE is satisfied for the last time. The intermediate flow rates FkM(j) may be determined, for example, by calculating a flow rate obtained by equally dividing the difference between FkMinCALC when T ≤ TrE is satisfied for the first time and FkE by J^{M} + 1. However, it is preferred to make J^{M} as large as possible and make the interval between FkM(j) small, within the allowable range of the memory consumption of a flow rate controlling means, and within a range in which the interval exceeds the precision of a pressure increasing means and flow rate controlling and measuring means, in terms of the reduction of the integrated value of the flow rates of the hydrocarbon-based fuel, that is, thermal efficiency.

Of course, also in this case, if the anode temperature falls below the oxidative degradation temperature, then the supply of the hydrocarbon-based fuel to the reformer can be stopped at this point of time to complete the shutdown method.

In case 3-3, it is possible to reduce the amount of the hydrocarbon-based fuel supplied until the stop of reforming and shorten shutdown time (time from the start of the shutdown method until the anode temperature falls below the oxidative degradation temperature) compared with case 3-1.

### [Case 3-4]

A case where T < TrE in step A³, that is, a case where step B³ is performed, will be described using Figures 3-5.

After the start of the shutdown method, step A³ is immediately performed, and the measurement of the reforming catalyst layer temperature T, and the comparison of this T with TrE are performed. T < TrE (Figure 3-5(b)), and therefore, step C³ is not performed, and step B³ is performed.

In this case, the temperature of the reforming catalyst layer is increased by an appropriate heat source, such as a burner and a heater annexed to the reformer, until the reforming catalyst layer temperature becomes equal to or more than TrE, so that the hydrocarbon-based fuel at the flow rate FkE can be reformed, as shown in Figures 3-5. In other words, while T (the reforming catalyst layer temperature measured in step B³2) < TrE, steps B³1 to B³3 are repeated.

When T ≥ TrE is satisfied in step B³2, the flow rate Fk of the hydrocarbon-based fuel supplied to the reformer is adjusted from Fk0 to FkE (step B³4). When the reforming method should be changed before and after the start of the shutdown method, the fuel flow rate is adjusted from Fk0 to FkE, and the reforming method is changed. Then, the method goes to step D³ (step B³4).

Step D³ and the subsequent steps are similar to those of case 3-1.

### [Regarding "Can Be Reformed"]

"The hydrocarbon-based fuel at a certain flow rate can be reformed (or is capable of being reformed) in the reforming catalyst layer" refers to that when the hydrocarbon-based fuel at this flow rate is supplied to the reforming catalyst layer, the composition of the gas discharged from the reforming catalyst layer becomes a composition suitable to be supplied to the anode of the SOFC.

For example, "can be reformed in the reforming catalyst layer" may be that the supplied hydrocarbon-based fuel can be decomposed to a C1 compound(s) (a compound(s) having a carbon number of 1). In other words, "can be reformed in the reforming catalyst layer" means a case where reforming can proceed in the reforming catalyst layer until a composition is obtained in which a C2+ component(s) (a component(s) having a carbon number of 2 or more) in the gas at the outlet of the reforming catalyst layer has a concentration, which does not cause the problems of anode degradation and flow blockage due to carbon deposition, or less. The concentration of the C2+ component(s) in this case is preferably 50 ppb or less as a mass fraction in the reformed gas. And in this case, it is enough that the gas at the outlet of the reforming catalyst layer is reducing gas. Methane is permitted to be contained in the gas at the outlet of the reforming catalyst layer. In the reforming of the hydrocarbon-based fuel, usually, methane remains in the equilibrium theory. Even if carbon is contained in the gas at the outlet of the reforming catalyst layer in the form of methane, CO, or CO₂, carbon deposition can be prevented by adding steam as required. When methane is used as the hydrocarbon-based fuel, it is enough that reforming proceeds so that the gas at the outlet of the reforming catalyst layer becomes reducing.

With respect to the reducing property of the gas at the outlet of the reforming catalyst layer, it is enough that the property is to the extent that if this gas is supplied to the anode, the oxidative degradation of the anode is suppressed. In order to do this, for example, the partial pressures of oxidizing O₂, H₂O, CO₂, and the like contained in the gas at the outlet of the reforming catalyst layer may be lower than their equilibrium partial pressures of oxidation reactions of the anode electrode. For example, when the anode electrode material is Ni, and the anode temperature is 800°C, the partial pressure of O₂ contained in the gas at the outlet of the reforming catalyst layer may be less than 1.2 × 10⁻¹⁴ atm (1.2 × 10⁻⁹ Pa), the partial pressure ratio of H₂O to H₂ may be less than 1.7 × 10², and the partial pressure ratio of CO₂ to CO may be less than 1.8 × 10².

### [Position for Measurement of Reforming Catalyst Layer Temperature]

A position for the measurement of the reforming catalyst layer temperature will be described in detail below. This measurement position may be used when TrE is found beforehand, and when the temperature of the reforming catalyst layer is measured in steps A³ to C³.

### <Case Where There Is One Temperature Measurement Point>

### · Temperature Measurement Position

When there is a single temperature measurement point in the reforming catalyst layer, it is preferred to use preferably a position where the temperature becomes relatively low in the reforming catalyst layer, more preferably a position where the temperature becomes the lowest in the reforming catalyst layer, as the position for the measurement of temperature, in terms of safe side control. When the reaction heat in the reforming catalyst layer is endothermic, the vicinity of the center of the catalyst layer may be selected as the temperature measurement position. When the reaction heat in the reforming catalyst layer is exothermic, and the temperatures of the end positions are lower than that of the center portion due to heat release, an end of the catalyst layer may be selected as the temperature measurement position. A location where the temperature becomes low may be found by preliminary experiment or simulation.

### <Case Where There Are Plurality of Temperature Measurement Points>

The point for the measurement of temperature need not be one. Two or more temperature measurement points are preferred in terms of more accurate control. For example, it is possible to measure the inlet temperature and outlet temperature of the reforming catalyst layer and use their average temperature as the above-described reforming catalyst layer temperature T. However, in a case where the rate of a reaction other than a reaction accompanied by the decrease of the hydrocarbon-based fuel (raw fuel) supplied to the reforming catalyst layer is much faster than that of the reaction accompanied by the decrease of the raw fuel, and it can be considered that components other than the raw fuel instantaneously reach an equilibrium composition, even if there are a plurality of temperature measurement points in the reforming catalyst layer, it is preferred to use the temperature of a point nearest to the outlet of the reforming catalyst layer, among the temperatures measured at the plurality of points, as the temperature used for calculating FkMinCALC in step C³. When there are a plurality of temperatures of points nearest to the outlet of the reforming catalyst layer, a calculated value, such as the lowest value of them or their average value, may be appropriately used as a representative value.

Alternatively, for example, it is possible to consider regions Zᵢ obtained by dividing the reforming catalyst layer into N (N is an integer of 2 or more, and i is an integer of 1 or more and N or less), find the temperature Tᵢ of each divided region Zᵢ, and find TrE(j) (= {TrE₁, TrE₂, ..., TrE_{N}}) for each divided region beforehand. In this case, when any of Tᵢ becomes equal to or less than TrEᵢ, the flow rate of the hydrocarbon-based fuel may be set to FkE.

When N divided regions Zᵢ are considered, temperatures of all divided regions may be set as the temperature condition, or temperature(s) of one or some (not all) regions among the N divided regions may be set as the temperature condition. The catalyst layer regions for the temperature condition may be appropriately changed according to the feed rate of the hydrocarbon-based fuel. FkMinCALC may be calculated for all divided regions, or a value(s) calculated for only one or some (not all) regions among the N divided regions may be used as FkMinCALC. The catalyst layer regions for the calculation may be appropriately changed according to the feed rate of the hydrocarbon-based fuel.

As the temperature of the divided region Zᵢ, actually measured temperature may be used as it is, but a calculated value, such as the average value of the inlet temperature and outlet temperature of the divided region, may be appropriately used as a representative value.

Also, it is not necessary to measure temperatures for all divided regions Zᵢ. Also, the number of divisions of the catalyst layer, N, and the number of temperature measurement point(s) may be independently set.

It is also possible to measure temperature(s) of one or some (not all) of the N divided regions and find temperature(s) of the remaining divided region(s) by appropriate interpolation from the measured temperature(s).

For example, as a temperature of a divided region where no temperature sensor is installed, a temperature of a divided region nearest to this divided region may be used. When there are two nearest divided regions, a temperature of either of the two divided regions may be used, or the average value of temperatures of the two divided regions may be used.

It is also possible to measure temperatures at a plurality of points in the reforming catalyst layer (at different positions along the gas flow direction), independently of the divided regions, and find a temperature of each divided region from the measured temperatures at the plurality of points. For example, it is possible to measure temperatures of the inlet and outlet of the reforming catalyst layer (a temperature of any position in the middle portion may be further measured), interpolate the temperature of the reforming catalyst layer from these measured temperatures by an approximation method, such as a least squares method, and find temperatures of the divided regions from the interpolation curve.

When reforming catalyst layer temperatures at a plurality of positions are measured in step C³1, comparison with TrE, and the calculation of FkMinCALC (step C³3) may be performed using a temperature at the same position. Alternatively, comparison with TrE, and the calculation of FkMinCALC may be performed using temperatures at different positions.

### (Examples of Positions for Measurement of Temperature)

In order to find temperatures of all divided regions, temperatures of the following positions may be measured.
· The inlet and outlet of each divided region.
· The interior (one point or a plurality of points) of each divided region (inner side of the inlet and the outlet).
· The inlet, outlet, and interior (one point or a plurality of points for one divided region) of each divided region.

In order to find a temperature of one or some (not all) of the divided regions, temperatures of the following positions may be measured.
· The inlet and outlet of one or some (not all) of the divided regions.
· The interior (one point or a plurality of points) of one or some (not all) of the divided regions (inner side of the inlet and the outlet).
· The inlet, outlet, and interior (one point or a plurality of points for one divided region) of one or some (not all) of the divided regions.

### [Calculation of FkMinCALC]

The method for calculating the flow rate FkMinCALC of the hydrocarbon-based fuel at which the reformed gas at the flow rate FrMin can be produced in the reformer in the reforming catalyst layer, based on the measured temperature of the reforming catalyst layer, will be described below.

The flow rate of the hydrocarbon-based fuel at which the reformed gas at the flow rate FrMin can be produced in the reformer may be any flow rate that is equal to or more than a flow rate at which the flow rate of the reformed gas is exactly FrMin. The flow rate of the hydrocarbon-based fuel at which the reformed gas at the flow rate FrMin can be produced in the reformer may be the flow rate of the hydrocarbon-based fuel at which the reformed gas at a flow rate that is exactly FrMin can be produced in the reformer, or may be a value obtained by multiplying this flow rate by a safety factor (a value that exceeds 1, for example 1.4).

FkMinCALC depends on the temperature of the reforming catalyst layer. Therefore, FkMinCALC is performed based on the measured temperature of the reforming catalyst layer.

FkMinCALC may be calculated by finding a relation equation between the temperature of the reforming catalyst layer and FkMinCALC beforehand by equilibrium calculation or preliminary experiment, and substituting the measured temperature T of the reforming catalyst layer into this relation equation. Also, it is possible to determine FkMinCALC by multiplying the function obtained by experiment by a safety factor, or offsetting the temperature to the safe side. The unit of FkMinCALC is, for example, mol/s.

FkMinCALC may be a function of only the temperature T. But, this is not limiting, and FkMinCALC may be a function having, in addition to the temperature T, a variable other than T, such as pressure, the concentration of the gas component, or time. In this case, when FkMinCALC is calculated, it is possible to appropriately obtain a variable other than T, and calculate FkMinCALC from the variable other than T and the measured T.

The outlet of the reforming catalyst layer is preferred as the position for the measurement of the temperature used for the calculation of FkMinCALC, in terms of accuracy.

### [Others]

When the flow rate Fk of the hydrocarbon-based fuel is set to FkE, the flow rates of fluids supplied to the indirect internal reforming SOFC, such as the flow rate of water (including steam) for steam reforming or autothermal reforming and the flow rate of air for autothermal reforming or partial oxidation reforming, which are supplied to the reformer, the cathode air flow rate, the flow rates of the fuel and air supplied to the burner, and the flow rates of fluids, such as water and air, supplied to the heat exchanger; and the input and output of electricity to and from the indirect internal reforming SOFC, such as electrical heater output for heating the reformer, the water and liquid fuel evaporators, the cell stack, the fluid supply piping, and the like, and electrical input taken out from the thermoelectric conversion module and the like, are accordingly set, as required, to the operation conditions in the reforming-stoppable state determined beforehand. In other words, the operation conditions of the indirect internal reforming SOFC are set to the operation conditions of the indirect internal reforming SOFC in the reforming-stoppable state determined beforehand.

When Fk is set to a value other than FkE, that is, when the flow rate of the hydrocarbon-based fuel supplied to the reformer is changed in step C³4 and the like, the flow rates of fluids supplied to the indirect internal reforming SOFC, and the input and output of electricity to and from the indirect internal reforming SOFC may be accordingly set to operation conditions determined beforehand, as required, as in the above. For example, with respect to the flow rate of water supplied to the reformer, in order to suppress carbon deposition, the water flow rate may be decreased with the decrease of the fuel flow rate, so that a predetermined value of the steam/carbon ratio is maintained. With respect to the flow rate of air supplied to the reformer, the air flow rate may be decreased with the decrease of the fuel flow rate, so that a predetermined value of the oxygen/carbon ratio is maintained. The flow rates of fluids supplied to the indirect internal reforming SOFC, other than the water and air supplied to the reformer, and the input and output of electricity to and from the indirect internal reforming SOFC may be set to the operation conditions in the reforming-stoppable state determined beforehand, or may be set to operation conditions determined beforehand as functions of the fuel flow rate.

When the reforming method is changed, the flow rates of fluids supplied to the indirect internal reforming SOFC, and the input and output of electricity to and from the indirect internal reforming SOFC may be accordingly set to operation conditions determined beforehand, as required, as in the above.
For example, in order to suppress carbon deposition, the flow rate of water supplied to the reformer may be changed to a flow rate at which a steam/carbon ratio determined beforehand is obtained. The flow rate of air supplied to the reformer may be changed to a flow rate at which an oxygen/carbon ratio determined beforehand is obtained. The flow rates of fluids supplied to the indirect internal reforming SOFC, other than the water and air supplied to the reformer, and the input and output of electricity to and from the indirect internal reforming SOFC may be set to the operation conditions in the reforming-stoppable state determined beforehand, or may be set to operation conditions determined beforehand as functions of the fuel flow rate.

When a steam reforming reaction is performed, that is, steam reforming or autothermal reforming is performed, steam is supplied to the reforming catalyst layer. When a partial oxidation reforming reaction is performed, that is, partial oxidation reforming or autothermal reforming is performed, an oxygen-containing gas is supplied to the reforming catalyst layer. As the oxygen-containing gas, a gas containing oxygen may be appropriately used, but in terms of the ease of availability, air is preferred.

The present invention is particularly effective when the hydrocarbon-based fuel has a carbon number of 2 or more, because in the case of such a fuel, particularly, reliable reforming is required.

In order to perform the method of the present invention, appropriate instrumentation and controlling equipment, including a computing means, such as a computer, may be used.

### «Fourth Embodiment»

Next, the fourth embodiment of the shutdown method of the present invention will be described.

### [FkE]

The flow rate of the hydrocarbon-based fuel supplied to the reformer (particularly, the reforming catalyst layer) in the reforming-stoppable state is represented as FkE.

FkE may be obtained beforehand by experiment or simulation. FkE may be found by performing an experiment or a simulation, while varying flow rates of fluids supplied to the indirect internal reforming SOFC, such as the flow rate of water (including steam) for steam reforming or autothermal reforming and the flow rate of air for autothermal reforming or partial oxidation reforming, which are supplied to the reformer, a cathode air flow rate, the flow rates of a fuel and air supplied to a burner, and flow rates of fluids, such as water and air, supplied to a heat exchanger; and electrical input and output to and from the indirect internal reforming SOFC, such as electrical heater output for heating the reformer, water and liquid fuel evaporators, the SOFC, fluid supply piping, and the like, and electrical input taken out from a thermoelectric conversion module and the like, that is, varying the operation conditions of the indirect internal reforming SOFC, and searching for FkE that steadily satisfies the conditions i to iv. FkE may be any value as long as the conditions i to iv are satisfied, but in terms of thermal efficiency, the smallest FkE is preferably used. The operation conditions of the indirect internal reforming SOFC, including the FkE, are determined beforehand as operation conditions in the reforming-stoppable state.

### [Fk0]

The flow rate of the hydrocarbon-based fuel supplied to the reformer at the point of time of the start of the shutdown method is represented as Fk0.

### [FkCALC]

The calculated value of the flow rate of the hydrocarbon-based fuel capable of being reformed at a measured reforming catalyst layer temperature by a reforming method of a type performed after the start of the shutdown method (this flow rate is hereinafter sometimes referred to as a "reformable flow rate") is represented as FkCALC. In other words, FkCALC may be obtained by measuring the temperature of the reforming catalyst layer, and calculating the flow rate of the hydrocarbon-based fuel capable of being reformed in the reforming catalyst layer when the reforming catalyst layer has this temperature. At this time, it is assumed that the reforming method of the type performed after the start of the shutdown method is performed in the reforming catalyst layer (the type of the reforming method is hereinafter sometimes referred to as a reforming type). The reforming type is, for example, steam reforming, autothermal reforming, or partial oxidation reforming.

Specifically, when a certain type of reforming is performed before the start of the shutdown method, the same type of reforming as this may be performed after the start of the shutdown method. In this case, the flow rate (calculated value) of the hydrocarbon-based fuel capable of being reformed, when this type of reforming is performed in the reformer, is FkCALC. For example, when steam reforming is performed before the start of the shutdown method, steam reforming may also be continuously performed after the start of the shutdown method, and the flow rate of the hydrocarbon-based fuel capable of being reformed at the measured temperature of the reforming catalyst layer when steam reforming is performed in the reformer is FkCALC.

Alternatively, when a certain type of reforming (a first type of reforming) is performed before the start of the shutdown method, a different type of reforming from this (a second type of reforming) may be performed after the start of the shutdown method. In this case, the flow rate of the hydrocarbon-based fuel capable of being reformed, when the second type of reforming is performed in the reformer, is FkCALC. For example, when autothermal reforming is performed before the start of the shutdown method, the reforming may be switched to steam reforming after the start of the shutdown method. In this case, the flow rate (calculated value) of the hydrocarbon-based fuel capable of being reformed at the measured temperature of the reforming catalyst layer when steam reforming is performed is FkCALC.

### [Measurement of Reforming Catalyst Layer Temperature]

A measured value of the reforming catalyst layer temperature is used for the calculation of FkCALC. In order to do this, the reforming catalyst layer temperature is measured. For example, the reforming catalyst layer temperature may be monitored (continuously measured).

When the monitoring of the temperature of the reforming catalyst layer has been performed since before the start of the shutdown method, the temperature monitoring may be continuously performed as it has been.

When the anode temperature falls below the oxidative degradation temperature, the reducing gas becomes unnecessary, and therefore, the supply of the hydrocarbon-based fuel to the reformer can be stopped to complete the shutdown method. Therefore, the monitoring of the temperature of the reforming catalyst layer may be continuously performed until the anode temperature falls below the oxidative degradation temperature.

An appropriate temperature sensor, such as a thermocouple, may be used for the measurement of the reforming catalyst layer temperature.

### [Case Where Reforming Method Is Changed before and after Start of Shutdown Method]

When the reforming method is changed before and after the start of the shutdown method, the above-described FkE and FrMin are determined for a reforming-stoppable state, when reforming after the change of the reforming method is performed.

### [Steps Included in Shutdown Method]

While the anode temperature does not fall below the oxidative degradation temperature, the following steps A⁴ to D⁴ are performed. When the anode temperature falls below the oxidative degradation temperature, the supply of the hydrocarbon-based fuel to the reformer can be stopped, regardless of the status of the implementation of steps A⁴ to D⁴, to complete the shutdown method. It is possible to stop the supply of fluids supplied to the indirect internal reforming SOFC, such as water (including steam) for steam reforming or autothermal reforming and air for autothermal reforming or partial oxidation reforming, which are supplied to the reformer, cathode air, the fuel and air supplied to the burner, and fluids, such as water and air, supplied to the heat exchanger; and the input and output of electricity to and from the indirect internal reforming SOFC, such as electrical heater output for heating the reformer, the water and liquid fuel evaporators, the cell stack, the fluid supply piping, and the like, and electrical input taken out from the thermoelectric conversion module and the like, according to the stop of the supply of the hydrocarbon-based fuel to the reformer.

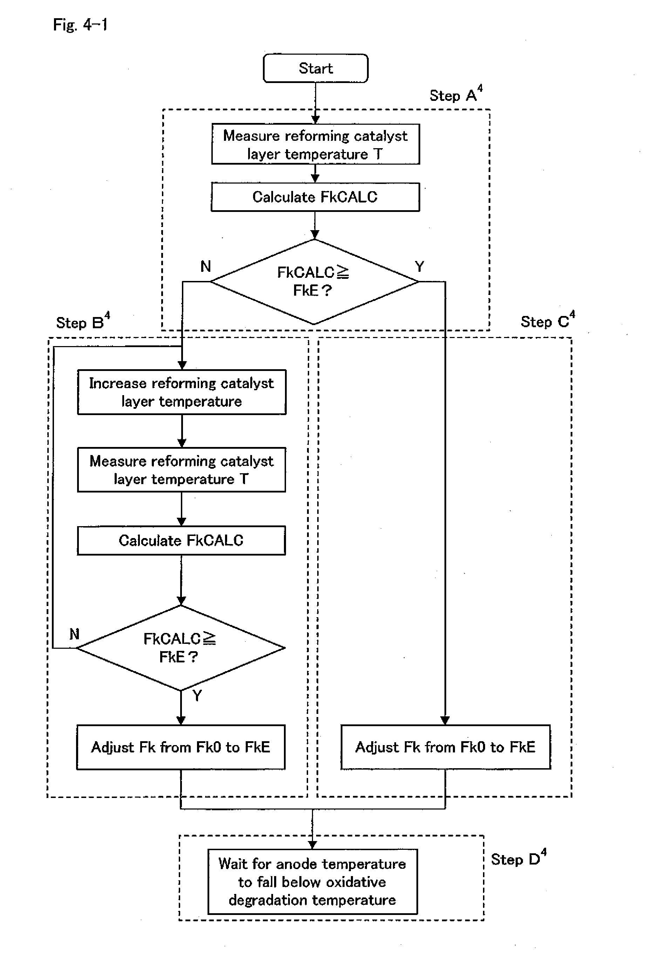

Figure 4-1 is a flow chart showing steps A⁴ to D⁴ in the fourth embodiment of the shutdown method. Apart from the procedure shown in this flow chart, the anode temperature is monitored, and when the anode temperature falls below the oxidative degradation temperature of the anode, the supply of the hydrocarbon-based fuel to the reformer is stopped, regardless of steps A⁴ to D⁴.

The shutdown method includes steps A⁴ to D⁴, but it is not necessary to actually perform all of steps A⁴ to D⁴, and only part of steps A⁴ to D⁴ may be performed according to the circumstances.

### [Step A⁴]

First, a reforming catalyst layer temperature T is measured. Then, a reformable flow rate FkCALC is calculated based on this temperature T. Further, the magnitude relationship between the flow rate FkE of the hydrocarbon-based fuel supplied to the reformer in the above-described reforming-stoppable state and this FkCALC is checked.

### [Step B⁴]

When FkCALC < FkE in step A⁴, the following steps B⁴1 to B⁴4 are performed in order. "FkCALC < FkE" is considered to mean that the hydrocarbon-based fuel at the flow rate FkE cannot be reformed in the reformer (by a reforming type after change, if the reforming type is changed).

### · step B⁴1

First, step B⁴1 is performed. In other words, the step of increasing the temperature of the reforming catalyst layer is performed.

For example, the temperature of the reforming catalyst layer is increased using an appropriate heat source, such as a heater or a burner annexed to the reformer.

### · step B⁴2

Then, step B⁴2 is performed. In other words, the step of measuring the reforming catalyst layer temperature T, calculating FkCALC using this T, and comparing the values of this FkCALC and FkE is performed.

### · step B⁴3

When FkCALC < FkE in step B⁴2, the step of returning to step B⁴1 is performed. In other words, while FkCALC < FkE, steps B⁴1 to B⁴3 are repeatedly performed. During this time, the temperature of the reforming catalyst layer increases.

In performing steps B⁴2 and B⁴3, the temperature increase in step B⁴1 may be stopped once, but while steps B⁴2 and B⁴3 are performed, step B⁴1 may be continued.

### · Step B⁴4

When FkCALC ≥ FkE in step B⁴2, the step of adjusting the flow rate of the hydrocarbon-based fuel supplied to the reformer (represented as Fk) from Fk0 to FkE and going to step D⁴ is performed. "FkCALC ≥ FkE" is considered to mean that the hydrocarbon-based fuel at the flow rate FkE can be reformed in the reforming catalyst layer (by a reforming type after change, if the reforming type is changed).

At this time, in a case where the reforming type should be changed before and after the start of the shutdown method, the fuel flow rate is adjusted from Fk0 to FkE, and the reforming type is changed. By this method, it is possible to prevent the oxidative degradation of the anode with the reformed gas, while reliably reforming the hydrocarbon-based fuel.

### [Step C⁴]

When FkCALC ≥ FkE in step A⁴, the flow rate of the hydrocarbon-based fuel supplied to the reformer is adjusted from Fk0 to FkE, and the method goes to step D⁴.

At this time, in a case where the reforming type should be changed before and after the start of the shutdown method, the fuel flow rate is adjusted from Fk0 to FkE, and the reforming type is changed. By this method, it is possible to prevent the oxidative degradation of the anode with the reformed gas, while reliably reforming the hydrocarbon-based fuel.

### [Step D⁴]

In step D⁴, the method waits for the anode temperature to fall below the oxidative degradation temperature. During this time, the flow rate of the hydrocarbon-based fuel is maintained at FkE, and the flow rates of fluids supplied to the indirect internal reforming SOFC, such as the flow rate of water (including steam) for steam reforming or autothermal reforming and the flow rate of air for autothermal reforming or partial oxidation reforming, which are supplied to the reformer, the cathode air flow rate, the flow rates of the fuel and air supplied to the burner, and the flow rates of fluids, such as water and air, supplied to the heat exchanger; and the input and output of electricity to and from the indirect internal reforming SOFC, such as electrical heater output for heating the reformer, the water and liquid fuel evaporators, the cell stack, the fluid supply piping, and the like, and electrical input taken out from the thermoelectric conversion module and the like, are maintained in the operation conditions in the reforming-stoppable state determined beforehand. In other words, the operation conditions of the indirect internal reforming SOFC are maintained in the operation conditions of the indirect internal reforming SOFC in the reforming-stoppable state determined beforehand. The anode temperature decreases with time, and therefore, eventually, the anode temperature falls below the oxidative degradation temperature. The anode temperature may be appropriately monitored (continuously measured) using a temperature sensor, such as a thermocouple.

The monitoring of the anode temperature is preferably started immediately after the shutdown method is started. If the temperature monitoring has been performed since before the start of the shutdown method, then the temperature monitoring may be continued as it has been also when the shutdown method is performed.

When the anode temperature falls below the oxidative degradation temperature, the supply of the hydrocarbon-based fuel to the reformer can be stopped to complete the shutdown method.

### [Case 4-1]

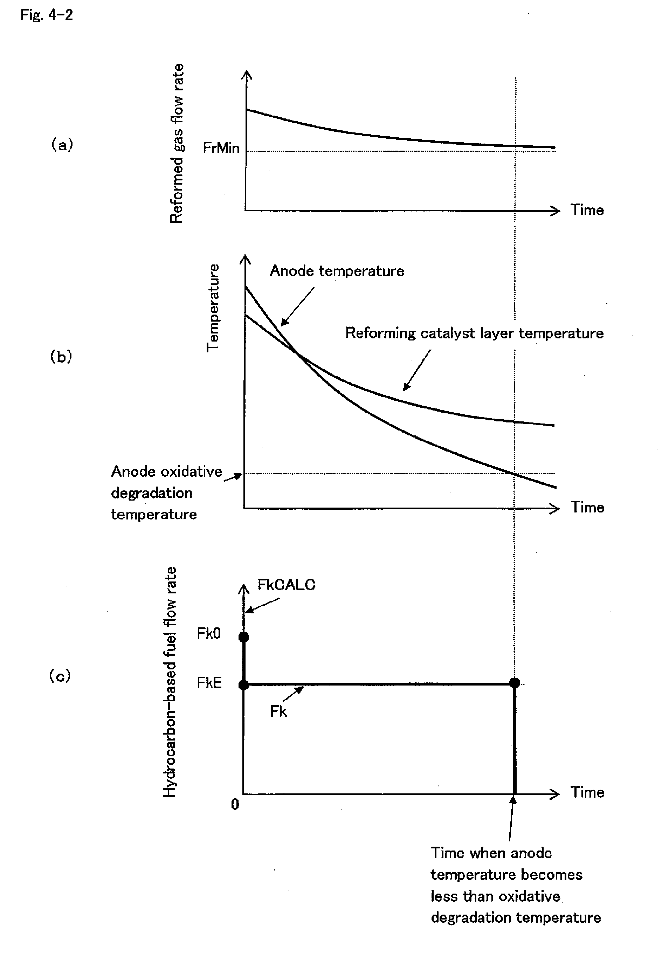

A case where FkCALC calculated in step A⁴ is equal to or more than the flow rate FkE of the hydrocarbon-based fuel supplied to the reformer in the reforming-stoppable state, that is, the case of FkCALC ≥ FkE, will be described using Figures 4-2. In other words, a case where step C⁴ is performed will be described.

In Figures 4-2(a) to (c), the horizontal axis is elapsed time from a point of time when the shutdown method of the present invention is started. In (a) in this figure, the vertical axis is the flow rate of the reformed gas obtained from the reformer, in (b), the vertical axis is temperature, and in (c), the vertical axis is the flow rate of the hydrocarbon fuel (the same applies to the subsequent figures relating to this embodiment).

The monitoring of the reforming catalyst layer temperature and the monitoring of the anode temperature have been continuously performed since before the point of time of the start of the shutdown method (the same applies to the subsequent cases).

Immediately after the shutdown method is started, step A⁴ is performed. In other words, the reforming catalyst layer temperature T is measured, the reformable flow rate FkCALC is calculated using this T, and the values of this FkCALC and FkE are compared.

In this case, FkCALC ≥ FkE (Figure 4-2 (c)), and therefore, step B⁴ is not performed, and step C⁴ is performed, and Fk is adjusted from Fk0 to FkE.

Then, the method goes to step D⁴, and waits until the anode temperature falls below the oxidative degradation temperature.

If the anode temperature becomes less than the oxidative degradation temperature, then the supply of the hydrocarbon-based fuel to the reformer can be stopped to complete the shutdown method.

By operating in this manner, it is possible to supply the reformed gas at the requisite minimum flow rate or more to the anode, while reliably performing reforming.

### [Case 4-2]

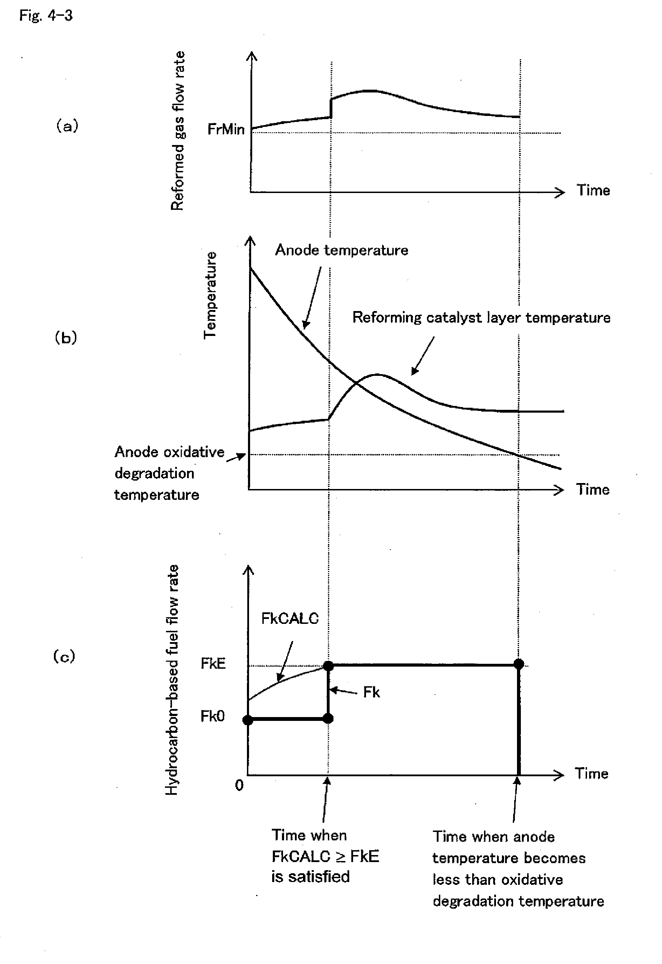

A case where FkCALC calculated in step A⁴ is smaller than the flow rate FkE of the hydrocarbon-based fuel supplied to the reformer in the reforming-stoppable state, that is, the case of FkCALC < FkE, will be described using Figures 4-3. In other words, a case where step B⁴ is performed will be described.

After the start of the shutdown method, step A⁴ is immediately performed, and the measurement of the reforming catalyst layer temperature T, the calculation of FkCALC based on this T, and the comparison of this FkCALC with FkE are performed. FkCALC < FkE (Figure 4-3(c)), and therefore, step C⁴ is not performed, and step B⁴ is performed.

In this case, the temperature of the reforming catalyst layer is increased by an appropriate heat source, such as a burner and a heater annexed to the reformer, until FkCALC ≥ FkE is satisfied, so that the hydrocarbon-based fuel at the flow rate FkE can be reformed, as shown in Figures 4-3. In other words, while FkCALC calculated using T (the reforming catalyst layer temperature measured in step B⁴2) is smaller than FkE, steps B⁴1 to B⁴3 are repeated.

When FkCALC ≥ FkE is satisfied in step B⁴2, the flow rate Fk of the hydrocarbon-based fuel supplied to the reformer is adjusted from Fk0 to FkE (step B⁴4). When the reforming method should be changed before and after the start of the shutdown method, the fuel flow rate is adjusted from Fk0 to FkE, and the reforming method is changed. Then, the method goes to step D⁴ (step B⁴4)_{.}

Step D⁴ and the subsequent steps are similar to those of case 4-1.

In this embodiment, control is simple, and a program when control by the program is performed is also simple.

### [Regarding "Can Be Reformed"]

"The hydrocarbon-based fuel at a certain flow rate can be reformed (or is capable of being reformed) in the reforming catalyst layer" refers to that when the hydrocarbon-based fuel at this flow rate is supplied to the reforming catalyst layer, the composition of the gas discharged from the reforming catalyst layer becomes a composition suitable to be supplied to the anode of the SOFC.

For example, "can be reformed in the reforming catalyst layer" may be that the supplied hydrocarbon-based fuel can be decomposed to a C1 compound(s) (a compound(s) having a carbon number of 1). In other words, "can be reformed in the reforming catalyst layer" means a case where reforming can proceed in the reforming catalyst layer until a composition is obtained in which a C2+ component(s) (a component(s) having a carbon number of 2 or more) in the gas at the outlet of the reforming catalyst layer has a concentration, which does not cause the problems of anode degradation and flow blockage due to carbon deposition, or less. The concentration of the C2+ component(s) in this case is preferably 50 ppb or less as a mass fraction in the reformed gas. And in this case, it is enough that the gas at the outlet of the reforming catalyst layer is reducing gas. Methane is permitted to be contained in the gas at the outlet of the reforming catalyst layer. In the reforming of the hydrocarbon-based fuel, usually, methane remains in the equilibrium theory. Even if carbon is contained in the gas at the outlet of the reforming catalyst layer in the form of methane, CO, or CO₂, carbon deposition can be prevented by adding steam as required. When methane is used as the hydrocarbon-based fuel, it is enough that reforming proceeds so that the gas at the outlet of the reforming catalyst layer becomes reducing.

With respect to the reducing property of the gas at the outlet of the reforming catalyst layer, it is enough that the property is to the extent that if this gas is supplied to the anode, the oxidative degradation of the anode is suppressed. In order to do this, for example, the partial pressures of oxidizing O₂, H₂O, CO₂, and the like contained in the gas at the outlet of the reforming catalyst layer may be lower than their equilibrium partial pressures of oxidation reactions of the anode electrode. For example, when the anode electrode material is Ni, and the anode temperature is 800°C, the partial pressure of O₂ contained in the gas at the outlet of the reforming catalyst layer may be less than 1.2 × 10⁻¹⁴ atm (1.2 × 10⁻⁹ Pa), the partial pressure ratio of H₂O to H₂ may be less than 1.7 × 10², and the partial pressure ratio of CO₂ to CO may be less than 1.8 × 10².

### [Calculation of FkCALC]

The method for calculating the flow rate of the hydrocarbon-based fuel capable of being reformed in the reforming catalyst layer, based on the measured temperature of the reforming catalyst layer, will be described below.

The meaning of "capable of being reformed (can be reformed)" is as described above, and the flow rate of the hydrocarbon-based fuel capable of being reformed in the reforming catalyst layer (reformable flow rate) refers to a flow rate such that when the hydrocarbon-based fuel at this flow rate is supplied to the reforming catalyst layer, the composition of the gas discharged from the reforming catalyst layer becomes a composition suitable to be supplied to the anode of the SOFC.

For example, the reformable flow rate in the reforming catalyst layer may be any flow rate that is equal to or less than the maximum value of flow rates at which the supplied hydrocarbon-based fuel can be decomposed to a C1 compound(s) (a compound(s) having a carbon number of 1). The reformable flow rate may be this maximum value, or may be a value obtained by dividing this maximum value by a safety factor (a value that exceeds 1, for example 1.4).

The reformable flow rate depends on the temperature of the reforming catalyst layer. Therefore, the calculation of the reformable flow rate in the reforming catalyst layer is performed based on the measured temperature of the reforming catalyst layer.

The reformable flow rate FkCALC in the reforming catalyst layer may be obtained beforehand as a function of the temperature T of the reforming catalyst layer by experiment (FkCALC is represented also as FkCALC(T) to explicitly show that it is a function of temperature). Also, it is possible to determine the reformable flow rate by multiplying the function obtained by experiment by a safety factor, or offsetting the temperature to the safe side. The unit of FkCALC(T) is, for example, mol/s.

The reformable flow rate FkCALC(T) may be a function of only the temperature T. But, this is not limiting, and the reformable flow rate FkCALC may be a function having, in addition to the temperature T, a variable other than T, such as the volume of the catalyst layer, the concentration of the gas component, or time. In this case, when the reformable flow rate FkCALC(T) is calculated, it is possible to appropriately obtain a variable other than T, and calculate the reformable flow rate FkCALC(T) from the variable other than T and the measured T.

### [Position for Measurement of Reforming Catalyst Layer Temperature]

A position for the measurement of the reforming catalyst layer temperature will be described in detail below. This measurement position may be used when the temperature of the reforming catalyst layer is measured in steps A⁴ to C⁴.

### <Case Where There Is One Temperature Measurement Point>

### · Temperature Measurement Position

When there is a single temperature measurement point in the reforming catalyst layer, it is preferred to use preferably a position where the temperature becomes relatively low in the reforming catalyst layer, more preferably a position where the temperature becomes the lowest in the reforming catalyst layer, as the position for the measurement of temperature, in terms of safe side control. When the reaction heat in the reforming catalyst layer is endothermic, the vicinity of the center of the catalyst layer may be selected as the temperature measurement position. When the reaction heat in the reforming catalyst layer is exothermic, and the temperatures of the end positions are lower than that of the center portion due to heat release, an end of the catalyst layer may be selected as the temperature measurement position. A location where the temperature becomes low may be found by preliminary experiment or simulation.

### <Case Where There Are Plurality of Temperature Measurement Points>

The point for the measurement of temperature need not be one. Two or more temperature measurement points are preferred in terms of more accurate control. For example, it is possible to measure the inlet temperature and outlet temperature of the reforming catalyst layer and use their average temperature as the above-described reforming catalyst layer temperature T.

Alternatively, for example, it is possible to consider regions Zᵢ obtained by dividing the reforming catalyst layer into N (N is an integer of 2 or more, and i is an integer of 1 or more and N or less), find the temperature Tᵢ of each divided region Zᵢ, calculate a reformable flow rate FkCALCᵢ(Tᵢ) in each divided region from each temperature Tᵢ, and calculate a value obtained by summing the reformable flow rates FkCALCᵢ(Tᵢ), as the reformable flow rate FkCALC in the reforming catalyst layer.

When N divided regions Zᵢ are considered, reformable flow rates of all divided regions may be summed, or a total of reformable flow rates of only one or some (not all) regions among the N divided regions may be used as the reformable flow rate FkCALC in the reforming catalyst layer. The catalyst layer regions for summation may be appropriately changed according to the feed rate of the hydrocarbon-based fuel. Also, temperatures of all divided regions may be set as the temperature condition, or temperature(s) of one or some (not all) regions among the N divided regions may be set as the temperature condition. The catalyst layer regions for the temperature condition may be appropriately changed according to the feed rate of the hydrocarbon-based fuel.

As the temperature of the divided region Zᵢ, actually measured temperature may be used as it is, but a calculated value, such as the average value of the inlet temperature and outlet temperature of the divided region, may be appropriately used as a representative value.

Also, it is not necessary to measure temperatures for all divided regions Zᵢ. Also, the number of divisions of the catalyst layer, N, and the number of temperature measurement point(s) may be independently set.

It is also possible to measure temperature(s) of one or some (not all) of the N divided regions and find temperature(s) of the remaining divided region(s) by appropriate interpolation from the measured temperature(s).

For example, as a temperature of a divided region where no temperature sensor is installed, a temperature of a divided region nearest to this divided region may be used. When there are two nearest divided regions, a temperature of either of the two divided regions may be used, or the average value of temperatures of the two divided regions may be used.

It is also possible to measure temperatures at a plurality of points in the reforming catalyst layer (at different positions along the gas flow direction), independently of the divided regions, and find a temperature of each divided region from the measured temperatures at the plurality of points. For example, it is possible to measure temperatures of the inlet and outlet of the reforming catalyst layer (a temperature of any position in the middle portion may be further measured), interpolate the temperature of the reforming catalyst layer from these measured temperatures by an approximation method, such as a least squares method, and find temperatures of the divided regions from the interpolation curve.

### (Examples of Positions for Measurement of Temperature)

In order to find temperatures of all divided regions, temperatures of the following positions may be measured.
· The inlet and outlet of each divided region.
· The interior (one point or a plurality of points) of each divided region (inner side of the inlet and the outlet).
· The inlet, outlet, and interior (one point or a plurality of points for one divided region) of each divided region.

In order to find a temperature of one or some (not all) of the divided regions, temperatures of the following positions may be measured.
· The inlet and outlet of one or some (not all) of the divided regions.
· The interior (one point or a plurality of points) of one or some (not all) of the divided regions (inner side of the inlet and the outlet).
· The inlet, outlet, and interior (one point or a plurality of points for one divided region) of one or some (not all) of the divided regions.

### [Others]

When the flow rate Fk of the hydrocarbon-based fuel is set to FkE, the flow rates of fluids supplied to the indirect internal reforming SOFC, such as the flow rate of water (including steam) for steam reforming or autothermal reforming and the flow rate of air for autothermal reforming or partial oxidation reforming, which are supplied to the reformer, the cathode air flow rate, the flow rates of the fuel and air supplied to the burner, and the flow rates of fluids, such as water and air, supplied to the heat exchanger; and the input and output of electricity to and from the indirect internal reforming SOFC, such as electrical heater output for heating the reformer, the water and liquid fuel evaporators, the cell stack, the fluid supply piping, and the like, and electrical input taken out from the thermoelectric conversion module and the like, are accordingly set, as required, to the operation conditions in the reforming-stoppable state determined beforehand. In other words, when the flow rate Fk of the hydrocarbon-based fuel is set to FkE, the operation conditions of the indirect internal reforming SOFC may be set to the operation conditions in the reforming-stoppable state determined beforehand.

When a steam reforming reaction is performed, that is, steam reforming or autothermal reforming is performed, steam is supplied to the reforming catalyst layer. When a partial oxidation reforming reaction is performed, that is, partial oxidation reforming or autothermal reforming is performed, an oxygen-containing gas is supplied to the reforming catalyst layer. As the oxygen-containing gas, a gas containing oxygen may be appropriately used, but in terms of the ease of availability, air is preferred.

The present invention is particularly effective when the hydrocarbon-based fuel has a carbon number of 2 or more, because in the case of such a fuel, particularly, reliable reforming is required.

In order to perform the method of the present invention, appropriate instrumentation and controlling equipment, including a computing means, such as a computer, may be used.

### «Fifth Embodiment»

Next, the fifth embodiment of the shutdown method of the present invention will be described.

### [FkE]

The flow rate of the hydrocarbon-based fuel supplied to the reformer (particularly, the reforming catalyst layer) in the reforming-stoppable state is represented as FkE.

FkE may be obtained beforehand by experiment or simulation. FkE may be found by performing an experiment or a simulation, while varying flow rates of fluids supplied to the indirect internal reforming SOFC, such as the flow rate of water (including steam) for steam reforming or autothermal reforming and the flow rate of air for autothermal reforming or partial oxidation reforming, which are supplied to the reformer, a cathode air flow rate, the flow rates of a fuel and air supplied to a burner, and flow rates of fluids, such as water and air, supplied to a heat exchanger; and electrical input and output to and from the indirect internal reforming SOFC, such as electrical heater output for heating the reformer, water and liquid fuel evaporators, the SOFC, fluid supply piping, and the like, and electrical input taken out from a thermoelectric conversion module and the like, that is, varying the operation conditions of the indirect internal reforming SOFC, and searching for FkE that steadily satisfies the conditions i to iv. FkE may be any value as long as the conditions i to iv are satisfied, but in terms of thermal efficiency, the smallest FkE is preferably used. The operation conditions of the indirect internal reforming SOFC, including the FkE, are determined beforehand as operation conditions in the reforming-stoppable state.

### [TrE]

The temperature condition of the reforming catalyst layer included in the above operation conditions in the reforming-stoppable state determined beforehand, is represented as TrE. TrE may be found together with FkE in the process of search for FkE, and TrE is a temperature condition of the reforming catalyst layer that corresponds to the single FkE used.

### [Fk0]

The flow rate of the hydrocarbon-based fuel supplied to the reformer at the point of time of the start of the shutdown method is represented as Fk0.

### [Measurement of Reforming Catalyst Layer Temperature]

In order to determine a flow rate of the hydrocarbon-based fuel supplied to the reforming catalyst layer, the measured value of the reforming catalyst layer temperature is compared with the above TrE. In order to do this, the reforming catalyst layer temperature is measured. For example, the reforming catalyst layer temperature may be monitored (continuously measured).

When the monitoring of the temperature of the reforming catalyst layer has been performed since before the start of the shutdown method, the temperature monitoring may be continuously performed as it has been.

If the anode temperature falls below the oxidative degradation temperature, then the reducing gas becomes unnecessary, and therefore, the supply of the hydrocarbon-based fuel to the reformer can be stopped to complete the shutdown method. Therefore, the monitoring of the temperature of the reforming catalyst layer may be continuously performed until the anode temperature falls below the oxidative degradation temperature.

An appropriate temperature sensor, such as a thermocouple, may be used for the measurement of the reforming catalyst layer temperature.

### [Case Where Reforming Method Is Changed before and after Start of Shutdown Method]

When the reforming method is changed before and after the start of the shutdown method, the above-described FkE, TrE, and FrMin are determined for a reforming-stoppable state, when reforming after the change of the reforming method is performed.

### [Steps Included in Shutdown Method]

While the anode temperature does not fall below the oxidative degradation temperature, the following steps A⁵ to D⁵ are performed. When the anode temperature falls below the oxidative degradation temperature, the supply of the hydrocarbon-based fuel to the reformer can be stopped, regardless of the status of the implementation of steps A⁵ to D⁵, to complete the shutdown method. It is possible to stop the supply of fluids supplied to the indirect internal reforming SOFC, such as water (including steam) for steam reforming or autothermal reforming and air for autothermal reforming or partial oxidation reforming, which are supplied to the reformer, cathode air, the fuel and air supplied to the burner, and fluids, such as water and air, supplied to the heat exchanger; and the input and output of electricity to and from the indirect internal reforming SOFC, such as electrical heater output for heating the reformer, the water and liquid fuel evaporators, the cell stack, the fluid supply piping, and the like, and electrical input taken out from the thermoelectric conversion module and the like, according to the stop of the supply of the hydrocarbon-based fuel to the reformer.

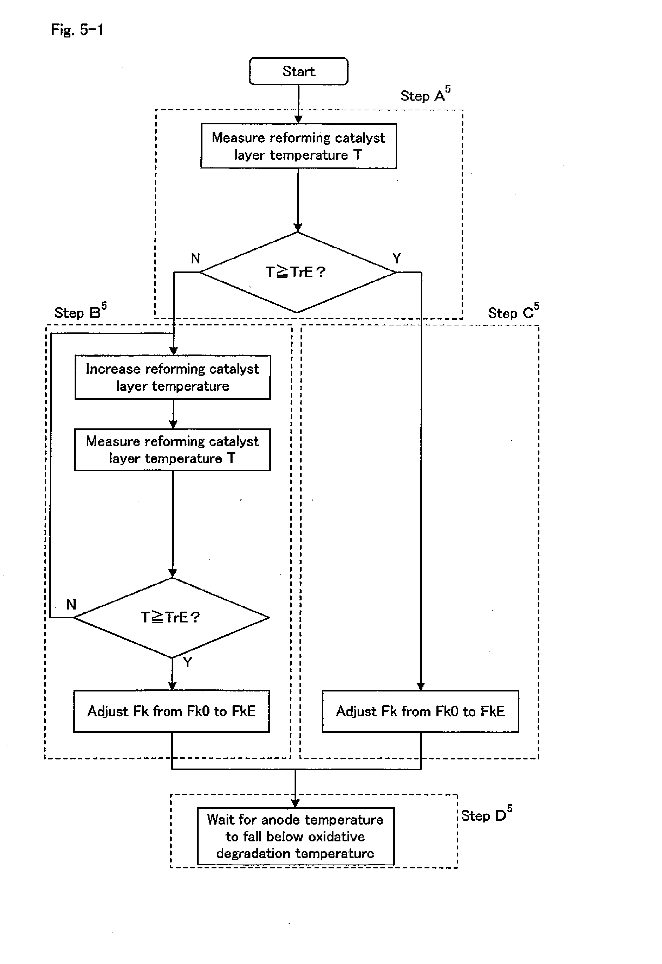

Figure 5-1 is a flow chart showing steps A⁵ to D⁵ in the fifth embodiment of the shutdown method. Apart from the procedure shown in this flow chart, the anode temperature is monitored, and when the anode temperature falls below the oxidative degradation temperature of the anode, the supply of the hydrocarbon-based fuel to the reformer is stopped, regardless of steps A⁵ to D⁵.

The shutdown method includes steps A⁵ to D⁵, but it is not necessary to actually perform all of steps A⁵ to D⁵, and only part of steps A⁵ to D⁵ may be performed according to the circumstances.

### [Step A⁵]

First, a reforming catalyst layer temperature T is measured. Then, the magnitude relationship between this temperature T and the above-described TrE is checked.

### [Step B⁵]

When T < TrE in step A⁵, the following steps B⁵1 to B⁵4 are performed in order. "T < TrE" is considered to mean that the hydrocarbon-based fuel at the flow rate FkE cannot be reformed.

### · step B⁵1

First, step B⁵1 is performed. In other words, the step of increasing the temperature of the reforming catalyst layer is performed.

For example, the temperature of the reforming catalyst layer is increased using an appropriate heat source, such as a heater or a burner annexed to the reformer.

### · step B⁵2

Then, step B⁵2 is performed. In other words, the step of measuring a reforming catalyst layer temperature T and comparing the values of this T and TrE is performed.

### · step B⁵3

When T < TrE in step B⁵2, the method returns to step B⁵1. In other words, while T < TrE, steps B⁵1 to B⁵3 are repeatedly performed. During this time, the temperature of the reforming catalyst layer increases.

In performing steps B⁵2 and B⁵3, the temperature increase in step B⁵1 may be stopped once, but while steps B⁵2 and B⁵3 are performed, step B⁵1 may be continued.

### · step B⁵4

When T ≥ TrE in step B⁵2, the step of adjusting the flow rate of the hydrocarbon-based fuel supplied to the reformer (represented as Fk) from Fk0 to FkE and going to step D⁵ is performed. "T ≥ TrE" is considered to mean that the hydrocarbon-based fuel at a flow rate that is equal to or less than FkE can be reformed.

At this time, in a case where the reforming method should be changed before and after the start of the shutdown method, the fuel flow rate is adjusted from Fk0 to FkE, and the reforming method is changed. By this method, it is possible to prevent the oxidative degradation of the anode with the reformed gas, while reliably reforming the hydrocarbon-based fuel.

### [Step C⁵]

When T ≥ TrE in step A⁵, the flow rate of the hydrocarbon-based fuel supplied to the reformer is adjusted from Fk0 to FkE, and the method goes to step D⁵.

At this time, in a case where the reforming type should be changed before and after the start of the shutdown method, the fuel flow rate is adjusted from Fk0 to FkE, and the reforming type is changed. By this method, it is possible to prevent the oxidative degradation of the anode with the reformed gas, while reliably reforming the hydrocarbon-based fuel.

### [Step D⁵]

In step D⁵, the method waits for the anode temperature to fall below the oxidative degradation temperature. During this time, the flow rate of the hydrocarbon-based fuel is maintained at FkE, and the flow rates of fluids supplied to the indirect internal reforming SOFC, such as the flow rate of water (including steam) for steam reforming or autothermal reforming and the flow rate of air for autothermal reforming or partial oxidation reforming, which are supplied to the reformer, the cathode air flow rate, the flow rates of the fuel and air supplied to the burner, and the flow rates of fluids, such as water and air, supplied to the heat exchanger; and the input and output of electricity to and from the indirect internal reforming SOFC, such as electrical heater output for heating the reformer, the water and liquid fuel evaporators, the cell stack, the fluid supply piping, and the like, and electrical input taken out from the thermoelectric conversion module and the like, are maintained in the operation conditions in the reforming-stoppable state, determined beforehand. In other words, the operation conditions of the indirect internal reforming SOFC are maintained in the operation conditions of the indirect internal reforming SOFC in the reforming-stoppable state determined beforehand. The anode temperature decreases with time, and therefore, eventually, the anode temperature falls below the oxidative degradation temperature. The anode temperature may be appropriately monitored (continuously measured) using a temperature sensor, such as a thermocouple.

The monitoring of the anode temperature is preferably started immediately after the shutdown method is started. If the temperature monitoring has been performed since before the start of the shutdown method, then the temperature monitoring may be continued as it has been, also when the shutdown method is performed.

When the anode temperature falls below the oxidative degradation temperature, the supply of the hydrocarbon-based fuel to the reformer can be stopped to complete the shutdown method.

### [Case 5-1]

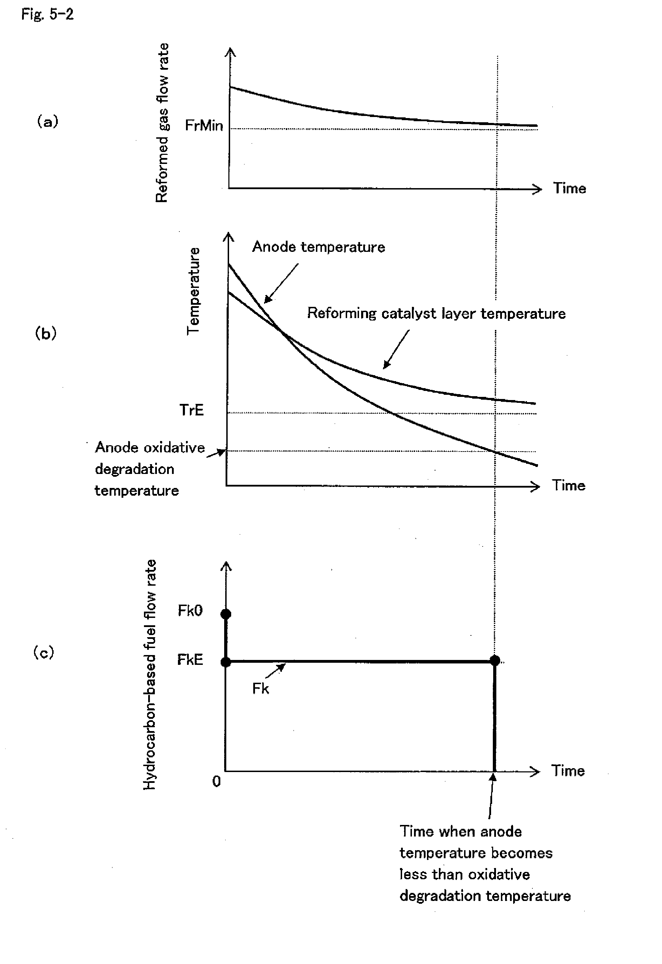

A case where T measured in step A⁵ is equal to or more than TrE, that is, the case of T ≥ TrE, will be described using Figures 5-2. In other words, a case where step C⁵ is performed will be described.

In Figures 5-2(a) to (c), the horizontal axis is elapsed time from a point of time when the shutdown method of the present invention is started. In (a) in this figure, the vertical axis is the flow rate of the reformed gas obtained from the reformer, in (b), the vertical axis is temperature, and in (c), the vertical axis is the flow rate of the hydrocarbon-based fuel (the flow rate Fk of the hydrocarbon-based fuel supplied to the reformer) (the same applies to the subsequent figures relating to this embodiment).

The monitoring of the reforming catalyst layer temperature and the monitoring of the anode temperature have been continuously performed since before the point of time of the start of the shutdown method (the same applies to the subsequent cases).

As shown in Figure 5-2, immediately after the shutdown method is started, step A⁵ is performed. In other words, the reforming catalyst layer temperature T is measured, and this T is compared with TrE.

In this case, T ≥ TrE (Figure 5-2 (b)), and therefore, step B⁵ is not performed, and step C⁵ is performed, and Fk is adjusted from Fk0 to FkE.

Then, the method goes to step D⁵, and waits until the anode temperature falls below the oxidative degradation temperature.

When the anode temperature becomes less than the oxidative degradation temperature, the supply of the hydrocarbon-based fuel to the reformer can be stopped to complete the shutdown method.

By operating in this manner, it is possible to supply the reformed gas at the requisite minimum flow rate or more to the anode, while reliably performing reforming.

### [Case 5-2]

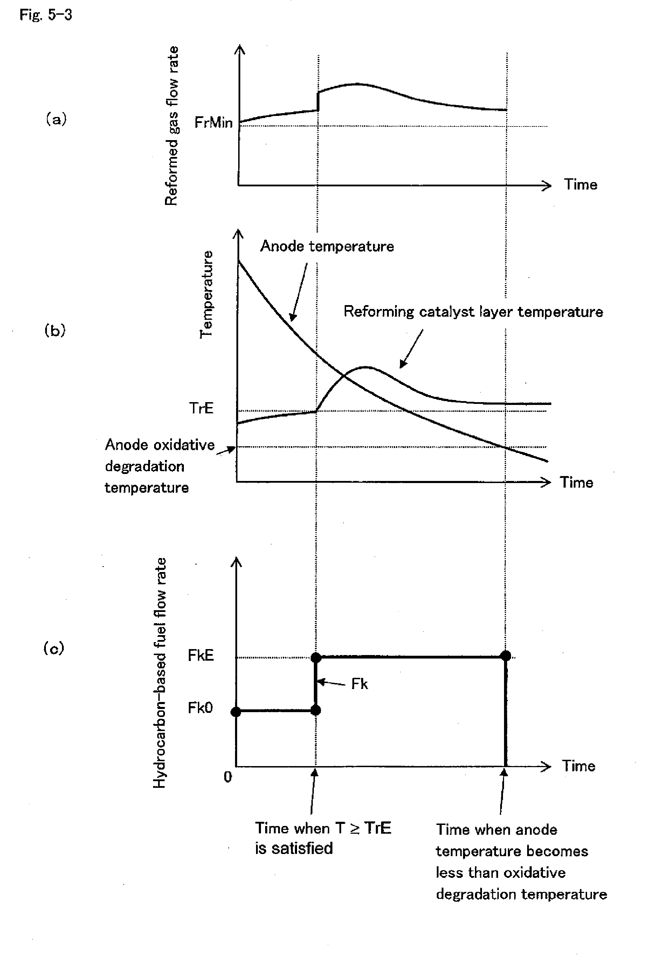

A case where T < TrE in step A⁵, that is, a case where step B⁵ is performed, will be described using Figures 5-3.

After the start of the shutdown method, step A⁵ is immediately performed, and the measurement of the reforming catalyst layer temperature T, and the comparison of this T with TrE are performed. T < TrE (Figure 5-3(b)), and therefore, step C⁵ is not performed, and step B⁵ is performed.

In this case, the temperature of the reforming catalyst layer is increased by an appropriate heat source, such as a burner and a heater annexed to the reformer, until T ≥ TrE is satisfied, so that the hydrocarbon-based fuel at the flow rate FkE can be reformed, as shown in Figures 5-3. In other words, while the reforming catalyst layer temperature T measured in step B⁵2 is smaller than TrE, steps B⁵1 to B⁵3 are repeated.

When T ≥ TrE is satisfied in step B⁵2, the flow rate Fk of the hydrocarbon-based fuel supplied to the reformer is adjusted from Fk0 to FkE (step B⁵4). When the reforming method should be changed before and after the start of the shutdown method, the fuel flow rate is adjusted from Fk0 to FkE, and the reforming method is changed. Then, the method goes to step D⁵ (step B⁵4)_{.}

Step D⁵ and the subsequent steps are similar to those of case 5-1.

In this embodiment, control is simple, and a program when control by the program is performed is also simple.

### [Regarding "Can Be Reformed"]

"The hydrocarbon-based fuel at a certain flow rate can be reformed (or is capable of being reformed) in the reforming catalyst layer" refers to that when the hydrocarbon-based fuel at this flow rate is supplied to the reforming catalyst layer, the composition of the gas discharged from the reforming catalyst layer becomes a composition suitable to be supplied to the anode of the SOFC.

For example, "can be reformed in the reforming catalyst layer" may be that the supplied hydrocarbon-based fuel can be decomposed to a C1 compound(s) (a compound(s) having a carbon number of 1). In other words, "can be reformed in the reforming catalyst layer" means a case where reforming can proceed in the reforming catalyst layer until a composition is obtained in which a C2+ component(s) (a component(s) having a carbon number of 2 or more) in the gas at the outlet of the reforming catalyst layer has a concentration, which does not cause the problems of anode degradation and flow blockage due to carbon deposition, or less. The concentration of the C2+ component(s) in this case is preferably 50 ppb or less as a mass fraction in the reformed gas. And in this case, it is enough that the gas at the outlet of the reforming catalyst layer is reducing gas. Methane is permitted to be contained in the gas at the outlet of the reforming catalyst layer. In the reforming of the hydrocarbon-based fuel, usually, methane remains in the equilibrium theory. Even if carbon is contained in the gas at the outlet of the reforming catalyst layer in the form of methane, CO, or CO₂, carbon deposition can be prevented by adding steam as required. When methane is used as the hydrocarbon-based fuel, it is enough that reforming proceeds so that the gas at the outlet of the reforming catalyst layer becomes reducing.

With respect to the reducing property of the gas at the outlet of the reforming catalyst layer, it is enough that the property is to the extent that if this gas is supplied to the anode, the oxidative degradation of the anode is suppressed. In order to do this, for example, the partial pressures of oxidizing O₂, H₂O, CO₂, and the like contained in the gas at the outlet of the reforming catalyst layer may be lower than their equilibrium partial pressures of oxidation reactions of the anode electrode. For example, when the anode electrode material is Ni, and the anode temperature is 800°C, the partial pressure of O₂ contained in the gas at the outlet of the reforming catalyst layer may be less than 1.2 × 10⁻¹⁴ atm (1.2 × 10⁻⁹ Pa), the partial pressure ratio of H₂O to H₂ may be less than 1.7 × 10², and the partial pressure ratio of CO₂ to CO may be less than 1.8 × 10².

### [Position for Measurement of Reforming Catalyst Layer Temperature]

A position for the measurement of the reforming catalyst layer temperature will be described in detail below. This measurement position may be used when TrE is found beforehand, and when the temperature of the reforming catalyst layer is measured in steps A⁵ and B⁵.

### <Case Where There Is One Temperature Measurement Point>

### · Temperature Measurement Position

When there is a single temperature measurement point in the reforming catalyst layer, it is preferred to use preferably a position where the temperature becomes relatively low in the reforming catalyst layer, more preferably a position where the temperature becomes the lowest in the reforming catalyst layer, as the position for the measurement of temperature, in terms of safe side control. When the reaction heat in the reforming catalyst layer is endothermic, the vicinity of the center of the catalyst layer may be selected as the temperature measurement position. When the reaction heat in the reforming catalyst layer is exothermic, and the temperatures of the end positions are lower than that of the center portion due to heat release, an end of the catalyst layer may be selected as the temperature measurement position. A location where the temperature becomes low may be found by preliminary experiment or simulation.

### <Case Where There Are Plurality of Temperature Measurement Points>

The point for the measurement of temperature need not be one. Two or more temperature measurement points are preferred in terms of more accurate control. For example, it is possible to measure the inlet temperature and outlet temperature of the reforming catalyst layer and use their average temperature as the above-described reforming catalyst layer temperature T.

Alternatively, for example, it is possible to consider regions Zᵢ obtained by dividing the reforming catalyst layer into N (N is an integer of 2 or more, and i is an integer of 1 or more and N or less), find the temperature Tᵢ of each divided region Zᵢ, and find TrE(j) (= {TrE₁, TrE₂, ..., TrE_{N}}) for each divided region beforehand. In this case, when any of Tᵢ becomes equal to or less than TrEᵢ, the flow rate of the hydrocarbon-based fuel may be set to FkE.

When N divided regions Zᵢ are considered, temperatures of all divided regions may be set as the temperature condition, or temperature(s) of one or some (not all) regions among the N divided regions may be set as the temperature condition. The catalyst layer regions for the temperature condition may be appropriately changed according to the feed rate of the hydrocarbon-based fuel.

As the temperature of the divided region Zᵢ, actually measured temperature may be used as it is, but a calculated value, such as the average value of the inlet temperature and outlet temperature of the divided region, may be appropriately used as a representative value.

Also, it is not necessary to measure temperatures for all divided regions Zᵢ. Also, the number of divisions of the catalyst layer, N, and the number of temperature measurement point(s) may be independently set.

It is also possible to measure temperature(s) of one or some (not all) of the N divided regions and find temperature(s) of the remaining divided region(s) by appropriate interpolation from the measured temperature(s).

For example, as a temperature of a divided region where no temperature sensor is installed, a temperature of a divided region nearest to this divided region may be used. When there are two nearest divided regions, a temperature of either of the two divided regions may be used, or the average value of temperatures of the two divided regions may be used.

It is also possible to measure temperatures at a plurality of points in the reforming catalyst layer (at different positions along the gas flow direction), independently of the divided regions, and find a temperature of each divided region from the measured temperatures at the plurality of points. For example, it is possible to measure temperatures of the inlet and outlet of the reforming catalyst layer (a temperature of any position in the middle portion may be further measured), interpolate the temperature of the reforming catalyst layer from these measured temperatures by an approximation method, such as a least squares method, and find temperatures of the divided regions from the interpolation curve.

### (Examples of Positions for Measurement of Temperature)

In order to find temperatures of all divided regions, temperatures of the following positions may be measured.
· The inlet and outlet of each divided region.
· The interior (one point or a plurality of points) of each divided region (inner side of the inlet and the outlet).
· The inlet, outlet, and interior (one point or a plurality of points for one divided region) of each divided region.

In order to find a temperature of one or some (not all) of the divided regions, temperatures of the following positions may be measured.
· The inlet and outlet of one or some (not all) of the divided regions.
· The interior (one point or a plurality of points) of one or some (not all) of the divided regions (inner side of the inlet and the outlet).
· The inlet, outlet, and interior (one point or a plurality of points for one divided region) of one or some (not all) of the divided regions.

### [Others]

When the flow rate Fk of the hydrocarbon-based fuel is set to FkE, the flow rates of fluids supplied to the indirect internal reforming SOFC, such as the flow rate of water (including steam) for steam reforming or autothermal reforming and the flow rate of air for autothermal reforming or partial oxidation reforming, which are supplied to the reformer, the cathode air flow rate, the flow rates of the fuel and air supplied to the burner, and the flow rates of fluids, such as water and air, supplied to the heat exchanger; and the input and output of electricity to and from the indirect internal reforming SOFC, such as electrical heater output for heating the reformer, the water and liquid fuel evaporators, the cell stack, the fluid supply piping, and the like, and electrical input taken out from the thermoelectric conversion module and the like, are accordingly set, as required, to the operation conditions in the reforming-stoppable state determined beforehand. In other words, when the flow rate Fk of the hydrocarbon-based fuel is set to FkE, the operation conditions of the indirect internal reforming SOFC may be set to the operation conditions in the reforming-stoppable state determined beforehand.

When a steam reforming reaction is performed, that is, steam reforming or autothermal reforming is performed, steam is supplied to the reforming catalyst layer. When a partial oxidation reforming reaction is performed, that is, partial oxidation reforming or autothermal reforming is performed, an oxygen-containing gas is supplied to the reforming catalyst layer. As the oxygen-containing gas, a gas containing oxygen may be appropriately used, but in terms of the ease of availability, air is preferred.

The present invention is particularly effective when the hydrocarbon-based fuel has a carbon number of 2 or more, because in the case of such a fuel, particularly, reliable reforming is required.

In order to perform the method of the present invention, appropriate instrumentation and controlling equipment, including a computing means, such as a computer, may be used.

### «Hydrocarbon-based Fuel»

It is possible to use a hydrocarbon-based fuel appropriately selected from compounds of which molecules contain carbon and hydrogen (may also contain other elements, such as oxygen) or mixtures thereof that are known as raw materials of reformed gas in the field of SOFCs. It is possible to use compounds of which molecules contain carbon and hydrogen, such as hydrocarbons and alcohols. For example, hydrocarbon fuels, such as methane, ethane, propane, butane, natural gas, LPG (liquefied petroleum gas), city gas, gasoline, naphtha, kerosene and gas oil, alcohols, such as methanol and ethanol, ethers, such as dimethylether, and the like may be used.

Particularly, kerosene and LPG are preferred because they are readily available. In addition, they can be stored in a stand-alone manner, and therefore, they are useful in areas where the city gas pipeline is not built. Further, an SOFC power generating apparatus using kerosene or LPG is useful as an emergency power supply. Particularly, kerosene is preferred because it is easy to handle.

### «Reformer»

The reformer produces a reformed gas containing hydrogen from a hydrocarbon-based fuel.

In the reformer, any of steam reforming, partial oxidation reforming and autothermal reforming in which a steam reforming reaction is accompanied by a partial oxidation reaction may be performed.

In the reformer, a steam reforming catalyst having steam reforming activity, a partial oxidation reforming catalyst having partial oxidation reforming activity, or an autothermal reforming catalyst having both partial oxidation reforming activity and steam reforming activity may be appropriately used.

With respect to the structure of the reformer, a structure known as that of a reformer may be appropriately used. For example, the structure of the reformer may be a structure having a region for housing a reforming catalyst in a vessel which can be closed to the atmosphere, and having an introduction port for fluids required for reforming and a discharge port for a reformed gas.

The material of the reformer may be appropriately selected for use from materials known as those of reformers, considering resistance in the environment used.

The shape of the reformer may be an appropriate shape, such as a rectangular parallelepiped shape or a circular tube shape.

A hydrocarbon-based fuel (vaporized beforehand as required) and steam, and further an oxygen-containing gas, such as air, as required, may be supplied to the reformer (the reforming catalyst layer), each independently, or appropriately mixed beforehand. The reformed gas is supplied to the anode of the SOFC.

### <<SOFC>>

The reformed gas obtained from the reformer is supplied to the anode of the SOFC. On the other hand, an oxygen-containing gas, such as air, is supplied to the cathode of the SOFC. During electric power generation, the SOFC generates heat with electric power generation, and the heat is transferred from the SOFC to the reformer by radiation heat transfer and the like. In this manner, the exhaust heat of the SOFC is used to heat the reformer. Gas interfacing or the like is appropriately performed using piping and the like.

As the SOFC, a known SOFC may be appropriately selected for use. In the SOFC, generally, an oxygen-ion conductive ceramic or a proton-ion conductive ceramic is used as the electrolyte.

The SOFC may be a single cell, but practically, a stack in which a plurality of single cells are arrayed (the stack is sometimes referred to as a bundle in the case of a tubular type, and the stack in this specification includes a bundle) is preferably used. In this case, one stack or a plurality of stacks may be used.

The shape of the SOFC is also not limited to a cubic stack, and an appropriate shape may be used.

The oxidative degradation of the anode may occur, for example, at about 400°C.

### <<Enclosure>>

The enclosure (module container) may be any appropriate container capable of housing the SOFC, the reformer, and the combustion region. An appropriate material having resistance to the environment used, for example, stainless steel, may be used as the material of the container. A connection port is appropriately provided for the container for gas interfacing or the like.

The module container is preferably hermetic in order to prevent communication between the interior of the module container and the surroundings (atmosphere).

### «Combustion Region»

The combustion region is a region where an anode off-gas discharged from the anode of the SOFC can be combusted. For example, the anode outlet is opened in the enclosure, and a space near the anode outlet may be the combustion region. This combustion may be performed using, for example, a cathode off-gas, as an oxygen-containing gas. In order to do this, a cathode outlet may be opened in the enclosure.

In order to combust a combustion fuel or the anode off-gas, an ignition means, such as an igniter, may be appropriately used.

### «Reforming Catalyst»

A known catalyst may be used for each of the steam reforming catalyst, the partial oxidation reforming catalyst and the autothermal reforming catalyst used in the reformer. Examples of the steam reforming catalyst include ruthenium-based and nickel-based catalysts. Examples of the partial oxidation reforming catalyst include a platinum-based catalyst. Examples of the autothermal reforming catalyst include a rhodium-based catalyst. When steam reforming is performed, an autothermal reforming catalyst having steam reforming function may be used.

A temperature at which the partial oxidation reforming reaction can proceed is, for example, 200°C or more. A temperature at which the steam reforming reaction or the autothermal reforming reaction can proceed is, for example, 400°C or more.

### «Operation Conditions of Reformer»

The conditions during shutdown operation of the reformer for each of steam reforming, autothermal reforming, and partial oxidation reforming will be described below.

In steam reforming, steam is added to a reforming raw material, such as kerosene. The reaction temperature of the steam reforming may be in the range of, for example, 400°C to 1000°C, preferably 500°C to 850°C, and further preferably 550°C to 800°C. An amount of the steam introduced into the reaction system is defined as a ratio of the number of moles of water molecules to the number of moles of carbon atoms contained in the hydrocarbon-based fuel (steam/carbon ratio). This value is preferably 1 to 10, more preferably 1.5 to 7, and further preferably 2 to 5. When the hydrocarbon-based fuel is liquid, a space velocity (LHSV) can be represented as A/B, wherein a flow velocity of the hydrocarbon-based fuel in a liquid state is represented as A (L/h), and a volume of the catalyst layer is represented as B (L). This value is set in the range of preferably 0.05 to 20 h⁻¹, more preferably 0.1 to 10 h⁻¹, and further preferably 0.2 to 5 h⁻¹.

In autothermal reforming, in addition to the steam, an oxygen-containing gas is added to the reforming raw material. The oxygen-containing gas may be pure oxygen, but in terms of the ease of availability, air is preferred. It is possible to perform equilibrium calculation, and add the oxygen-containing gas so that an overall reaction heat is exothermic. With respect to the amount of the oxygen-containing gas added, a ratio of the number of moles of oxygen molecules to the number of moles of carbon atoms contained in the hydrocarbon-based fuel (oxygen/carbon ratio) is preferably 0.005 to 1, more preferably 0.01 to 0.75, and further preferably 0.02 to 0.6. A reaction temperature of the autothermal reforming reaction is set in the range of, for example, 400°C to 1000°C, preferably 450°C to 850°C, and further preferably 500°C to 800°C. When the hydrocarbon-based fuel is liquid, the space velocity (LHSV) is selected from the range of preferably 0.05 to 20 h⁻¹, more preferably 0.1 to 10 h⁻¹, and further preferably 0.2 to 5 h⁻¹. With respect to an amount of the steam introduced into the reaction system, the steam/carbon ratio is preferably 1 to 10, more preferably 1.5 to 7, and further preferably 2 to 5.

In partial oxidation reforming, an oxygen-containing gas is added to the reforming raw material. The oxygen-containing gas may be pure oxygen, but in terms of the ease of availability, air is preferred. An amount of the oxygen-containing gas added is appropriately determined in terms of heat loss and the like to ensure a temperature at which the reaction proceeds. With respect to this amount, the ratio of the number of moles of oxygen molecules to the number of moles of carbon atoms contained in the hydrocarbon-based fuel (oxygen/carbon ratio) is preferably 0.1 to 3 and more preferably 0.2 to 0.7. A reaction temperature of the partial oxidation reaction may be set in the range of, for example, 450°C to 1000°C, preferably 500°C to 850°C, and further preferably 550°C to 800°C. When the hydrocarbon-based fuel is liquid, the space velocity (LHSV) is selected from the range of preferably 0.1 to 30 h⁻¹. Steam can be introduced into the reaction system to suppress the generation of soot, and with respect to an amount of the steam, the steam/carbon ratio is preferably 0.1 to 5, more preferably 0.1 to 3, and further preferably 1 to 2.

### <<Other Equipment >>

Known components of an indirect internal reforming SOFC may be appropriately provided as required. Specific examples of the known components include a vaporizer for vaporizing a liquid; a pressure increasing means for pressurizing various fluids, such as a pump, a compressor, and a blower; a flow rate controlling means or a flow path blocking/switching means for controlling the flow rate of a fluid, or blocking/switching the flow of a fluid, such as a valve; a heat exchanger for performing heat exchange and heat recovery; a condenser for condensing a gas; a heating/warming means for externally heating various devices with steam or the like; a storage means of a hydrocarbon-based fuel (reforming raw material) or a combustion fuel; an air or electrical system for instrumentation; a signal system for control; a control apparatus; and an electrical system for output and powering; a desulfurizer for reducing a sulfur concentration in a fuel; and the like.

### Industrial Applicability

The present invention can be applied to an indirect internal reforming SOFC used for, for example, a stationary or mobile power generating apparatus and a cogeneration system.

### Description of Symbols

- 1: water vaporizer
- 2: electrical heater annexed to water vaporizer
- 3: reformer
- 4: reforming catalyst layer
- 5: combustion region
- 6: SOFC
- 7: igniter
- 8: enclosure (module container)
- 9: electrical heater annexed to reformer

## Claims

1. A shutdown method for shutting down an indirect internal reforming solid oxide fuel cell comprising
a reformer having a reforming catalyst layer, for reforming a hydrocarbon-based fuel to produce a reformed gas,
a solid oxide fuel cell for generating electric power using the reformed gas,
a combustion region for combusting an anode off-gas discharged from the solid oxide fuel cell, and
an enclosure for housing the reformer, the solid oxide fuel cell, and the combustion region,
wherein
a flow rate of the hydrocarbon-based fuel supplied to the reformer in a state in which the following conditions i to iv are all satisfied is represented as FkE, and a temperature condition of the reforming catalyst layer in the state is represented as TrE,
i) an anode temperature of the solid oxide fuel cell is steady,
ii) the anode temperature is less than an oxidative degradation temperature,
iii) in the reformer, the hydrocarbon-based fuel is reformed, and a reformed gas having a composition suitable to be supplied to an anode is produced, and
iv) an amount of the reformed gas produced is equal to or more than a requisite minimum flow rate FrMin for preventing oxidative degradation of the anode when the anode temperature of the solid oxide fuel cell is a temperature that is equal to or more than the oxidative degradation temperature,
stepwise flow rates Fk(j) of the hydrocarbon-based fuel are predetermined (wherein j is an integer of 1 or more and M or less, where M is an integer of 2 or more), where Fk(j) increases with an increase in j, Fk(M) which is the largest among Fk(j) is equal to FkE, and Fk(j) is equal to or more than a minimum value of hydrocarbon-based fuel flow rates at which the reformed gas at a flow rate that is equal to or more than FrMin can be obtained by a reforming method in a reaction temperature range of this reforming method, a type of this reforming method being a type of a reforming method which is performed after start of the shutdown method,
a flow rate of the hydrocarbon-based fuel supplied to the reformer at a point of time of the start of the shutdown method is represented as Fk0,
one or more temperature conditions Tr(j) of the reforming catalyst layer are found beforehand (wherein j is an integer of 1 or more and M-1 or less), in the temperature condition Tr(j) a flow rate of the reformed gas obtained when the hydrocarbon-based fuel at the flow rate Fk(j) is reformed in the reforming catalyst layer by a reforming method being FrMin, a type of this reforming method being a type of a reforming method which is performed after the start of the shutdown method,
when the anode temperature falls below the oxidative degradation temperature, supply of the hydrocarbon-based fuel to the reformer is stopped to complete the shutdown method, and
while the anode temperature does not fall below the oxidative degradation temperature, the shutdown method comprises the following steps:
A¹) measuring a reforming catalyst layer temperature T and comparing this measured temperature T with TrE;
B¹) when T < TrE in step A¹, performing the following steps B¹1 to B¹4 in order:
B¹1) increasing a temperature of the reforming catalyst layer,
B¹2) measuring the reforming catalyst layer temperature and comparing this measured temperature T with TrE,
B¹3) when T < TrE in step B¹2, returning to step B¹1, and
B¹4) when T ≥ TrE in step B¹2, adjusting the flow rate of the hydrocarbon-based fuel supplied to the reformer from Fk0 to FkE and moving on to step D¹;
C¹) when T ≥ TrE in step A¹,
if there does not exist, among the predetermined hydrocarbon-based fuel flow rates Fk(j), a flow rate Fk(j) at which a corresponding temperature condition Tr(j) is equal to or less than the reforming catalyst layer temperature T measured in step A¹ and which is equal to or more than Fk(1) and is smaller than FkE, then adjusting the flow rate of the hydrocarbon-based fuel supplied to the reformer from Fk0 to FkE and moving on to step D¹, and
if there exists, among the predetermined hydrocarbon-based fuel flow rates Fk(j), one or more flow rates Fk(j) at which corresponding temperature conditions Tr(j) are equal to or less than the reforming catalyst layer temperature T measured in step A¹ and which are equal to or more than Fk(1) and are smaller than FkE, then performing the following steps C¹1 to C¹7 in order:
C¹1) adjusting the flow rate of the hydrocarbon-based fuel supplied to the reformer from Fk0 to Fk(J),
where J represents j that gives the smallest Fk(j), among one or more flow rates Fk(j) at which corresponding temperature conditions Tr(j) are equal to or less than the reforming catalyst layer temperature T measured in step A¹ and which are equal to or more than Fk(1) and are smaller than FkE,
C¹2) measuring the reforming catalyst layer temperature and comparing this measured temperature T with TrE,
C¹3) when T ≤ TrE in step C¹2, adjusting the flow rate of the hydrocarbon-based fuel supplied to the reformer to FkE and moving on to step D¹,
C¹4) when T > TrE in step C¹2, comparing this T with Tr(J),
C¹5) when T > Tr(J) in step C¹4, returning to step C¹2,
C¹6) when T ≤ Tr(J) in step C¹4, increasing the flow rate of the hydrocarbon-based fuel supplied to the reformer from Fk(J) to Fk(J+1) and increasing J by 1, and
C¹7) after step C¹6, comparing J with M, and if J ≠ M, then returning to step C¹2, and if J = M, then moving on to step D¹; and
D¹) waiting for the anode temperature to fall below the oxidative degradation temperature.

2. The method according to claim 1, wherein the hydrocarbon-based fuel comprises a hydrocarbon-based fuel having a carbon number of two or more.

3. The method according to claim 2, wherein the concentration of a compound having a carbon number of two or more in the reformed gas is 50 ppb or less on a mass basis.

4. A shutdown method for shutting down an indirect internal reforming solid oxide fuel cell comprising
a reformer having a reforming catalyst layer, for reforming a hydrocarbon-based fuel to produce a reformed gas,
a solid oxide fuel cell for generating electric power using the reformed gas,
a combustion region for combusting an anode off-gas discharged from the solid oxide fuel cell, and
an enclosure for housing the reformer, the solid oxide fuel cell, and the combustion region,
wherein
a flow rate of the hydrocarbon-based fuel supplied to the reformer in a state in which the following conditions i to iv are all satisfied is represented as FkE,
i) an anode temperature of the solid oxide fuel cell is steady,
ii) the anode temperature is less than an oxidative degradation temperature,
iii) in the reformer, the hydrocarbon-based fuel is reformed, and a reformed gas having a composition suitable to be supplied to an anode is produced, and
iv) an amount of the reformed gas produced is equal to or more than a requisite minimum flow rate FrMin for preventing oxidative degradation of the anode when the anode temperature of the solid oxide fuel cell is a temperature that is equal to or more than the oxidative degradation temperature,
a flow rate of the hydrocarbon-based fuel supplied to the reformer at a point of time of start of the shutdown method is represented as Fk0,
a calculated value of a flow rate of the hydrocarbon-based fuel capable of being reformed at a measured temperature of the reforming catalyst layer by a reforming method is represented as FkCALC, a type of this reforming method being a type of a reforming method which is performed after the start of the shutdown method,
stepwise flow rates Fk(j) of the hydrocarbon-based fuel are predetermined (wherein j is an integer of 1 or more and M or less, where M is an integer of 2 or more), where Fk(j) increases with an increase in j, Fk(M) which is the largest among Fk(j) is equal to FkE, and Fk(j) is equal to or more than a minimum value of hydrocarbon-based fuel flow rates at which the reformed gas at a flow rate that is equal to or more than FrMin can be obtained by a reforming method in a reaction temperature range of this reforming method, a type of this reforming method being a type of a reforming method which is performed after the start of the shutdown method,
one or more temperature conditions Tr(j) of the reforming catalyst layer are found beforehand (wherein j is an integer of 1 or more and M-1 or less), in the temperature condition Tr(j) a flow rate of the reformed gas obtained when the hydrocarbon-based fuel at the flow rate Fk(j) is reformed in the reforming catalyst layer by a reforming method being FrMin, a type of this reforming method being a type of a reforming method which is performed after the start of the shutdown method,
when the anode temperature falls below the oxidative degradation temperature, supply of the hydrocarbon-based fuel to the reformer is stopped to complete the shutdown method, and
while the anode temperature does not fall below the oxidative degradation temperature, the shutdown method comprises the following steps: A²) measuring a reforming catalyst layer temperature T, calculating FkCALC using this measured temperature T, and comparing values of this FkCALC and FkE;
B²) when FkCALC < FkE in step A², performing the following steps B²1 to B²4 in order:
B²1) increasing a temperature of the reforming catalyst layer,
B²2) measuring the reforming catalyst layer temperature T, calculating FkCALC using this measured temperature T, and comparing values of this FkCALC and FkE,
B²3) when FkCALC < FkE in step B²2, returning to step B²1, and
B²4) when FKCALC ≥ FkE in step B²2, adjusting the flow rate of the hydrocarbon-based fuel supplied to the reformer from Fk0 to FkE and moving on to step D²;
C²) when FkCALC ≥ FkE in step A²,
if there does not exist, among the predetermined hydrocarbon-based fuel flow rates Fk(j), a flow rate Fk(j) at which a corresponding temperature condition Tr(j) is equal to or less than the reforming catalyst layer temperature T measured in step A² and which is smaller than FkE, then adjusting the flow rate of the hydrocarbon-based fuel supplied to the reformer from Fk0 to FkE and moving on to step D², and
if there exists, among the predetermined hydrocarbon-based fuel flow rates Fk(j), one or more flow rates Fk(j) at which corresponding temperature conditions Tr(j) are equal to or less than the reforming catalyst layer temperature T measured in step A² and which are smaller than FkE, then performing the following steps C²1 to C²7 in order:
C²1) adjusting the flow rate of the hydrocarbon-based fuel supplied to the reformer from Fk0 to Fk(J),
where J represents j that gives the smallest Fk(j), among one or more flow rates Fk(j) at which corresponding temperature conditions Tr(j) are equal to or less than the reforming catalyst layer temperature T measured in step A² and which are smaller than FkE,
C²2) measuring the reforming catalyst layer temperature, calculating FkCALC using this measured temperature T, and comparing values of this FkCALC and FkE,
C²3) when FkCALC ≤ FkE in step C²2, adjusting the flow rate of the hydrocarbon-based fuel supplied to the reformer to FkE and moving on to step D²,
C²4) when FkCALC > FkE in step C²2, comparing the reforming catalyst layer temperature T measured in step C²2 with Tr(J),
C²5) when T > Tr(J) in step C²4, returning to step C²2,
C²6) when T ≤ Tr(J) in step C²4, increasing the flow rate of the hydrocarbon-based fuel supplied to the reformer from Fk(J) to Fk(J+1) and increasing J by 1,
and
C²7) after step C²6, comparing J with M, and if J ≠ M, then returning to step C²2, and if J = M, then moving on to step D²; and
D²) waiting for the anode temperature to fall below the oxidative degradation temperature.

5. The method according to claim 4, wherein the hydrocarbon-based fuel comprises a hydrocarbon-based fuel having a carbon number of two or more.

6. The method according to claim 5, wherein the concentration of a compound having a carbon number of two ore more in the reformed gas is 50 ppb or less on a mass basis.

7. A shutdown method for shutting down an indirect internal reforming solid oxide fuel cell comprising
a reformer having a reforming catalyst layer, for reforming a hydrocarbon-based fuel to produce a reformed gas,
a solid oxide fuel cell for generating electric power using the reformed gas,
a combustion region for combusting an anode off-gas discharged from the solid oxide fuel cell, and
an enclosure for housing the reformer, the solid oxide fuel cell, and the combustion region,
wherein
a flow rate of the hydrocarbon-based fuel supplied to the reformer in a state in which the following conditions i to iv are all satisfied is represented as FkE, and a temperature condition of the reforming catalyst layer in the state is represented as TrE,
i) an anode temperature of the solid oxide fuel cell is steady,
ii) the anode temperature is less than an oxidative degradation temperature,
iii) in the reformer, the hydrocarbon-based fuel is reformed, and a reformed gas having a composition suitable to be supplied to an anode is produced, and
iv) an amount of the reformed gas produced is equal to or more than a requisite minimum flow rate FrMin for preventing oxidative degradation of the anode when the anode temperature of the solid oxide fuel cell is a temperature that is equal to or more than the oxidative degradation temperature,
a flow rate of the hydrocarbon-based fuel supplied to the reformer at a point of time of start of the shutdown method is represented as Fk0,
when the anode temperature falls below the oxidative degradation temperature, supply of the hydrocarbon-based fuel to the reformer is stopped to complete the shutdown method, and
while the anode temperature does not fall below the oxidative degradation temperature, the shutdown method comprises the following steps:
A³) measuring a reforming catalyst layer temperature T and comparing this measured temperature T with TrE;
B³) when T < TrE in step A³, performing the following steps B³1 to B³4 in order:
B³1) increasing a temperature of the reforming catalyst layer,
B³2) measuring the reforming catalyst layer temperature and comparing this measured temperature T with TrE,
B³3) when T < TrE in step B³2, returning to step B³1, and
B³4) when T ≥ TrE in step B³2, adjusting the flow rate of the hydrocarbon-based fuel supplied to the reformer from Fk0 to FkE and moving on to step D³;
C³) when T ≥ TrE in step A³,
performing the following steps C³1 to C³5 in order:
C³1) measuring the reforming catalyst layer temperature and comparing this measured temperature T with TrE,
C³2) when T ≤ TrE in step C³1, adjusting the flow rate of the hydrocarbon-based fuel supplied to the reformer to FkE and moving on to step D³,
C³3) when T > TrE in step C³1, calculating a flow rate FkMinCALC of the hydrocarbon-based fuel at which the reformed gas at the flow rate FrMin can be produced in the reformer at the reforming catalyst layer temperature T measured in step C³2 by a reforming method, a type of this reforming method being a type of a reforming method which is performed after the start of the shutdown method, and comparing values of this FkMinCALC and FkE,
C³4) when FkMinCALC < FkE in step C³3, adjusting the flow rate of the hydrocarbon-based fuel supplied to the reformer to FkMinCALC and returning to step C³1, and
C³5) when FkMinCALC ≥ FkE in step C³3, adjusting the flow rate of the hydrocarbon-based fuel supplied to the reformer to FkE and moving on to step D³; and
D³) waiting for the anode temperature to fall below the oxidative degradation temperature.

8. The method according to claim 7, wherein the hydrocarbon-based fuel comprises a hydrocarbon-based fuel having a carbon number of two or more.

9. The method according to claim 8, wherein the concentration of a compound having a carbon number of two or more in the reformed gas is 50 ppb or less on a mass basis.

10. A shutdown method for shutting down an indirect internal reforming solid oxide fuel cell comprising
a reformer having a reforming catalyst layer, for reforming a hydrocarbon-based fuel to produce a reformed gas,
a solid oxide fuel cell for generating electric power using the reformed gas,
a combustion region for combusting an anode off-gas discharged from the solid oxide fuel cell, and
an enclosure for housing the reformer, the solid oxide fuel cell, and the combustion region,
wherein
a flow rate of the hydrocarbon-based fuel supplied to the reformer in a state in which the following conditions i to iv are all satisfied is represented as FkE,
i) an anode temperature of the solid oxide fuel cell is steady,
ii) the anode temperature is less than an oxidative degradation temperature,
iii) in the reformer, the hydrocarbon-based fuel is reformed, and a reformed gas having a composition suitable to be supplied to an anode is produced, and
iv) an amount of the reformed gas produced is equal to or more than a requisite minimum flow rate FrMin for preventing oxidative degradation of the anode when the anode temperature of the solid oxide fuel cell is a temperature that is equal to or more than the oxidative degradation temperature,
a flow rate of the hydrocarbon-based fuel supplied to the reformer at a point of time of start of the shutdown method is represented as Fk0,
a calculated value of a flow rate of the hydrocarbon-based fuel capable of being reformed at a measured temperature of the reforming catalyst layer by a reforming method is represented as FkCALC, a type of this reforming method being a type of a reforming method which is performed after the start of the shutdown method,
when the anode temperature falls below the oxidative degradation temperature, supply of the hydrocarbon-based fuel to the reformer is stopped to complete the shutdown method, and
while the anode temperature does not fall below the oxidative degradation temperature, the shutdown method comprises the following steps:
A⁴) measuring a reforming catalyst layer temperature T, calculating FkCALC using this measured temperature T, and comparing values of this FkCALC and FkE;
B⁴) when FkCALC < FkE in step A⁴, performing the following steps B⁴1 to B⁴4 in order:
B⁴1) increasing a temperature of the reforming catalyst layer,
B⁴2) measuring the reforming catalyst layer temperature T, calculating FkCALC using this measured temperature T, and comparing values of this FkCALC and FkE,
B⁴3) when FkCALC < FkE in step B⁴2, returning to step B⁴1, and
B⁴4) when FKCALC ≥ FkE in step B⁴2, adjusting the flow rate of the hydrocarbon-based fuel supplied to the reformer from Fk0 to FkE and moving on to step D⁴;
C⁴) when FkCALC ≥ FkE in step A⁴, adjusting the flow rate of the hydrocarbon-based fuel supplied to the reformer from Fk0 to FkE and moving on to step D⁴; and
D⁴) waiting for the anode temperature to fall below the oxidative degradation temperature.

11. The method according to claim 10, wherein the hydrocarbon-based fuel comprises a hydrocarbon-based fuel having a carbon number of two or more.

12. The method according to claim 11, wherein the concentration of a compound having a carbon number of two or more in the reformed gas is 50 ppb or less on a mass basis.

13. A shutdown method for shutting down an indirect internal reforming solid oxide fuel cell comprising
a reformer having a reforming catalyst layer, for reforming a hydrocarbon-based fuel to produce a reformed gas,
a solid oxide fuel cell for generating electric power using the reformed gas,
a combustion region for combusting an anode off-gas discharged from the solid oxide fuel cell, and
an enclosure for housing the reformer, the solid oxide fuel cell, and the combustion region,
wherein
a flow rate of the hydrocarbon-based fuel supplied to the reformer in a state in which the following conditions i to iv are all satisfied is represented as FkE, and a temperature condition of the reforming catalyst layer in the state is represented as TrE,
i) an anode temperature of the solid oxide fuel cell is steady,
ii) the anode temperature is less than an oxidative degradation temperature,
iii) in the reformer, the hydrocarbon-based fuel is reformed, and a reformed gas having a composition suitable to be supplied to an anode is produced, and
iv) an amount of the reformed gas produced is equal to or more than a requisite minimum flow rate FrMin for preventing oxidative degradation of the anode when the anode temperature of the solid oxide fuel cell is a temperature that is equal to or more than the oxidative degradation temperature,
a flow rate of the hydrocarbon-based fuel supplied to the reformer at a point of time of start of the shutdown method is represented as Fk0,
when the anode temperature falls below the oxidative degradation temperature, supply of the hydrocarbon-based fuel to the reformer is stopped to complete the shutdown method, and
while the anode temperature does not fall below the oxidative degradation temperature, the shutdown method comprises the following steps:
A⁵) measuring a reforming catalyst layer temperature T and comparing this measured temperature T with TrE;
B⁵) when T < TrE in step A⁵, performing the following steps B⁵1 to B⁵4 in order:
B⁵1) increasing a temperature of the reforming catalyst layer,
B⁵2) measuring the reforming catalyst layer temperature T and comparing this measured temperature T with TrE,
B⁵3) when T < TrE in step B⁵2, returning to step B⁵1, and
B⁵4) when T ≥ TrE in step B⁵2, adjusting the flow rate of the hydrocarbon-based fuel supplied to the reformer from Fk0 to FkE and moving on to step D⁵;
C⁵) when T ≥ TrE in step A⁵, adjusting the flow rate of the hydrocarbon-based fuel supplied to the reformer from Fk0 to FkE and moving on to step D⁵; and
D⁵) waiting for the anode temperature to fall below the oxidative degradation temperature.

14. The method according to claim 13, wherein the hydrocarbon-based fuel comprises a hydrocarbon-based fuel having a carbon number of two or more.

15. The method according to claim 14, wherein the concentration of a compound having a carbon number of two or more in the reformed gas is 50 ppb or less on a mass basis.
